# EUROPEAN PATENT APPLICATION

(11) **EP 4 852 146 A1**
(43) Date of publication of application: **09.12.2026**
(21) Application number: 24923124.2
(22) Date of filing: 15.04.2024
(51) Int. Cl.: H01M 10/617, H01M 10/6556, H01M 10/655, H01M 10/6568

(54) **BATTERY AND ELECTRICAL APPARATUS HAVING SAME**

(30) Priority: 06.02.2024 CN 202410172611
(71) Applicant: Contemporary Amperex Technology Co., Limited, Ningde, Fujian 352100 (CN)
(72) Inventor: WANG, Yehao, Ningde, Fujian 352100 (CN); SONG, Feiting, Ningde, Fujian 352100 (CN)
(74) Representative: Gong, Jinping
(86) International application number: PCT/CN2024/087811
(87) International publication number: WO 2025/166899

(57) **Abstract**

The present application discloses a battery (1000) and an electric apparatus having the same. The battery (1000) includes: a battery assembly (200), where the battery assembly (200) includes a battery unit (201), and the battery unit (201) includes a plurality of battery cells (2011) stacked along a first direction; and a heat exchange member (100) disposed on one side of the battery assembly (200) in a second direction, where the first direction intersects the second direction, the heat exchange member (100) includes a heat exchange tube, the heat exchange tube has a heat exchange flow channel, and the heat exchange flow channel is bent and extends on one side surface of the battery assembly (200) in the second direction; where, with a wall surface of the battery cell (2011) mated with the heat exchange tube as a projection surface, an area of an orthographic projection of the heat exchange tube on the wall surface is greater than or equal to 15% of an area of the wall surface.

## Description

### CROSS-REFERENCE TO RELATED APPLICATIONS

The present application is based on Chinese Patent Application No. 202410172611.8, filed on February 6, 2024, and claims priority to this Chinese patent application. This Chinese Patent Application is incorporated herein by reference in its entirety.

### TECHNICAL FIELD

The present application relates to the technical field of batteries, and in particular, to a battery and an electric apparatus having the same.

### BACKGROUND

A good operating environment is one of the necessary conditions for many components, electronic devices, assemblies, apparatuses, devices, and the like to operate durably, stably, and efficiently. Maintaining such an environment plays an important role in ensuring the good operation of components, electronic devices, assemblies, apparatuses, devices, and the like.

At present, a heat exchange structure is usually provided in a battery to dissipate heat or heat up the battery, enabling the battery to operate at an appropriate temperature in hot or cold weather. However, in the related art, a battery pack contains a large number of battery cells, and the temperature rise rate and temperature uniformity of each battery cell under the heat exchange effect of a heat exchange member still need to be further improved.

### SUMMARY

The present application aims to at least solve one of the technical problems in the prior art. To this end, the present application proposes a battery that can better improve a heat exchange rate and achieve a better heat exchange effect for battery cells, thereby enabling the battery to operate stably and reliably, and allowing the battery to maintain good battery performance.

In a first aspect, an embodiment of the present application provides a battery, including: a battery assembly, where the battery assembly includes a battery unit, and the battery unit includes a plurality of battery cells stacked along a first direction; and a heat exchange member disposed on one side of the battery assembly in a second direction, where the first direction intersects the second direction, the heat exchange member includes a heat exchange tube, the heat exchange tube has a heat exchange flow channel, and the heat exchange flow channel is bent and extends on one side surface of the battery assembly in the second direction; where, with a wall surface of the battery cell mated with the heat exchange tube as a projection surface, an area of an orthographic projection of the heat exchange tube on a wall surface is greater than or equal to 15% of an area of the wall surface.

In the foregoing embodiment, by setting the heat exchange area between the heat exchange tube and the battery cell to be greater than or equal to 15% of an area of the wall surface of the battery cell, a heat exchange rate between the heat exchange tube and the battery cell can be increased, allowing the battery cell to stably obtain a good cooling and heat dissipation effect or heating and temperature rise effect, thereby making the temperature distribution within the battery assembly more uniform, ensuring more stable and reliable operation of the battery, and allowing the battery to maintain good battery performance.

In some embodiments of the present application, a thickness of the battery cell in the first direction is greater than or equal to 40 mm, and the area of the orthographic projection of the heat exchange tube on the wall surface is greater than or equal to 30% of the area of the wall surface.

In the foregoing embodiment, when the thickness of the battery cell is greater than or equal to 40 mm, by setting the ratio of the heat exchange area of the battery cell to the area of the wall surface to be greater than or equal to 30%, the heat exchange contact area between the heat exchange tube and the battery cell can better match the heat exchange requirements of the thickened battery cell, allowing the battery assembly to better maintain an appropriate temperature range, thereby providing better temperature uniformity of the battery assembly and ensuring more stable operation of the battery.

In some embodiments of the present application, a thickness of the battery cell in the first direction is greater than or equal to 30 mm and less than 40 mm, and the area of the orthographic projection of the heat exchange tube on the wall surface is greater than or equal to 15% of the area of the wall surface and less than 30% of the area of the wall surface.

In the foregoing embodiment, when the thickness of the battery cell is greater than or equal to 30 mm and less than 40 mm, by setting a ratio of the heat exchange area of the battery cell to the area of the wall surface to be greater than or equal to 15% and less than 30%, the heat exchange contact area between the heat exchange tube and the battery cell can well match the heat exchange requirements of the thickened battery cell, allowing the battery assembly to well maintain an appropriate temperature range, thereby making the temperature distribution within the battery assembly more uniform and ensuring more stable operation of the battery.

In some embodiments of the present application, a thickness of the battery cell in the first direction is greater than or equal to 50 mm, and the area of the orthographic projection of the heat exchange tube on the wall surface is greater than or equal to 45% of the area of the wall surface.

In the foregoing embodiment, when the thickness of the battery cell is greater than or equal to 50 mm, by setting a ratio of the heat exchange area of the battery cell to the area of the wall surface to be greater than or equal to 45%, the heat exchange contact area between the heat exchange tube and the battery cell can better match the heat exchange requirements of the thickened battery cell, allowing the battery assembly to better maintain an appropriate temperature range, thereby providing better temperature uniformity of the battery assembly and ensuring more stable operation of the battery.

In some embodiments of the present application, a thickness of the battery cell in the first direction is greater than or equal to 40 mm and less than 50 mm, and the area of the orthographic projection of the heat exchange tube on the wall surface is greater than or equal to 30% of the area of the wall surface and less than 45% of the area of the wall surface.

In the foregoing embodiment, when the thickness of the battery cell is greater than or equal to 40 mm and less than 50 mm, by setting a ratio of the heat exchange area of the battery cell to the area of the wall surface to be greater than or equal to 30% and less than 45%, the heat exchange contact area between the heat exchange tube and the battery cell can well match the heat exchange requirements of the thickened battery cell, allowing the battery assembly to well maintain an appropriate temperature range, thereby making the temperature distribution within the battery assembly more uniform and ensuring more stable operation of the battery.

In some embodiments of the present application, a thickness of the battery cell in the first direction is greater than or equal to 60 mm, and the area of the orthographic projection of the heat exchange tube on the wall surface is greater than or equal to 65% of the area of the wall surface.

In the foregoing embodiment, when the thickness of the battery cell is greater than or equal to 60 mm, by setting a ratio of the heat exchange area of the battery cell to the area of the wall surface to be greater than or equal to 65%, the heat exchange contact area between the heat exchange tube and the battery cell can better match the heat exchange requirements of the thickened battery cell, allowing the battery assembly to better maintain an appropriate temperature range, thereby providing better temperature uniformity of the battery assembly and ensuring more stable operation of the battery.

In some embodiments of the present application, a thickness of the battery cell in the first direction is greater than or equal to 50 mm and less than 60 mm, and the area of the orthographic projection of the heat exchange tube on the wall surface is greater than or equal to 45% of the area of the wall surface and less than 65% of the area of the wall surface.

In the foregoing embodiment, when the thickness of the battery cell is greater than or equal to 50 mm and less than 60 mm, by setting a ratio of the heat exchange area of the battery cell to the area of the wall surface to be greater than or equal to 45% and less than 65%, the heat exchange contact area between the heat exchange tube and the battery cell can well match the heat exchange requirements of the thickened battery cell, allowing the battery assembly to well maintain an appropriate temperature range, thereby making the temperature distribution within the battery assembly more uniform and ensuring more stable operation of the battery.

In some embodiments of the present application, a thickness of the battery cell in the first direction is greater than or equal to 80 mm, and the area of the orthographic projection of the heat exchange tube on the wall surface is greater than or equal to 75% of the area of the wall surface.

In the foregoing embodiment, when the thickness of the battery cell is greater than or equal to 80 mm, by setting a ratio of the heat exchange area of the battery cell to the area of the wall surface to be greater than or equal to 75%, the heat exchange contact area between the heat exchange tube and the battery cell can better match the heat exchange requirements of the thickened battery cell, allowing the battery assembly to better maintain an appropriate temperature range, thereby providing better temperature uniformity of the battery assembly and ensuring more stable operation of the battery.

In some embodiments of the present application, a thickness of the battery cell in the first direction is greater than or equal to 60 mm and less than 80 mm, and the area of the orthographic projection of the heat exchange tube on the wall surface is greater than or equal to 65% of the area of the wall surface and less than 75% of the area of the wall surface.

In the foregoing embodiment, when the thickness of the battery cell is greater than or equal to 60 mm and less than 80 mm, by setting a ratio of the heat exchange area of the battery cell to the area of the wall surface to be greater than or equal to 65% and less than 75%, the heat exchange contact area between the heat exchange tube and the battery cell can well match the heat exchange requirements of the thickened battery cell, allowing the battery assembly to well maintain an appropriate temperature range, thereby making the temperature distribution within the battery assembly more uniform and ensuring more stable operation of the battery.

In some embodiments of the present application, a thickness of the battery cell in the first direction is greater than 100 mm, and the area of the orthographic projection of the heat exchange tube on the wall surface is greater than or equal to 90% of the area of the wall surface.

In the foregoing embodiment, when the thickness of the battery cell is greater than 100 mm, by setting a ratio of the heat exchange area of the battery cell to the area of the wall surface to be greater than or equal to 90%, the heat exchange contact area between the heat exchange tube and the battery cell can better match the heat exchange requirements of the thickened battery cell, allowing the battery assembly to better maintain an appropriate temperature range, thereby providing better temperature uniformity of the battery assembly and ensuring more stable operation of the battery.

In some embodiments of the present application, a thickness of the battery cell in the first direction is greater than or equal to 80 mm and less than or equal to 100 mm, and the area of the orthographic projection of the heat exchange tube on the wall surface is greater than or equal to 75% of the area of the wall surface and less than 90% of the area of the wall surface.

In the foregoing embodiment, when the thickness of the battery cell is greater than or equal to 80 mm and less than or equal to 100 mm, by setting a ratio of the heat exchange area of the battery cell to the area of the wall surface to be greater than or equal to 75% and less than 90%, the heat exchange contact area between the heat exchange tube and the battery cell can well match the heat exchange requirements of the thickened battery cell, allowing the battery assembly to well maintain an appropriate temperature range, thereby making the temperature distribution within the battery assembly more uniform and ensuring more stable operation of the battery.

In some embodiments of the present application, the heat exchange flow channel includes a first heat exchange flow channel, the first heat exchange flow channel includes a first heat exchange section and a second heat exchange section, the second heat exchange section is bent to form a U-shaped region, the first heat exchange section is bent and arranged in the U-shaped region, and is connected to the second heat exchange section in a bent manner, battery cells of the battery assembly located at an outermost periphery in a circumferential direction form peripheral battery cells, and at least a portion of the second heat exchange section is in contact with the peripheral battery cells.

In the foregoing embodiment, by providing the first heat exchange flow channel in the heat exchange member, the second heat exchange section of the first heat exchange flow channel being connected to the first heat exchange section, the second heat exchange section being bent to form the U-shaped region with at least a portion being in contact with the peripheral battery cells, and the first heat exchange section being disposed in the U-shaped region, the heat exchange member can have better cooling and heat dissipation effects and heating and temperature rise effects when performing heat exchange operations for the battery assembly, making the temperature distribution within the battery more uniform, thereby ensuring more stable operation of the battery and allowing good battery performance to be maintained.

In an embodiment of the present application, the peripheral battery cells include a first group of battery cells, a second group of battery cells, and a third group of battery cells that are adjacently arranged, where a plurality of battery cells included in the first group of battery cells are stacked along the first direction, a plurality of battery cells included in the second group of battery cells are stacked along a third direction, a plurality of battery cells included in the third group of battery cells are stacked along the third direction, and the first direction, the second direction, and the third direction are arranged at included angles with each other; the second heat exchange section includes a second heat exchange portion, a third heat exchange portion, and a fourth heat exchange portion that are connected; and the second heat exchange portion extends to be in contact with the first group of battery cells for heat exchange, and/or the third heat exchange portion extends to be in contact with the second group of battery cells for heat exchange, and/or the fourth heat exchange portion extends to be in contact with the third group of battery cells for heat exchange.

In the foregoing embodiment, by providing the second heat exchange portion, the third heat exchange portion, and the fourth heat exchange portion in the second heat exchange section to be in contact with the first group of battery cells and/or the second group of battery cells and/or the third group of battery cells in the peripheral battery cells for heat exchange, the heat exchange member can stably and reliably cool or heat the peripheral battery cells, allowing the battery assembly to have a good heat exchange effect, thereby ensuring more stable operation of the battery, and when the heat exchange member performs heat exchange operations for the battery assembly, making the temperature distribution within the battery more uniform.

In some examples of the present application, the peripheral battery cells further include a fourth group of battery cells, a plurality of battery cells included in the fourth group of battery cells are arranged along the first direction, the second heat exchange section further includes a fifth heat exchange portion, the fifth heat exchange portion closes at least a portion of an opening of the U-shaped region formed by the second heat exchange portion, the third heat exchange portion, and the fourth heat exchange portion, and the fifth heat exchange portion extends to be in contact with the fourth group of battery cells for heat exchange.

In the foregoing embodiment, by providing the fifth heat exchange portion in the second heat exchange section to be in contact with the fourth group of battery cells, the second heat exchange section is enabled to perform heat exchange for four peripheral sides of the battery assembly. Thus, heat exchange can be achieved on the four peripheral sides of the battery assembly using only the second heat exchange section of one first heat exchange flow channel, thereby improving a heat exchange effect on the four peripheral sides of the battery assembly and enhancing temperature uniformity of the battery assembly.

In some examples of the present application, the first heat exchange section includes a plurality of first heat exchange portions, the plurality of first heat exchange portions are spaced apart and sequentially bent and connected, at least one battery unit located at two ends along the third direction is the first group of battery cells, and the second heat exchange portion and at least one first heat exchange portion of the first heat exchange section are jointly in contact with the first group of battery cells for heat exchange.

In the foregoing embodiment, by providing a plurality of first heat exchange portions in the first heat exchange section, the plurality of first heat exchange portions being spaced apart and sequentially connected, the structure is simple and arrangement is convenient, enabling the heat exchange member to efficiently perform heat exchange with the battery assembly. By having at least one first heat exchange portion cooperate with the second heat exchange portion to be in contact with the first group of battery cells, the heat exchange member can have sufficient heat exchange area with each battery cell in the first group of battery cells for heat exchange, thereby providing the heat exchange member with a good heat exchange effect.

In an example of the present application, the plurality of first heat exchange portions of the first heat exchange section extend along the third direction and are sequentially connected in the first direction; or the plurality of first heat exchange portions of the first heat exchange section extend along the first direction and are sequentially connected along the third direction.

In the foregoing embodiment, by configuring the plurality of first heat exchange portions of the first heat exchange section to extend along the third direction and be sequentially connected in the first direction, a single first heat exchange portion and a single battery cell can have a large heat exchange area, thereby allowing the heat exchange member to conveniently and reliably meet heat exchange area requirements of the battery assembly when arranged on the battery assembly, and to some extent reducing arrangement difficulty of the first heat exchange section. By configuring the plurality of first heat exchange portions to extend along the first direction and be sequentially connected in the third direction, the plurality of first heat exchange portions can cooperate to perform heat exchange for one battery cell to meet required heat exchange area. Thus, when the first heat exchange section is arranged in a bent manner, the first heat exchange section can have fewer bends, resulting in lower flow resistance in the first heat exchange section, smoother flow of the heat exchange fluid in the first heat exchange section, and reduced pressure drop, thereby allowing the heat exchange member to perform heat exchange operations for the battery assembly more effectively.

In an example of the present application, the plurality of first heat exchange portions of the first heat exchange section extend along the first direction and are sequentially connected along the third direction, a first end of the third heat exchange portion is connected to the second heat exchange portion at an included angle, a second end of the third heat exchange portion is connected to one of the plurality of first heat exchange portions that is farthest from the second heat exchange portion along the third direction, and the second end of the third heat exchange portion is connected to the first heat exchange section at an included angle.

In the foregoing embodiment, by connecting the third heat exchange portion to the second heat exchange portion at an included angle and connecting the third heat exchange portion to the first heat exchange section at an included angle, the second heat exchange section and the first heat exchange section can be conveniently arranged during assembly in the battery. This meets the arrangement requirements of the heat exchange member and the battery assembly, featuring a simple structure and ease of use.

In some specific embodiments of the present application, the first heat exchange flow channel further includes a third heat exchange section, where the third heat exchange section communicates with an end of the first heat exchange section away from the second heat exchange section and is connected to the first heat exchange section at an included angle; the third heat exchange section is disposed on a side of the first heat exchange section facing away from the third heat exchange portion and is connected to one of the plurality of first heat exchange portions that is closest to the second heat exchange portion along the third direction; and the battery assembly further has a fifth group of battery cells, and a plurality of battery cells of the fifth group of battery cells are stacked along the third direction, and the fifth group of battery cells and the third group of battery cells are adjacently arranged; where both the third heat exchange section and the fourth heat exchange portion are in contact with the third group of battery cells for heat exchange; or the third heat exchange section is in contact with the fifth group of battery cells for heat exchange, and the fourth heat exchange portion is in contact with the third group of battery cells for heat exchange; or the third heat exchange section is in contact with the third group of battery cells for heat exchange, and the fourth heat exchange portion is disposed on an outer side of the battery assembly in the first direction.

In the foregoing embodiment, by providing the third heat exchange section connected to the first heat exchange section and in contact with the second group of battery cells, when the heat exchange member performs heat exchange operations for the battery assembly, a flow direction of the heat exchange fluid in the second heat exchange portion can be opposite to a flow direction of the heat exchange fluid close to the second heat exchange portion, a flow direction of the heat exchange fluid in the third heat exchange portion can be opposite to a flow direction of the heat exchange fluid in the first heat exchange section, and a flow direction of the heat exchange fluid in the third heat exchange section can be opposite to the flow direction of the heat exchange fluid in the first heat exchange section. This enables the second heat exchange section, the first heat exchange section, and the third heat exchange section to better cooperate in heat exchange operations, allowing the heat exchange member to perform more balanced and good heat exchange operations for battery cells at different positions in the battery. Consequently, the temperature distribution within the battery becomes more uniform after heat exchange operations, thereby allowing the battery to operate more stably and reliably while maintaining excellent battery performance.

In the foregoing embodiment, by having the third heat exchange section cooperate with the fourth heat exchange portion to be in contact with the third group of battery cells, the heat exchange member can have a sufficient heat exchange area with each battery cell in the third group of battery cells for heat exchange, thereby ensuring a good heat exchange effect for the third group of battery cells. Additionally, the fourth heat exchange portion being in contact with the third group of battery cells and the third heat exchange section being in contact with the fifth group of battery cells allows for the convenient arrangement of the fourth heat exchange portion and the third heat exchange section of the heat exchange member. Furthermore, disposing the fourth heat exchange portion on the outer side of the battery assembly in the first direction facilitates the injection and outflow of the heat exchange fluid in the heat exchange member.

In a specific embodiment of the present application, the first heat exchange flow channel further includes: a first inlet/outlet section, where one end of the first inlet/outlet section is connected to the third heat exchange section at an included angle, and the other end of the first inlet/outlet section forms a first inlet/outlet of the first heat exchange flow channel; and a second inlet/outlet section, where one end of the second inlet/outlet section is connected to the fourth heat exchange portion at an included angle, and the other end of the second inlet/outlet section forms a second inlet/outlet of the first heat exchange flow channel; where one of the first inlet/outlet and the second inlet/outlet is an inlet of the first heat exchange flow channel and the other is an outlet.

In the foregoing embodiment, by providing the first inlet/outlet section and the second inlet/outlet section, an external liquid injection device can conveniently introduce heat exchange fluid into the first heat exchange flow channel for heat exchange, and the heat exchange member can adjust a flow direction of the heat exchange fluid in the first heat exchange flow channel as required. The first inlet/outlet section and the second inlet/outlet section feature a simple structure and ease of use.

In some examples of the present application, the first heat exchange section includes a plurality of first heat exchange portions, where the plurality of first heat exchange portions are spaced apart and sequentially bent and connected, the plurality of first heat exchange portions and the second heat exchange portion both extend along the first direction and are spaced apart along the third direction, and one battery unit is in contact with one second heat exchange portion and at least one first heat exchange portion for heat exchange; or one battery unit is in contact with at least two first heat exchange portions for heat exchange.

In the foregoing embodiment, by providing one battery unit to be in contact with one second heat exchange portion and at least one first heat exchange portion or one battery unit to be in contact with at least two first heat exchange portions, the heat exchange member can conveniently meet requirements for heat exchange area with each battery cell in the battery unit. Additionally, since the first heat exchange portions and the second heat exchange portion both extend along the first direction and are spaced apart along the third direction, the heat exchange member can be conveniently arranged in the battery, and an overall structure of the first heat exchange section and the second heat exchange section of the first heat exchange flow channel is made relatively compact.

In an example of the present application, the first heat exchange flow channel is provided in two, and each first heat exchange flow channel includes: five first heat exchange portions, one second heat exchange portion, one third heat exchange portion, one fourth heat exchange portion, and one third heat exchange section; the battery unit is provided in four, the battery unit located at an end along the third direction is in contact with two first heat exchange portions and one second heat exchange portion for heat exchange, and any remaining battery unit is in contact with three first heat exchange portions for heat exchange; the battery assembly further has a fifth group of battery cells, a plurality of battery cells of the fifth group of battery cells are stacked along the third direction, and the fifth group of battery cells and the third group of battery cells are adjacently arranged; and the third heat exchange portion connects the second heat exchange portion and a first heat exchange portion farthest from the second heat exchange portion and is in contact with the second group of battery cells for heat exchange, the third heat exchange section is connected to one first heat exchange portion closest to the second heat exchange portion and is in contact with the fifth group of battery cells for heat exchange, and the fourth heat exchange portion is in contact with the third group of battery cells for heat exchange.

In the foregoing embodiment, by providing two first heat exchange flow channels to perform heat exchange with the battery assembly, the structure is simple and arrangement is convenient, which can to some extent improve the heat exchange efficiency of the heat exchange member, enabling the heat exchange member to perform heat exchange operations for the battery assembly more effectively. By configuring five first heat exchange portions, one second heat exchange portion, one third heat exchange portion, one fourth heat exchange portion, and one third heat exchange section in the first heat exchange flow channel, the first heat exchange flow channel can have sufficient heat exchange area after cooperating with two battery units to meet the heat exchange requirements and increase the heat exchange rate.

Through the arrangement of the first heat exchange section, the second heat exchange section, and the third heat exchange section in the first heat exchange flow channel, the heat exchange member can be well adapted to heat exchange conditions at different positions of battery cells in the battery when performing heat exchange operations. This allows the battery cells at different positions in the battery assembly to achieve relatively uniform heat exchange effects, thereby making the temperature distribution within the battery more uniform during heat exchange operations, ensuring more stable operation of the battery, and maintaining good battery performance.

In an example of the present application, the first heat exchange flow channel is provided in two, and each first heat exchange flow channel includes: five first heat exchange portions, one second heat exchange portion, one third heat exchange portion, one fourth heat exchange portion, and one third heat exchange section; the battery unit is provided in six, the battery unit located at an end along the third direction is in contact with one first heat exchange portion and one second heat exchange portion for heat exchange, and any remaining battery unit is in contact with two first heat exchange portions for heat exchange; the battery assembly further has a fifth group of battery cells, a plurality of battery cells of the fifth group of battery cells are stacked along the third direction, and the fifth group of battery cells and the third group of battery cells are adjacently arranged; and the third heat exchange portion connects the second heat exchange portion and a first heat exchange portion farthest from the second heat exchange portion and is in contact with the second group of battery cells for heat exchange, the third heat exchange section is connected to the first heat exchange portion closest to the second heat exchange portion and is in contact with the fifth group of battery cells for heat exchange, and the fourth heat exchange portion is in contact with the third group of battery cells for heat exchange.

In the foregoing embodiment, by providing two first heat exchange flow channels to perform heat exchange with the battery assembly, the structure is simple and arrangement is convenient, which can to some extent improve the heat exchange efficiency of the heat exchange member, enabling the heat exchange member to perform heat exchange operations for the battery assembly more effectively. By configuring five first heat exchange portions, one second heat exchange portion, one third heat exchange portion, one fourth heat exchange portion, and one third heat exchange section in the first heat exchange flow channel, the first heat exchange flow channel can have sufficient heat exchange area after cooperating with two battery units to meet the heat exchange requirements and increase the heat exchange rate.

Through the arrangement of the first heat exchange section, the second heat exchange section, and the third heat exchange section in the first heat exchange flow channel, the heat exchange member can be well adapted to heat exchange conditions at different positions of battery cells in the battery when performing heat exchange operations. This allows the battery cells at different positions in the battery assembly to achieve relatively uniform heat exchange effects, thereby making the temperature distribution within the battery more uniform during heat exchange operations, ensuring more stable operation of the battery, and maintaining good battery performance.

In an example of the present application, the first heat exchange flow channel is provided in two, and each first heat exchange flow channel includes: three first heat exchange portions, one second heat exchange portion, one third heat exchange portion, one fourth heat exchange portion, and one third heat exchange section; the battery unit is provided in four, the battery unit located at an end along the third direction is in contact with one first heat exchange portion and one second heat exchange portion for heat exchange, and any remaining battery unit is in contact with two first heat exchange portions for heat exchange; the battery assembly further has a fifth group of battery cells, a plurality of battery cells of the fifth group of battery cells are stacked along the third direction, and the fifth group of battery cells and the third group of battery cells are adjacently arranged; and the third heat exchange portion connects the second heat exchange portion and a first heat exchange portion farthest from the second heat exchange portion and is in contact with the second group of battery cells for heat exchange, the third heat exchange section is connected to the first heat exchange portion closest to the second heat exchange portion and is in contact with the fifth group of battery cells for heat exchange, and the fourth heat exchange portion is in contact with the third group of battery cells for heat exchange.

In the foregoing embodiment, by providing two first heat exchange flow channels to perform heat exchange with the battery assembly, the structure is simple and arrangement is convenient, which can to some extent improve the heat exchange efficiency of the heat exchange member, enabling the heat exchange member to perform heat exchange operations for the battery assembly more effectively. By configuring three first heat exchange portions, one second heat exchange portion, one third heat exchange portion, one fourth heat exchange portion, and one third heat exchange section in the first heat exchange flow channel, the first heat exchange flow channel can have sufficient heat exchange area after cooperating with two battery units to meet the heat exchange requirements and increase the heat exchange rate.

Through the arrangement of the first heat exchange section, the second heat exchange section, and the third heat exchange section in the first heat exchange flow channel, the heat exchange member can be well adapted to heat exchange conditions at different positions of battery cells in the battery when performing heat exchange operations. This allows the battery cells at different positions in the battery assembly to achieve relatively uniform heat exchange effects, thereby making the temperature distribution within the battery more uniform during heat exchange operations, ensuring more stable operation of the battery, and maintaining good battery performance.

In an example of the present application, each battery unit has 30 battery cells.

In the foregoing embodiment, providing 30 battery cells in each battery unit can better meet the operational requirements of the battery.

In some examples of the present application, the first heat exchange section is connected downstream of the second heat exchange section along a fluid flow direction; or the heat exchange tube is configured such that: when heating the battery assembly of the battery, the first heat exchange section is connected downstream of the second heat exchange section along a fluid flow direction; and when cooling the battery assembly of the battery, the first heat exchange section is connected upstream of the second heat exchange section along a fluid flow direction.

In the foregoing embodiment, by determining a downstream-upstream relationship between the first heat exchange section and the second heat exchange section in the fluid flow direction of the heat exchange member based on heat exchange conditions of the heat exchange member, the heat exchange member can adjust the flow direction of fluid according to heating or cooling requirements of the battery assembly. This enables the heat exchange member to more effectively provide a heating and temperature rise effect or a cooling effect for the battery assembly, and enables the heat exchange member to well adapted to heat dissipation conditions and heat exchange requirements at different positions in the battery assembly for heat exchange operations. Consequently, the battery assembly achieves better heat dissipation and heating effects, and the temperature distribution within the battery becomes relatively uniform after heat exchange of the battery assembly, thereby ensuring more stable operation of the battery and allowing the battery to maintain good battery performance.

In some examples of the present application, the heat exchange tube is provided in one or plurality, an inner side of each heat exchange tube defines a heat exchange flow channel, and when the heat exchange tube is provided in plurality, the plurality of heat exchange tubes are spaced apart along the third direction or are wound around each other, and a heat exchange flow channel of at least one heat exchange tube is formed as the first heat exchange flow channel.

In the foregoing embodiment, by providing one heat exchange tube or a plurality of heat exchange tubes, the heat exchange tubes can be reasonably arranged according to the heat exchange requirements of the battery, thereby better meeting heat exchange requirements of different batteries. Additionally, the plurality of first heat exchange flow channels are spaced apart along the first direction, the overall structure of the first heat exchange flow channels can be arranged relatively compactly, thereby facilitating design and arrangement of the heat exchange member. Furthermore, arranging the plurality of first heat exchange flow channels to wind around each other allows better integrity of the plurality of first heat exchange flow channels in the heat exchange member, making the overall structure arrangement of the heat exchange member more flexible and compact, thereby allowing the heat exchange member to better meet the heat exchange area requirements of battery cells at different positions in the battery assembly.

In an example of the present application, the heat exchange tube is provided in plurality, the heat exchange flow channel of at least one heat exchange tube is formed as a second heat exchange flow channel, and a structure of any second heat exchange flow channel is the same as or different from a structure of the first heat exchange flow channel.

In the foregoing embodiment, by providing at least one second heat exchange flow channel, diversity of heat exchange flow channel arrangements can be increased, enabling the heat exchange member to perform heat exchange with the battery assembly more effectively and improving the heat exchange effect of the heat exchange member.

In an example of the present application, the heat exchange tube is provided in plurality, one heat exchange tube defines the first heat exchange flow channel, the heat exchange flow channel of at least one heat exchange tube is formed as a third heat exchange flow channel, the third heat exchange flow channel is bent and arranged in the U-shaped region of the first heat exchange flow channel, the first heat exchange flow channel and the third heat exchange flow channel are bent in the same plane, and bending structures of the first heat exchange flow channel and the third heat exchange flow channel are the same or different.

In the foregoing embodiment, by providing a plurality of heat exchange flow channels, the diversity of heat exchange flow channels can be increased, allowing the arrangement of the heat exchange flow channels to be designed according to the cooling requirements of the battery, thereby further enhancing the heat exchange effect of the heat exchange member and improving the temperature uniformity of the battery.

In some specific embodiments of the present application, the third heat exchange flow channel includes a U-shaped region having the same structure as the first heat exchange flow channel, and at least a portion of the first heat exchange section of the first heat exchange flow channel is disposed in the U-shaped region of the third heat exchange flow channel.

In the foregoing embodiment, by configuring the third heat exchange flow channel to include a U-shaped region having the same structure as the first heat exchange flow channel, and disposing at least a portion of the first heat exchange section of the first heat exchange flow channel in the U-shaped region of the third heat exchange flow channel, at least portions of the first heat exchange flow channel and the third heat exchange flow channel can be wound around each other. This allows the winding arrangement of the heat exchange flow channels to be tailored to the heat exchange requirements of various parts of the battery assembly, further enhancing the heat exchange effect of the heat exchange member and improving the temperature uniformity of the battery.

In some embodiments of the present application, the heat exchange tube is formed by bending a single tube, and optionally, the heat exchange tube is bent arcuately at a bending position.

In the foregoing embodiment, by forming the heat exchange tube by bending a single tube, the number of welds of the heat exchange member can be reduced, thereby reducing the risk of leakage of the heat exchange member and improving the operational reliability of the heat exchange member. Meanwhile, compared with the manufacturing process of a plate-like structure, the process of bending a single tube is simpler and requires less material, which can significantly reduce costs of the heat exchange member. By forming an arcuate bend in the heat exchange tube at the bending position, the flow resistance of the fluid can be reduced and the pressure drop can be reduced, thereby further increasing the flow rate of the heat exchange fluid in the heat exchange flow channel and improving heat exchange efficiency of the heat exchange member.

In some embodiments of the present application, the heat exchange tube is an aluminum tube.

In the foregoing embodiment, by using an aluminum tube as the heat exchange tube, the heat exchange member benefits from advantages of the aluminum tube such as light weight, low price, good structural strength, and excellent thermal conductivity. This not only reduces the production and processing costs of the heat exchange member and better meets lightweight requirements of the battery, but also ensures high heat exchange efficiency when the heat exchange tube performs heat exchange with battery cells, thereby achieving better heat exchange effects for the battery cells.

In some embodiments of the present application, a wall thickness of the heat exchange tube is 0.2 mm-3 mm; optionally, the wall thickness of the heat exchange tube is 0.5 mm-1.2 mm.

In the foregoing embodiment, by setting the wall thickness of the heat exchange tube to 0.2 mm-3 mm, the heat exchange tube has an appropriate wall thickness. This prevents the wall thickness of the heat exchange tube from being excessively small, thereby ensuring the operational strength of the heat exchange tube and effectively reducing the risk of damage to the heat exchange tube. Additionally, it avoids the wall thickness of the heat exchange tube from being excessively large, which helps to reduce the overall weight of the heat exchange tube and in turn reduce the overall weight of the battery to achieve lightweight of the battery. Furthermore, by setting the wall thickness of the heat exchange tube to 0.5 mm-1.2 mm, the strength of the heat exchange tube can be ensured while reducing the overall weight of the heat exchange tube, thereby achieving the lightweight of the battery.

In some embodiments of the present application, a width of the heat exchange flow channel is 3 mm-200 mm; optionally, the width of the heat exchange flow channel is 5 mm-80 mm; further optionally, a height of the heat exchange flow channel in the second direction is 1 mm-20 mm; still further optionally, the height of the heat exchange flow channel in the second direction is 4 mm-6 mm.

In the foregoing embodiment, by setting the width of the heat exchange flow channel to 3 mm-200 mm, the width of the heat exchange flow channel can be prevented from excessively large, which facilitates the layout of the heat exchange flow channel and can meet required heat exchange effects of the heat exchange member. Additionally, it avoids the width of the heat exchange flow channel from being excessively small, which can reduce the number of arrangements of the first heat exchange section and in turn reduce the overall costs of the heat exchange member. Furthermore, by further limiting the width of the heat exchange flow channel to 5 mm-80 mm, the width of the heat exchange flow channel can better meet arrangement requirements of the heat exchange flow channel in the battery and required heat exchange effects of the heat exchange member. Meanwhile, by setting the height of the heat exchange flow channel in the second direction to be 1 mm-20 mm, the height of the heat exchange member can be prevented from being excessively small, thereby ensuring the flow rate of the heat exchange fluid in the heat exchange member and ensuring heat exchange effects of the heat exchange member. Finally, by setting the height of the heat exchange flow channel in the second direction to 4 mm-6 mm, the heat exchange effects of the heat exchange member can be further ensured, the occupied space of the heat exchange member can be reduced, and miniaturization of the battery can be achieved.

In some embodiments of the present application, the heat exchange fluid in the heat exchange flow channel is a mixture of water and ethylene glycol; further optionally, the heat exchange fluid is a mixture of 50% water and 50% ethylene glycol; and/or a thermal conductivity of the heat exchange fluid in the heat exchange flow channel is greater than or equal to 0.3 W/(m·K); further optionally, the thermal conductivity of the heat exchange fluid in the heat exchange flow channel is 0.328 W/(m·K)-0.417 W/(m·K).

In the foregoing embodiment, the heat exchange fluid in the heat exchange flow channel is configured as a mixture of water and ethylene glycol. This ethylene glycol aqueous solution offers excellent stability and good thermal conductivity, enabling efficient heat exchange operations. By setting the thermal conductivity to be greater than or equal to 0.3 W/(m·K), the heat exchange fluid can achieve good heat exchange efficiency and heat exchange effects, thereby enabling the battery to achieve good heat exchange. Furthermore, by limiting the thermal conductivity to 0.328 W/(m·K)-0.417 W/(m·K), the heat exchange fluid can achieve better heat exchange efficiency and heat exchange effects, thereby allowing the battery to achieve better heat exchange.

In some embodiments of the present application, the housing of the battery cell is an aluminum housing.

In the foregoing embodiment, by using an aluminum housing as the housing of the battery cell, the housing is light in weight, which can to some extent increase energy density of the battery cell; the aluminum housing is convenient to process and form, resulting in high processing and manufacturing efficiency of the battery cell; and the aluminum housing has good thermal conductivity, which can ensure high heat exchange efficiency when the battery cell performs heat exchange, thereby achieving better heat exchange effects for the battery cell.

In some embodiments of the present application, the housing of the battery cell is a 3-series aluminum alloy part or a 5-series aluminum alloy part.

In the foregoing embodiment, by using a 3-series aluminum alloy part or a 5-series aluminum alloy part as the housing of the battery cell, the housing exhibits excellent processing and forming properties, corrosion resistance, thermal conductivity, and good structural strength. This enables efficient heat transfer and ensures high heat exchange efficiency for the battery cell during heat exchange, thereby fully meeting the operational requirements and protection needs of the battery cell.

In some embodiments of the present application, a length of the battery cell is 154 mm-234 mm; and/or a width of the battery cell is 63 mm-103 mm; and/or a wall thickness of the housing of the battery cell is 0.4 mm-1 mm.

In the foregoing embodiment, by setting the length of the battery cell to 154 mm-234 mm and the width of the battery cell to 63 mm-103 mm, the battery cell can be configured with corresponding width dimensions according to different operational needs to meet the operational requirements of the battery. By setting the wall thickness of the housing of the battery cell to 0.4 mm-1 mm, the housing can have sufficient strength to effectively protect the battery cell, ensuring stable and reliable operation of the battery cell. Additionally, the small wall thickness of the housing facilitates heat transfer between inside and outside of the battery cell, allowing the battery cell to achieve better heat exchange effects.

In some embodiments of the present application, the battery further includes a box, where the box includes a box body, the box body is an integrally stamped part and includes a bottom wall and a surrounding wall, and the battery assembly is disposed in the box body.

In the foregoing embodiment, by configuring the box body as an integrally stamped part, the process steps of the box can be reduced and the production costs of the box can be lowered. Meanwhile, the overall weight of the box can be reduced while ensuring rigidity of the box, thereby reducing the overall weight of the battery and lowering the load of the vehicle.

In an embodiment of the present application, a thermal management system of the battery includes a temperature regulation member, where the temperature regulation member includes at least one of a first temperature regulation member and a second temperature regulation member, the first temperature regulation member is disposed outside the box body and is in contact with an outer wall of the box body; the second temperature regulation member is disposed in the box and located between any side of an outer peripheral surface of the battery cell and the box; and at least one of the first temperature regulation member and the second temperature regulation member forms the heat exchange member.

In the foregoing embodiment, by disposing the first temperature regulation member outside the box body, the space occupied by the first temperature regulation member in the box body can be reduced, ensuring more convenient arrangement of the battery assembly in the box body. Additionally, it can minimize adverse effects of the first temperature regulation member on the operating environment of the battery assembly in the box body, ensuring more stable and reliable operation of the battery assembly, thereby enabling the battery to operate more stably and reliably to some extent.

Disposing the second temperature regulation member between the box and the battery assembly enables more direct and efficient heat transfer when the second temperature regulation member performs heat exchange with the battery assembly. This allows the second temperature regulation member to perform heat exchange with the battery assembly more effectively, thereby enabling the second temperature regulation member to perform temperature regulation operations more effectively and in turn ensuring more stable operation of the battery.

By forming at least one of the first temperature regulation member and the second temperature regulation member as the heat exchange member, the thermal management system of the battery can perform thermal management on the battery more effectively. This allows the battery assembly to operate in a favorable temperature environment during operation of the battery, thereby ensuring more stable operation of the battery and better battery performance.

In some examples of the present application, the thermal management system of the battery further includes a third temperature regulation member, where the third temperature regulation member is disposed in the box and located between two adjacent battery cells, and a structure of the third temperature regulation member is the same as or different from a structure of the heat exchange member.

In the foregoing embodiment, by disposing the third temperature regulation member between adjacent battery cells, the battery cells in the battery assembly can achieve better heat exchange effects, thereby enabling the thermal management system of the battery to better regulate temperature in the battery, and ensuring more stable operation of the battery.

In a second aspect, an embodiment of the present application provides an electric apparatus. By configuring the battery according to the first aspect and setting the heat exchange area between the heat exchange tube and the battery cell to be greater than or equal to 15% of the area of the wall surface of the battery cell, the heat exchange rate between the heat exchange tube and the battery cell can be increased. This enables the battery cell to stably achieve good cooling and heat dissipation effects or heating and temperature rise effects, thereby making the temperature distribution within a battery assembly more uniform, ensuring more stable and reliable operation of the battery, and allowing the battery to maintain good battery performance.

Additional aspects and advantages of the present application will be partially given in the following description, some of which will become apparent from the following description or be learned from practice of the present application.

### BRIEF DESCRIPTION OF THE DRAWINGS

FIG. 1 is a schematic diagram of a vehicle according to an embodiment of the present application;
FIG. 2 is an exploded view of a battery according to an embodiment of the present application;
FIG. 3 is an exploded view of a battery according to another embodiment of the present application;
FIG. 4 is a schematic diagram of a battery assembly and a heat exchange member according to a first embodiment of the present application;
FIG. 5 is a schematic diagram of a battery assembly and a heat exchange member according to a second embodiment of the present application;
FIG. 6 is a schematic diagram of temperature distribution obtained by heat exchange simulation of a battery assembly with a heat exchange area of 15% according to an embodiment of the present application;
FIG. 7 is a schematic diagram of temperature distribution obtained by heat exchange simulation of a battery assembly with a heat exchange area of 30% according to an embodiment of the present application;
FIG. 8 is a schematic diagram of a battery assembly and a heat exchange member according to a third embodiment of the present application;
FIG. 9 is a schematic diagram of a battery assembly and a heat exchange member according to a fourth embodiment of the present application;
FIG. 10 is a schematic diagram of a battery assembly and a heat exchange member according to a fifth embodiment of the present application;
FIG. 11 is a schematic diagram of a battery assembly and a heat exchange member according to a sixth embodiment of the present application;
FIG. 12 is a schematic diagram of a heat exchange member and a box of a battery according to some embodiments of the present application;
FIG. 13 is a schematic diagram of a heat exchange member and a box according to some other embodiments of the present application;
FIG. 14 is a schematic diagram of a heat exchange member from one perspective according to an embodiment of the present application;
FIG. 15 is a cross-sectional view of a battery cell according to an embodiment of the present application;
FIG. 16 is a schematic diagram of a current collector according to an embodiment of the present application;
FIG. 17 is a schematic diagram of a current collector from another perspective according to an embodiment of the present application;
FIG. 18 is a schematic diagram of a heat exchange member according to another embodiment of the present application;
FIG. 19 is an enlarged view of position A circled in FIG. 18;
FIG. 20 is a schematic diagram of the heat exchange member shown in FIG. 18 from another perspective;
FIG. 21 is an enlarged view of position B circled in FIG. 20;
FIG. 22 is a schematic diagram of a battery assembly and a heat exchange member according to a seventh embodiment of the present application;
FIG. 23 is a schematic diagram of a battery assembly and a heat exchange member according to an eighth embodiment of the present application;
FIG. 24 is a schematic diagram of a battery assembly and a heat exchange member according to a ninth embodiment of the present application;
FIG. 25 is a schematic diagram of a battery assembly and a heat exchange member according to a tenth embodiment of the present application;
FIG. 26 is a schematic diagram of a battery assembly and a heat exchange member according to an eleventh embodiment of the present application;
FIG. 27 is an exploded view of a battery according to still another embodiment of the present application;
FIG. 28 is a partial schematic diagram of a battery according to yet another embodiment of the present application;
FIG. 29 is a partial cross-sectional view of a battery according to another embodiment of the present application;
FIG. 30 is a partial schematic diagram of the battery shown in FIG. 27; and
FIG. 31 is an enlarged view of position C circled in FIG. 30.

Reference signs:
1. Vehicle;
1000. Battery;
100. Heat exchange member;
10. First heat exchange flow channel; 11. First heat exchange section; 111. First heat exchange portion; 112. First bending portion; 12. Second heat exchange section; 120. U-shaped region; 121. Second heat exchange portion; 122. Third heat exchange portion; 123. Second bending portion; 124. Third bending portion; 125. Fourth heat exchange portion; 126. Sixth bending portion; 127. Fifth heat exchange portion; 13. Third heat exchange section; 14. Fourth bending portion; 15. First inlet/outlet section; 16. Fifth bending portion; 17. Second inlet/outlet section; 18. Seventh bending portion; 19. Mounting member;
20. Current collector; 21. Tube body; 211. First space; 212. Second space; 22. First flow channel interface; 23. Second flow channel interface; 24. Partition structure; 241. First partition plate; 242. Second partition plate;
30. Second heat exchange flow channel; 31. Fourth heat exchange section; 40. Third heat exchange flow channel;
200. Battery assembly; 201. Battery unit; 2011. Battery cell; 202. First group of battery cells; 203. Second group of battery cells; 204. Third group of battery cells; 205. Fourth group of battery cells; 206. Fifth group of battery cells;
300. Box; 301. Box body; 302. Bottom guard plate; 303. Cover plate;
400. Foam member; 401. Main body; 402. Rib;
500. Temperature regulation member; 501. First temperature regulation member; 502. Second temperature regulation member; 503. Third temperature regulation member;
2000. Controller; and 3000. Motor.

### DETAILED DESCRIPTION OF EMBODIMENTS

Embodiments of the technical solutions of the present application are described in detail below with reference to the accompanying drawings. The following embodiments are only used to more clearly illustrate the technical solutions of the present application, and therefore are only examples and cannot be used to limit the protection scope of the present application.

Unless otherwise defined, all technical and scientific terms used herein have the same meanings as commonly understood by those skilled in the technical field of the present application; the terms used herein are only for the purpose of describing specific embodiments and are not intended to limit the present application; and the terms "including" and "having" in the specification and claims of the present application and the above description of the accompanying drawings, as well as any variations thereof, are intended to cover non-exclusive inclusion.

In the description of the embodiments of the present application, the technical terms "first", "second", and the like are only used to distinguish different objects and cannot be understood as indicating or implying relative importance or implicitly indicating the number, specific order, or primary-secondary relationship of indicated technical features. In the description of the embodiments of the present application, "plurality" means two or more, unless otherwise explicitly and specifically defined.

Reference herein to "embodiment" means that a particular feature, structure, or characteristic described in connection with the embodiment may be included in at least one embodiment of the present application. The appearance of the phrase in various places in the specification does not necessarily refer to the same embodiment, nor is it an independent or alternative embodiment that is mutually exclusive with other embodiments. Those skilled in the art explicitly and implicitly understand that the embodiments described herein may be combined with other embodiments.

In the description of the embodiments of the present application, the term "and/or" is merely a description of an association relationship of associated objects, indicating that three relationships may exist, for example, A and/or B, which may indicate: A alone, both A and B, and B alone. In addition, the character "/" herein generally indicates that the associated objects are in an "or" relationship.

In the description of the embodiments of the present application, the term "plurality" refers to two or more (including two).

In the description of the embodiments of the present application, the technical terms "length", "width", "thickness", "horizontal", "top", "bottom", "inner", "outer", and the like indicate orientations or positional relationships based on the orientations or positional relationships shown in the accompanying drawings, which are only for the convenience of describing the embodiments of the present application and simplifying the description, rather than indicating or implying that the referred device or element must have a specific orientation, be constructed and operated in a specific orientation, and therefore cannot be understood as limiting the embodiments of the present application.

In the description of the embodiments of the present application, unless otherwise explicitly specified and defined, the technical terms "mounting", "attachment", "connection", "fixing", and the like should be understood in a broad sense, for example, it may be a fixed connection, a detachable connection, or an integral connection; it may be a mechanical connection or an electrical connection; it may be a direct connection or an indirect connection through an intermediate medium, it may be internal communication of two elements or an interaction relationship of two elements. For those of ordinary skill in the art, the specific meanings of the above terms in the embodiments of the present application can be understood according to specific situations.

At present, from the development of market conditions, power batteries are increasingly widely used. Power batteries are not only used in energy storage power systems such as hydraulic, thermal, wind, and solar power stations, but also widely used in electric transportation tools such as electric bicycles, electric motorcycles, and electric vehicles, as well as in multiple fields such as military equipment and aerospace. With the continuous expansion of the application fields of power batteries, their market demands are also constantly increasing. Among the power batteries currently used, lithium-ion batteries account for an increasing proportion.

It can be understood that a temperature environment in a battery is affected by an external environment, and battery cells in the battery need to operate within a specific temperature range during operation. When the temperature in the battery exceeds or falls below this range, both stability and performance of the battery are significantly affected. For example, in hot weather, the battery needs to cool and dissipate heat from the battery cells to keep the temperature in the battery within a required temperature range, and in cold weather, the battery needs to heat and raise the temperature of the battery cells to keep the temperature in the battery within a required temperature range.

In the related art, a cold tube structure is usually arranged in a battery to dissipate heat and cool or heat and raise the temperature of battery cells, but there is a situation of poor heat exchange rate. Specifically, when the cold tube structure dissipates heat and cools battery cells, a cooling rate is slow, and when the cold tube structure heats and raises the temperature of battery cells, a temperature rise rate is slow, making heat dissipation effects or temperature rise effects of the battery cells need to be further improved, leading to unstable operation of the battery and degradation of the performance of the battery. The battery performance herein refers to performance indicators such as capacity, charge-discharge rate, and voltage of the battery.

When the cold tube structure cools and dissipates heat from battery cells, the cold tube structure cannot timely dissipate heat from the battery cells, resulting in failure to effectively and promptly reduce the temperature of the battery cells. When the cold tube structure heats and raises the temperature of battery cells, the temperature of the battery cells is not easy to rise to a temperature range for normal operation, thereby making heating and temperature rise effects of the cold tube structure on the battery cells need to be further improved.

Based on the above considerations, to increase temperature rise rates or cooling rates of battery cells when the cold tube structure heats or cools battery cells in the battery, thereby enabling the battery to have good temperature rise effects or heat dissipation effects, ensuring more stable operation of the battery, and maintaining good performance during operation of the battery, the present application proposes a battery. A heat exchange member is provided in the battery, and the heat exchange member includes a heat exchange tube. The heat exchange tube is in contact with one side surface of the battery cell for heat exchange, and the heat exchange contact area between the heat exchange tube and the battery cell is defined. This ensures that the heat exchange tube and the battery cell have a sufficient heat exchange area, so that the heat exchange member can achieve a high temperature rise rate or cooling rate when performing heat exchange on battery cells. Consequently, the battery cells can maintain good temperature rise effects or heat dissipation effects, thereby ensuring more stable operation of the battery and allowing the battery to maintain good battery performance.

The battery disclosed in the embodiments of the present application can be used in electric apparatuses using batteries as power sources or various energy storage systems using batteries as energy storage elements. The electric apparatuses may be, but are not limited to, mobile phones, tablets, laptops, electric toys, electric tools, battery vehicles, electric vehicles, ships, and spacecraft. The electric toys may include fixed or mobile electric toys, such as game consoles, electric car toys, electric ship toys, and electric airplane toys, and the spacecraft may include airplanes, rockets, space shuttles, spaceships, and the like.

In the embodiments of the present application, a battery cell may be a secondary battery, which refers to a battery cell that can continue to be used by activating active materials through charging after discharge. The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-chromium battery, a lead-acid battery, and the like.

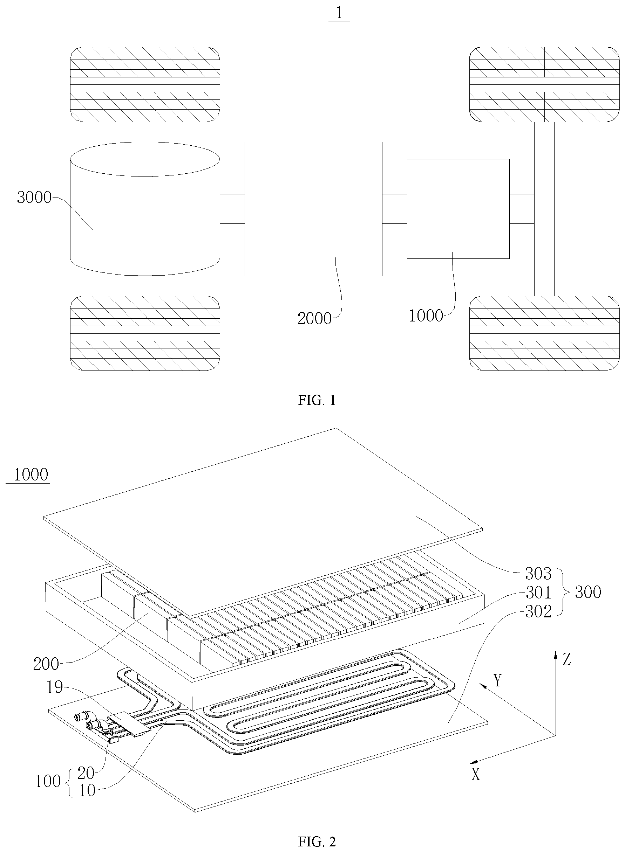

Referring to FIG. 1, FIG. 1 is a schematic diagram of a vehicle 1 according to some embodiments of the present application. The vehicle 1 may be a fuel vehicle, a gas vehicle, or a new energy vehicle, and the new energy vehicle may be a battery electric vehicle, a hybrid electric vehicle, or an extended-range vehicle. A battery 1000 is provided inside the vehicle 1, and the battery 1000 may be provided at a bottom, head, or tail of the vehicle 1. The battery 1000 may be used for power supply of the vehicle 1, for example, the battery 1000 may serve as an operating power source of the vehicle 1. The vehicle 1 may further include a controller 2000 and a motor 3000, and the controller 2000 is configured to control the battery 1000 to supply power to the motor 3000, for example, for operating power demands during starting, navigation, and driving of the vehicle 1.

In some embodiments of the present application, the battery 1000 can not only serve as an operating power source of the vehicle 1, but also serve as a driving power source of the vehicle 1, replacing or partially replacing fuel or natural gas to provide driving power for the vehicle 1.

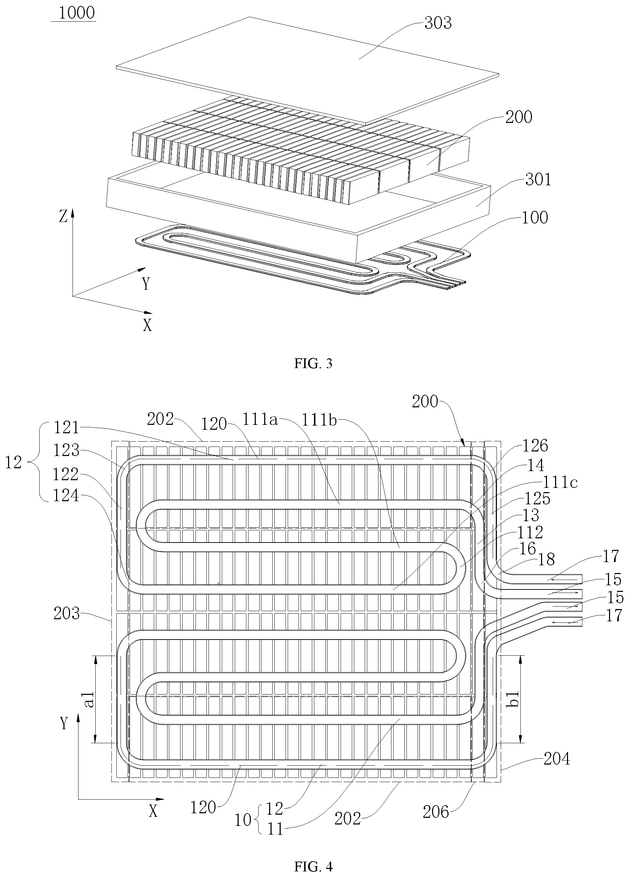

Referring to FIG. 2 and FIG. 3, FIG. 2 is an exploded view of a battery 1000 according to an embodiment of the present application, and FIG. 3 is an exploded view of a battery 1000 according to another embodiment of the present application. The battery 1000 includes a box 300, battery cells 2011, and a heat exchange member 100. The box has an accommodating cavity, the battery cells 2011 are accommodated in the accommodating cavity of the box 300, and the heat exchange member 100 may be disposed between the battery cells 2011 and the box 300 or between adjacent battery cells 2011.

The box is configured to provide an accommodating space for the battery cells 2011, and the box 300 may adopt various structures. In some embodiments, the box 300 may include a first part (for example, a box body 301 below) and a second part (for example, a cover plate 303 below), where the first part and the second part cover each other, and the first part and the second part jointly define the accommodating space for accommodating the battery cells 2011. The second part may be a hollow structure with one end open, the first part may be a plate-like structure, and the first part covers an open side of the second part, so that the first part and the second part jointly define the accommodating space; or the first part and the second part may alternatively be hollow structures with one side open, and an open side of the first part covers an open side of the second part. Certainly, the box formed by the first part and the second part may have various shapes, such as a cylinder or a cuboid. Optionally, in some embodiments, the box 300 further includes a bottom guard plate 302, where the bottom guard plate 302 is disposed on a lower side of a bottom plate of the box 300 to further enhance bearing strength and impact resistance of a bottom of the box 300. Materials of the bottom plate may also be various, including but not limited to, copper, iron, aluminum, stainless steel, and aluminum alloy.

In the battery 1000, there may be a plurality of battery cells 2011, and the plurality of battery cells 2011 may be connected in series, parallel, or series-parallel, where series-parallel refers to a combination of series and parallel connections among the plurality of battery cells 2011. The plurality of battery cells 2011 may be directly connected in series, parallel, or series-parallel, and then an entirety formed by the plurality of battery cells 2011 is accommodated in the box 300. Certainly, the battery 1000 may alternatively be a form in which a plurality of battery cells 2011 are first connected in series, parallel, or series-parallel to form battery 1000 modules, and then a plurality of battery 1000 modules are connected in series, parallel, or series-parallel to form an entirety and accommodated in the box 300. The battery 1000 may further include other structures, for example, the battery 1000 may further include a bus component for achieving electrical connection among the plurality of battery cells 2011.

Each battery cell 2011 may be a secondary battery 1000 or a primary battery 1000; it may also be a lithium-sulfur battery 1000, a sodium-ion battery 1000, or a magnesium-ion battery 1000, but is not limited thereto. The battery cell 2011 may be cylindrical, flat, cuboid, or other shapes.

In the battery 1000, the heat exchange member 100 may be disposed between the plurality of battery cells 2011 and a top wall of the box 300, or may be disposed between the plurality of battery cells 2011 and a bottom wall of the box 300, or may be disposed between the bottom wall of the box 300 and the bottom guard plate 302, or may be disposed between two adjacent battery cells 2011 to provide heat exchange for the plurality of battery cells 2011. In some embodiments, the heat exchange member 100 may include a heat exchange tube and a current collector 20, where the heat exchange tube is connected to the current collector 20, the heat exchange tube may be a flat tube, a round tube, a harmonica tube, or a tube of other shapes, and the current collector 20 may be a rectangular tube or a round tube.

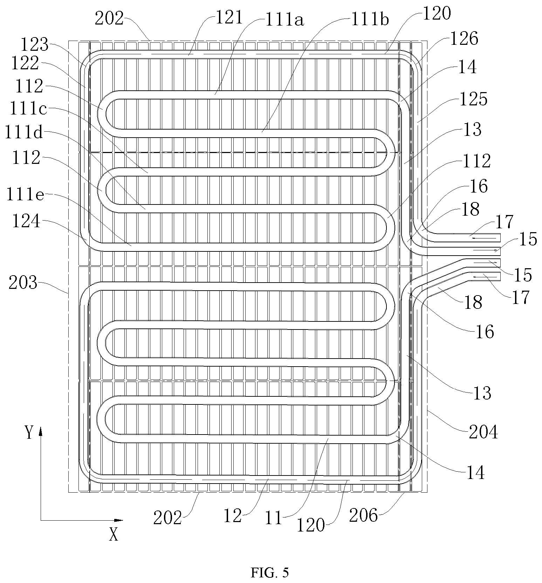

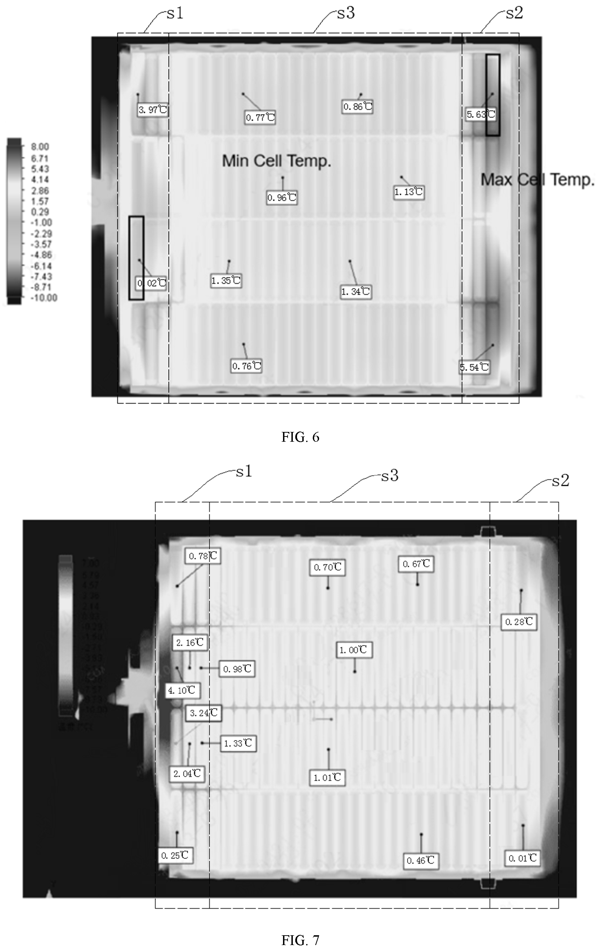

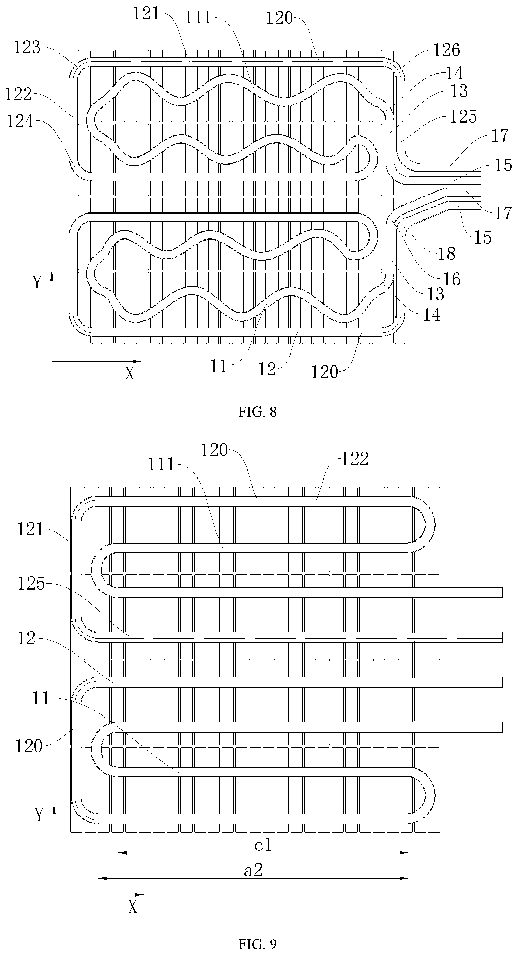

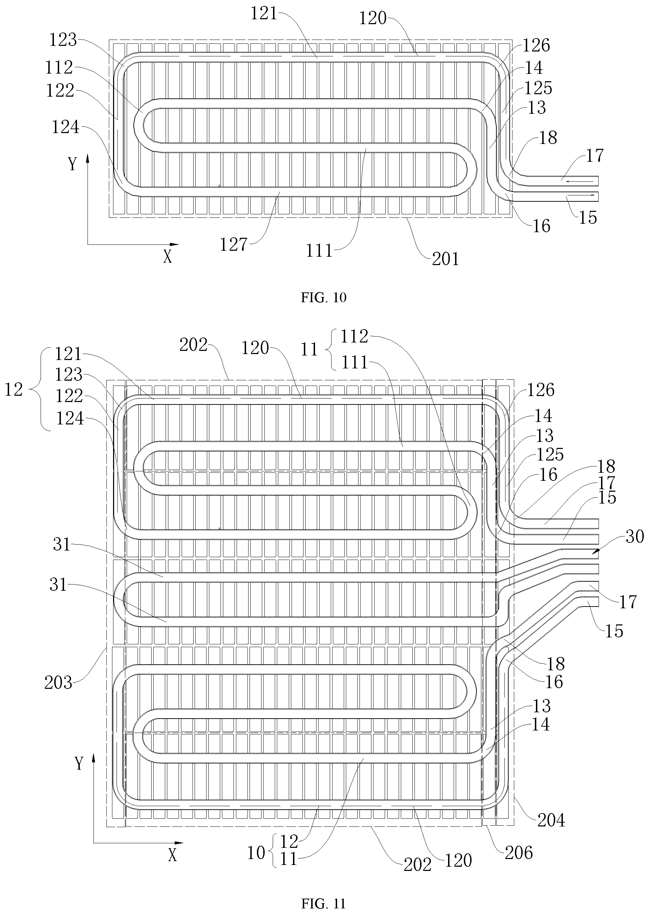

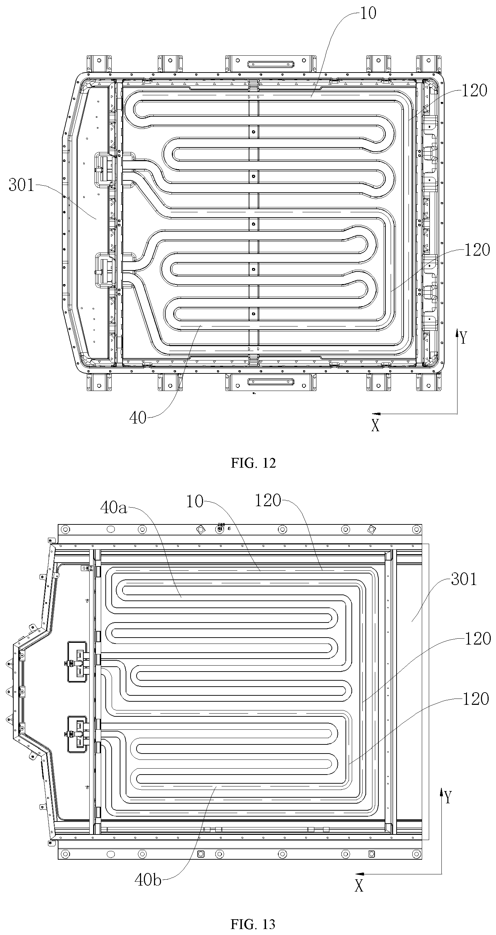

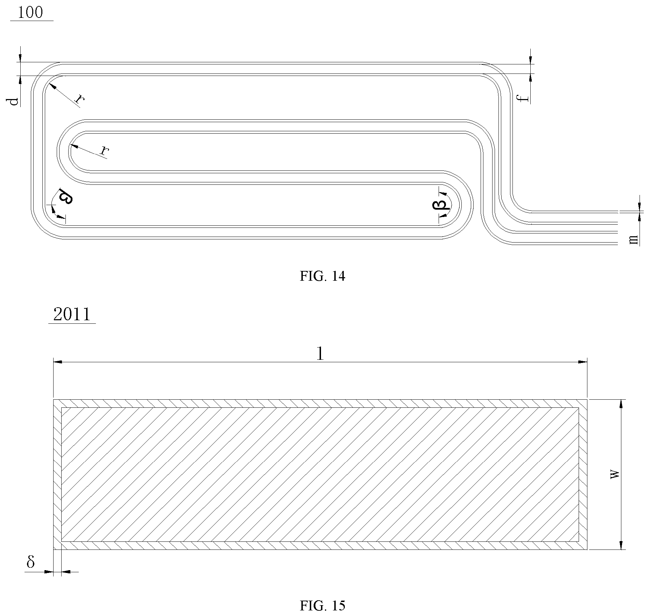

A battery 1000 according to a first aspect embodiment of the present application is described below with reference to FIG. 4 and FIG. 15. FIG. 4 is a schematic diagram of a battery assembly 200 and a heat exchange member 100 according to a first embodiment of the present application; FIG. 5 is a schematic diagram of a battery assembly 200 and a heat exchange member 100 according to a second embodiment of the present application; FIG. 6 is a schematic diagram of temperature distribution obtained by heat exchange simulation of a battery assembly 200 with a heat exchange area of 15% according to an embodiment of the present application; FIG. 7 is a schematic diagram of temperature distribution obtained by heat exchange simulation of a battery assembly 200 with a heat exchange area of 30% according to an embodiment of the present application; FIG. 8 is a schematic diagram of a battery assembly 200 and a heat exchange member 100 according to a third embodiment of the present application; FIG. 9 is a schematic diagram of a battery assembly 200 and a heat exchange member 100 according to a fourth embodiment of the present application; FIG. 10 is a schematic diagram of a battery assembly 200 and a heat exchange member 100 according to a fifth embodiment of the present application; FIG. 11 is a schematic diagram of a battery assembly 200 and a heat exchange member 100 according to a sixth embodiment of the present application; FIG. 12 is a schematic diagram of a heat exchange member 100 and a box 300 of a battery 1000 according to some embodiments of the present application; FIG. 13 is a schematic diagram of a heat exchange member 100 and a box 300 according to some other embodiments of the present application; FIG. 14 is a schematic diagram of a heat exchange member 100 from one perspective according to an embodiment of the present application; and FIG. 15 is a cross-sectional view of a battery cell 2011 according to an embodiment of the present application.

According to the first aspect embodiment of the present application, the battery 1000 includes a battery assembly 200 and a heat exchange member 100, where the battery assembly 200 includes battery units 201, and the battery unit 201 includes a plurality of battery cells 2011 stacked along a first direction (direction X shown in FIG. 4); the heat exchange member 100 is disposed on one side of the battery assembly 200 in a second direction (direction Z shown in FIG. 3), where the first direction intersects the second direction, the heat exchange member 100 includes a heat exchange tube, the heat exchange tube has a heat exchange flow channel, and the heat exchange flow channel is bent and extends on one side surface of the battery assembly 200 in the second direction; where, with a wall surface of the battery cell 2011 mated with the heat exchange tube as a projection surface, an area of an orthographic projection of the heat exchange tube on a wall surface is greater than or equal to 15% of an area of the wall surface.

The battery unit 201 is provided in the battery assembly 200, and the battery unit 201 may be provided in one or plurality. When the battery unit 201 is provided in plurality, the battery unit 201 may be provided in two, three, four, five, or the like. The battery unit 201 includes a plurality of battery cells 2011 stacked along the first direction, where the battery cells 2011 may be cylindrical batteries 1000, prismatic batteries 1000, pouch batteries 1000, or the like, and the battery cells 2011 may be provided in two, three, four, five, six, or the like. The number of battery cells 2011 may be the same or different among the various battery units 201, and the number of battery cells 2011 in the battery unit 201 may be set according to the operational and design requirements of the battery 1000.

"The first direction intersects the second direction" is intended to mean that the first direction and the second direction may be mike arranged perpendicularly, or may only intersect without being perpendicular, that is, arranged to intersect at an acute angle or an obtuse angle. For example, the first direction and the second direction may be arranged at an included angle of 30°, 60°, 80°, 120°, 150°, or 170°.

The heat exchange member 100 includes a heat exchange tube having a heat exchange flow channel, the heat exchange tube defines the heat exchange flow channel, the heat exchange fluid in the heat exchange flow channel performs heat exchange with the battery assembly 200 through the heat exchange tube, a cross section of the heat exchange tube may be circular, elliptical, square, rectangular, or the like, and a cross-sectional shape of the heat exchange tube may be reasonably set as required.

The heat exchange flow channel extends on one side surface of the battery assembly 200 in the second direction, that is, the heat exchange flow channel extends on one side surface of the plurality of battery cells 2011 in the second direction, and the heat exchange member 100 may cooperate with one side surface of the battery cells 2011 in the second direction for heat exchange. The heat exchange flow channel is bent and extends on one side surface of the battery assembly 200 in the second direction, and the heat exchange flow channel may be bent to change an extension direction.

For example, the heat exchange flow channel may be bent to change the extension direction to a direction perpendicular to the first direction when extending along the first direction, and the heat exchange flow channel may also undergo multiple bends to form a plurality of flow channel sections extending the same distance in the first direction, and the plurality of flow channel sections are spaced apart in a direction perpendicular to the first direction, and a specific bending form of the heat exchange flow channel may be reasonably arranged according to the heat exchange requirements.

When the heat exchange member 100 cools and dissipates heat from or heats and raises the temperature of a plurality of battery cells 2011 of the battery assembly 200, the heat exchange fluid for cooling or heating may flow along the heat exchange flow channel, the heat exchange fluid cools or heats the battery cells 2011 from one side surface of the battery cells 2011 abutting against the heat exchange tube. Specifically, when the heat exchange member 100 cools the battery cells 2011, heat in the battery cells 2011 may be transferred to housings of the battery cells 2011, the heat is then transferred along the housings to one side surface of the battery cells 2011 mated with the heat exchange tube, and the heat is subsequently transferred through the heat exchange tube to the heat exchange fluid in the heat exchange flow channel. The heat exchange fluid flows to carry and dissipate the heat. Thus, as the heat exchange fluid flows along the heat exchange flow channel, it continuously carries away the heat, thereby cooling and dissipating heat from the battery cells 2011.

When the heat exchange member 100 heats the battery cells 2011, the heat exchange fluid with heat flows along the heat exchange flow channel, heat in the heat exchange fluid is transferred through the heat exchange tube to one side surface of the battery cells 2011 mated with the heat exchange tube, and the heat is then transferred along the housings of the battery cells 2011 into the battery cells 2011 to heat and raise the temperature of the battery cells 2011. In this way, the heat exchange fluid flows along the heat exchange flow channel to continuously transfers the heat to the battery cells 2011 to heat and raise the temperature of the battery cells 2011.

The wall surface of the battery cell 2011 that mates with the heat exchange tube is defined as a projection surface. Herein, the wall surface where the battery cell 2011 mates with the heat exchange tube refers to a side surface of the battery cells 2011 in the battery assembly 200 in the second direction. Specifically, the wall surface is an outer surface of the housing of the battery cell 2011 on one side in the second direction. When the heat exchange member 100 heats or cools the battery cell 2011, heat is transferred from the battery cell 2011 to the heat exchange fluid in the heat exchange tube through the wall surface or from the heat exchange fluid in the heat exchange tube to the battery cell 2011.

The orthographic projection of the heat exchange tube refers to a projection of the heat exchange tube on the projection surface along a direction parallel to the second direction, and the area of the orthographic projection of the heat exchange tube on the wall surface is an area of a heat exchange surface of the heat exchange tube for performing heat exchange with a single battery cell 2011, in other words, it may refer to a heat exchange area where the battery cell 2011 performs heat exchange with the heat exchange tube. The area of the orthographic projection of the heat exchange tube on the wall surface is set to be greater than 15% of the area of the wall surface, meaning that the heat exchange area between the battery cell 2011 and the heat exchange tube (hereinafter referred to as the heat exchange area of the battery cell 2011) is greater than 15% of the area of the wall surface of the battery cell 2011. For example, the heat exchange area of the battery cell 2011 may be 15%, 20%, 25%, 30%, 35%, 40%, 45%, 50%, 55%, 60%, 65%, 70%, 75%, 80%, 85%, 90%, 95%, or the like of the area of the wall surface of the battery cell 2011.

It can be understood that when the battery cell 2011 dissipates heat and cools or heats and raises temperature, with a fluid temperature of the heat exchange fluid unchanged, the larger the heat exchange area between the battery cell 2011 and the heat exchange tube, the faster the cooling rate or temperature rise rate of the battery cell 2011.

In the foregoing embodiment, by limiting the heat exchange area of the battery cell 2011 to be greater than or equal to 15% of the area of the wall surface of the battery cell 2011, when the heat exchange member 100 cools or heats the battery cell 2011, the heat exchange contact area between the heat exchange tube and each battery cell 2011 can be increased, thereby improving the heat exchange rate for the battery cell 2011, that is, increasing both the cooling rate and the temperature rise rate for the battery cell 2011. In this way, not only can the battery cell 2011 quickly reach a preset temperature range when the battery assembly 200 starts operating, but the battery assembly 200 can also be maintained within an appropriate temperature range during normal operation of the battery assembly 200. This reduces temperature fluctuations of the battery cell 2011 during operation, ensuring more stable operation of the battery cell 2011, thereby making stable operation of the battery 1000 and allowing the battery 1000 to maintain good battery 1000 performance.

In addition, in this embodiment, by setting the heat exchange area of the battery cell 2011 to be greater than or equal to 15% of the area of the wall surface of the battery cell 2011, the contact area between the battery cell 2011 and the heat exchange tube can be increased, that is, an arrangement density of the heat exchange tube on a surface of the battery assembly 200 can be increased. The increased arrangement density of the heat exchange tube can improve uniformity of heat transfer between the heat exchange member 100 and the battery assembly 200 at various positions, thereby improving temperature uniformity of the battery assembly 200 and improving a temperature uniformity effect of the battery 1000.

Two specific examples of the battery 1000 of the present application are subjected to simulation experiment analysis below, where simulation software used is FloEFD.

During simulation analysis, it is set that the battery assembly 200 of the battery 1000 includes four battery units 201, each battery unit 201 includes 30 battery cells 2011 stacked along a thickness direction, the four battery units 201 are stacked along a length direction of the battery cells 2011, each battery cell 2011 has a length of 194 mm, a width of 83 mm, and a thickness of 30 mm, and a wall thickness of the housing of the battery cell 2011 is 0.55 mm. The battery cell 2011 may be a lithium iron phosphate battery 1000 or may be a ternary lithium battery 1000. It is set that the housing of the battery cell 2011 is 3-series aluminum, and the 3-series aluminum includes the following components by mass percentage: aluminum ≥99.6%, copper ≤0.05%, iron ≤0.35%, magnesium ≤0.03%, manganese ≤0.03%, silicon ≤0.25%, titanium ≤0.03%, vanadium ≤0.05%, zinc ≤0.05%, and other single elements ≤0.03%.

An ambient temperature for the simulation experiment is set to -20°C, an initial temperature of the battery cell 2011 is -20°C, and a target temperature of the battery cell 2011 is 0°C.

It is set that the heat exchange member 100 is arranged at a bottom of the battery assembly 200, the heat exchange member 100 includes two symmetrically arranged heat exchange tubes, the heat exchange tube includes a first heat exchange section 11 and a second heat exchange section 12 that are sequentially connected, the second heat exchange section 12 is bent at a peripheral side of the battery assembly 200 to form a U-shaped region 120, and the first heat exchange section 11 extends in a meandering manner in the U-shaped region 120 on an inner side along the thickness direction of the battery cells 2011. Openings of the U-shaped regions of the two heat exchange tubes are arranged facing each other in the length direction of the battery cells 2011. A water inlet and a water outlet of the two heat exchange tubes are arranged side by side in a middle region on one side of the battery assembly 200 in the thickness direction of the battery cells 2011.

It is set that the heat exchange tube is an aluminum tube, contact between the heat exchange tube and the battery assembly 200 and contact between adjacent battery cells 2011 are ideal contacts.

It is set that the heat exchange fluid in the heat exchange tube is a mixture containing 50% water and 50% ethylene glycol, with a density between approximately 1.11 g/cm³ to 1.13 g/cm³, a specific heat capacity of approximately 4.18 J/(g·°C), a thermal conductivity of approximately 0.229 W/(m·K), and a viscosity of approximately 0.00014 Pa·s.

During simulation, the heat exchange member 100 is used to heat and raise the temperature of the battery assembly 200, where an inlet temperature of the heat exchange fluid in the heat exchange tube is set to 40°C, a flow rate of the heat exchange fluid is 8 L/min, and the heat exchange fluid enters from the second heat exchange section 12 and then flows out from the first heat exchange section 11.

In example (1), it is set that the heat exchange area between the battery cell 2011 and the heat exchange tube is 15% of the area of the wall surface of the battery cell 2011. Simulation analysis is performed for example (1), and when the battery assembly 200 reaches the target temperature, heating of the heat exchange member 100 is stopped. At this time, the temperature rise rate of the battery assembly 200 can be obtained as: 0.5°C/min. Meanwhile, a temperature distribution cloud map of the battery assembly 200 can be obtained, as shown in FIG. 6.

As can be seen from FIG. 6, when the ratio of the heat exchange area of the battery cell 2011 to the area of the wall surface of the battery cell 2011 is 15%, in the overall temperature distribution cloud map, the lowest temperature in the battery 1000 is 0.02°C, the highest temperature in the battery 1000 is 5.63°C, and the maximum temperature difference in the battery 1000 is 5.61°C.

In example (2), it is set that the heat exchange area between the battery cell 2011 and the heat exchange tube is 30% of the area of the wall surface of the battery cell 2011. Simulation analysis is performed for example (2), and when the battery assembly 200 reaches the target temperature, heating of the heat exchange member 100 is stopped. At this time, the temperature rise rate of the battery assembly 200 can be obtained as: 0.914°C/min. Meanwhile, a temperature distribution cloud map of the battery assembly 200 can be obtained, as shown in FIG. 7. FIG. 7 is a temperature distribution diagram obtained from the simulation experiment of the battery 1000 of this embodiment.

As can be seen from FIG. 7, when the ratio of the heat exchange area of the battery cell 2011 to the area of the wall surface of the battery cell 2011 is 30%, in the overall temperature distribution cloud map, the lowest temperature in the battery 1000 is 0.01°C, the highest temperature in the battery 1000 is 4.10°C, and the maximum temperature difference in the battery 1000 is 4.09°C.

From the above, when the ratio of the heat exchange area of the battery cell 2011 to the area of the wall surface of the battery cell 2011 increases from 15% to 30%, the temperature rise rate of the battery assembly 200 increases from 0.5°C/min to 0.914°C/min, and the maximum temperature difference in the battery assembly 200 decreases from 5.61°C to 4.09°C.

From the above, when the ratio of the heat exchange area of the battery cell 2011 to the area of the wall surface of the battery cell 2011 is greater than or equal to 15%, the temperature rise rate of the battery assembly 200 is greater than or equal to 0.5°C/min, and the maximum temperature difference in the battery assembly 200 is less than or equal to 8°C. Furthermore, the maximum temperature difference in the battery assembly 200 is less than or equal to 6°C, and as the heat exchange area of the battery cell 2011 increases, the temperature rise rate of the battery 1000 increases, and the maximum temperature difference in the battery assembly 200 decreases.

The plurality of battery cells 2011 of the battery assembly 200 are regionally divided below, and temperature distribution cloud maps of various regions are further analyzed in detail.

It should be noted that, to facilitate connection of the current collector, water inlets and water outlets of the two heat exchange tubes are arranged side by side, and affected by inlet water temperature, temperatures of battery cells 2011 adjacent to the water inlets and water outlets of the heat exchange tubes in the battery assembly 200 are usually significantly higher than temperatures of other battery cells 2011. Therefore, a region where three columns of battery cells 2011 adjacent to the water inlets of the heat exchange tubes in the battery assembly 200 are located is defined as a first region s1. Meanwhile, as can be seen from FIG. 6, battery cells 2011 arranged opposite to the first region s1 on the other side of the battery assembly 200 also have locally high temperatures, and a region where three columns of battery cells 2011 on the other side edge of the battery assembly 200 are located is defined as a second region s2. A remaining region of the battery assembly 200 except the first region s1 and the second region s2 is designated as a third region s3.

For the third region s3, as can be seen from FIG. 6, in example (1), in the third region s3, a lowest temperature is 0.76°C, a highest temperature is 1.35°C, and a maximum temperature difference is 0.59°C. As can be seen from FIG. 7, in example (2), in the third region s3, a lowest temperature is 0.46°C, a highest temperature is 1.01°C, and a maximum temperature difference is 0.55°C.

From the above, in the third regions s3 of the above example (1) and example (2), maximum temperature differences in the battery assembly 200 are both less than 1°C. From this, it can be obtained that when the ratio of the heat exchange area of the battery cell 2011 to the area of the wall surface of the battery cell 2011 is greater than or equal to 15%, in the third region s3, a temperature difference in the battery assembly 200 can be less than or equal to 2°C, further, can be less than or equal to 1°C, resulting in very uniform temperature distribution.

Meanwhile, in the third region s3 of example (1), a maximum difference from the target temperature of 0°C is 1.35°C, and in the third region s3 of example (2), a maximum difference from the target temperature of 0°C is 1.01°C. That is, when the ratio of the heat exchange area of the battery cell 2011 to the area of the wall surface of the battery cell 2011 increases from 15% to 30%, in the third region s3, a maximum difference from the target temperature decreases from 1.35°C to 1.01°C. From this, it can be obtained that as the heat exchange area increases, in the third region s3, a difference between the temperature of the battery cell 2011 and the target temperature is smaller, thereby making the temperature distribution of the battery assembly 200 more uniform.

For the second region s2, as can be seen from FIG. 6, in example (1), a highest temperature of 5.63°C appears in the second region s2, while in FIG. 7, two temperature measurement points in the second region s2 of example (2) are 0.28°C and 0.01°C, respectively, both very close to the target temperature value, that is, in example (2), temperatures of battery cells 2011 in the second region s2 and temperatures of battery cells 2011 in the third region s3 are basically in a range of 0°C-1°C.

It should be noted that the ratio of the heat exchange area of the battery cell 2011 to the area of the wall surface of the battery cell 2011 in example (1) is 15%, that is, the ratio of 15% between the heat exchange area of the battery cell 2011 and the area of the wall surface of the battery cell 2011 in example (1) is a lower limit endpoint value of the ratio of the heat exchange area of the battery cell 2011 to the area of the wall surface of the battery cell 2011 being greater than or equal to 15% in the present application. The ratio of the heat exchange area of the battery cell 2011 to the area of the wall surface of the battery cell 2011 in example (2) is 30%.

Since both example (1) and example (2) include two heat exchange tubes, for one heat exchange tube, a length of the heat exchange tube in example (1) is less than a length of the heat exchange tube in example (2), which makes flow resistance of the heat exchange tube in example (1) smaller than flow resistance in example (2). Moreover, when the heat exchange fluid flows from the third region s3 to the second region s2, the heat exchange flow channel of the heat exchange tube is bent, which causes the heat exchange fluid to gather at a position of the second region s2. Therefore, compared with the second region s2 of example (2), the second region s2 of example (1) has a faster fluid flow rate per unit time, more total heat exchange, higher local temperature rise, and a larger temperature difference from battery cells 2011 in the third region s3.

From the above analysis, when the ratio of the heat exchange area of the battery cell 2011 to the area of the wall surface of the battery cell 2011 in example (1) is the lower limit endpoint value of 15%, a temperature difference from the target temperature in the third region s3 can be less than 2°C, an overall temperature difference of the battery assembly 200 can be maintained less than 6°C. However, due to an arrangement density of the heat exchange tube being a lower limit value and bending of the heat exchange flow channel, in addition to a higher temperature point in the first region s1 arranged adjacent to the water inlet of the heat exchange tube, there is also a large difference from the target temperature in the second region s2, and temperature uniformity needs to be further improved. This can also laterally prove that when the ratio of the heat exchange area of the battery cell 2011 to the area of the wall surface of the battery cell 2011 is less than 15%, the temperature distribution uniformity of the battery assembly 200 needs to be improved and enhanced.

When the ratio of the heat exchange area of the battery cell 2011 to the area of the wall surface of the battery cell 2011 in example (2) is 30%, temperature differences from the target temperature in the second region s2 and the third region s3 are basically within 1°C, only the temperature of the first region s1 arranged adjacent to the water inlet is slightly higher, but the overall temperature difference of the battery assembly 200 can also be less than 5°C.

From the above, when the ratio of the heat exchange area of the battery cell 2011 to the area of the wall surface of the battery cell 2011 increases from 15% to 30%, the temperature difference between the second region s2 and the target temperature can decrease from 5.63°C to 0.01°C, that is, as the heat exchange area of the battery cell 2011 increases, the temperature uniformity between the second region s2 and the third region s3 of the battery assembly 200 is significantly improved.

Through the above simulation analysis, it can be seen that for the battery 1000 of the embodiments of the present application, by limiting the heat exchange area of the battery cell 2011 to be greater than or equal to 15% of the area of the wall surface of the battery cell 2011, not only can the temperature rise rate of the battery assembly 200 be improved, enabling the battery 1000 to quickly reach a preset temperature, but also, under other conditions unchanged, as the heat exchange area increases, the temperature rise rate increases.

Meanwhile, the battery 1000 of the embodiments of the present application can make a difference between a highest temperature and a lowest temperature in the third region s3 of the battery assembly 200 less than 2°C, further, can make a difference between highest temperatures and lowest temperatures in the third region s3 and the second region s2 less than 1°C, in other words, an internal temperature difference of the battery assembly 200 can be controlled within a small range, thereby improving the temperature uniformity in the battery assembly 200, and under other conditions unchanged, as the heat exchange area increases, the temperature uniformity of the battery assembly 200 is better.

In the foregoing embodiment, the heat exchange contact area between the heat exchange tube and each battery cell 2011 can be increased, and the heat exchange rate for the battery cell 2011 can be increased, so that not only can the battery cell 2011 quickly reach a preset temperature range when the battery assembly 200 starts to work, but also the battery assembly 200 can be maintained within an appropriate temperature range during normal operation of the battery assembly 200, reducing temperature fluctuations of the battery cell 2011 during operation. Consequently, the battery cell 2011 can operate more stably, thereby ensuring the stable operation of the battery 1000.

In some embodiments of the present application, a thickness of the battery cell 2011 in the first direction is greater than or equal to 40 mm, and the area of the orthographic projection of the heat exchange tube on the wall surface may be greater than or equal to 30% of the area of the wall surface.

The thickness of the battery cell 2011 in the first direction is set to be greater than or equal to 40 mm. Specifically, the battery cell 2011 may be a prismatic battery 1000, a thickness direction of the battery cell 2011 is parallel to the first direction, two sides of the housing of the battery cell 2011 in the first direction are large surfaces of the battery cell 2011, and the thickness of the battery cell 2011 may be 40 mm, 45 mm, 50 mm, 55 mm, 60 mm, 65 mm, 70 mm, 75 mm, 80 mm, 85 mm, 90 mm, 95 mm, 100 mm, 105 mm, or the like. The area of the orthographic projection of the heat exchange tube on the wall surface is set to be greater than or equal to 30% of the area of the wall surface, for example, the heat exchange area of the battery cell 2011 may be 30%, 35%, 40%, 45%, 50%, 55%, 60%, 65%, 70%, 75%, 80%, 85%, 90%, 95%, or the like of the area of the wall surface, and the ratio of the heat exchange area of the battery cell 2011 to the area of the wall surface may be correspondingly set according to the thickness of the battery cell 2011.

It can be understood that when the thickness of the battery cell 2011 increases, the overall volume of the battery cells 2011 become larger, and when the battery cells 2011 reach the same heating rate and cooling rate, required heat exchange amount increases.

Although when the thickness of the battery cell 2011 increases, with a structure of the heat exchange tube unchanged, the area of the wall surface of the battery cell 2011 mated with the heat exchange tube also increases correspondingly, increased heat exchange contact area cannot meet heat exchange requirements after the volume of the battery cell 2011 increases.

Therefore, to meet heat exchange requirements after the thickness of the battery cell 2011 increases to greater than or equal to 40 mm, in this embodiment, by setting the area of the orthographic projection of the heat exchange tube on the wall surface to be greater than or equal to 30% of the area of the wall surface. This can increase the heat exchange area between the battery cell 2011 and the heat exchange tube, ensuring the heat exchange contact area between the battery cell 2011 and the heat exchange tube match the heat exchange requirements of the thickened battery cell 2011. Thus, the heat exchange speed of the heat exchange tube on the battery cell 2011 is increased, and the heat exchange effect of the heat exchange tube on the battery cell 2011 is improved, thereby achieving rapid heating and rapid cooling of the battery cell 2011. Further, the battery cell 2011 can quickly enter and maintain an appropriate temperature range, ensuring more stable operation of the battery assembly 200.

In the foregoing embodiment, when the thickness of the battery cell 2011 is greater than or equal to 40 mm, by setting a ratio of the heat exchange area of the battery cell 2011 to the area of the wall surface to be greater than or equal to 30%, the heat exchange contact area between the heat exchange tube and the battery cell 2011 can better match the heat exchange requirements of the thickened battery cell 2011, allowing the battery assembly 200 to better maintain an appropriate temperature range, thereby providing better temperature uniformity of the battery assembly 200 and ensuring more stable operation of the battery 1000.

In some embodiments of the present application, a thickness of the battery cell 2011 in the first direction is greater than or equal to 30 mm and less than 40 mm, and the area of the orthographic projection of the heat exchange tube on the wall surface may be greater than or equal to 15% of the area of the wall surface and less than 30% of the area of the wall surface.

The thickness of the battery cell 2011 in the first direction is greater than or equal to 30 mm and less than 40 mm, for example, the thickness of the battery cell 2011 may be 30 mm, 31 mm, 32 mm, 33 mm, 34 mm, 35 mm, 36 mm, 37 mm, 38 mm, or the like. A ratio of the area of the orthographic projection of the heat exchange flow channel on the wall surface to the area of the wall surface is limited to be greater than or equal to 15% and less than 30%, for example, the ratio of the area of the orthographic projection of the heat exchange tube on the wall surface to the area of the wall surface may be 15%, 16%, 17%, 18%, 19%, 20%, 21%, 22%, 23%, 24%, 25%, 26%, 27%, 28%, 29%, or the like, and the ratio of the area of the orthographic projection of the heat exchange tube on the wall surface to the area of the wall surface may be correspondingly arranged according to the thickness of the battery cell 2011.

In the foregoing embodiment, when the thickness of the battery cell 2011 is greater than or equal to 30 mm and less than 40 mm, by setting a ratio of the heat exchange area of the battery cell 2011 to the area of the wall surface to be greater than or equal to 15% and less than 30%, the heat exchange contact area between the heat exchange tube and the battery cell 2011 can well match the heat exchange requirements of the thickened battery cell 2011, allowing the battery assembly 200 to well maintain an appropriate temperature range, thereby making the temperature distribution within the battery assembly 200 more uniform and ensuring more stable operation of the battery 1000.

In some embodiments of the present application, a thickness of the battery cell 2011 in the first direction is greater than or equal to 50 mm, and the area of the orthographic projection of the heat exchange tube on the wall surface may be greater than or equal to 45% of the area of the wall surface.

The thickness of the battery cell 2011 in the first direction is greater than or equal to 50 mm, for example, the thickness of the battery cell 2011 may be 50 mm, 55 mm, 60 mm, 65 mm, 70 mm, 75 mm, 80 mm, 85 mm, 90 mm, 95 mm, 100 mm, 105 mm, or the like. A ratio of the area of the orthographic projection of the heat exchange tube on the wall surface to the area of the wall surface is limited to be greater than or equal to 45%, for example, the ratio of the area of the orthographic projection of the heat exchange tube on the wall surface to the area of the wall surface may be 45%, 50%, 55%, 60%, 65%, 70%, 75%, 80%, 85%, 90%, 95%, or the like, and the ratio of the area of the orthographic projection of the heat exchange tube on the wall surface to the area of the wall surface may be correspondingly arranged according to the thickness of the battery cell 2011.

In the foregoing embodiment, when the thickness of the battery cell 2011 is greater than or equal to 50 mm, by setting a ratio of the heat exchange area of the battery cell 2011 to the area of the wall surface to be greater than or equal to 45%, the heat exchange contact area between the heat exchange tube and the battery cell 2011 can better match the heat exchange requirements of the thickened battery cell 2011, allowing the battery assembly 200 to better maintain an appropriate temperature range, thereby providing better temperature uniformity of the battery assembly 200 and ensuring more stable operation of the battery 1000.

In some embodiments of the present application, a thickness of the battery cell 2011 in the first direction is greater than or equal to 40 mm and less than 50 mm, and the area of the orthographic projection of the heat exchange tube on the wall surface may be greater than or equal to 30% of the area of the wall surface and less than 45% of the area of the wall surface.

The thickness of the battery cell 2011 in the first direction is greater than or equal to 40 mm and less than 50 mm, for example, the thickness of the battery cell 2011 may be 40 mm, 41 mm, 42 mm, 43 mm, 44 mm, 45 mm, 46 mm, 47 mm, 48 mm, 49 mm, or the like. A ratio of the area of the orthographic projection of the heat exchange tube on the wall surface to the area of the wall surface is limited to be greater than or equal to 30% and less than 45%, for example, the ratio of the area of the orthographic projection of the heat exchange tube on the wall surface to the area of the wall surface may be 30%, 31%, 32%, 33%, 34%, 35%, 36%, 37%, 38%, 39%, 40%, 41%, 42%, or the like, and the ratio of the area of the orthographic projection of the heat exchange tube on the wall surface to the area of the wall surface may be correspondingly arranged according to the thickness of the battery cell 2011.

In the foregoing embodiment, when the thickness of the battery cell 2011 is greater than or equal to 40 mm and less than 50 mm, by setting a ratio of the heat exchange area of the battery cell 2011 to the area of the wall surface to be greater than or equal to 30% and less than 45%, the heat exchange contact area between the heat exchange tube and the battery cell 2011 can well match the heat exchange requirements of the thickened battery cell 2011, allowing the battery assembly 200 to well maintain an appropriate temperature range, thereby making the temperature distribution within the battery assembly 200 more uniform and ensuring more stable operation of the battery 1000.

In some embodiments of the present application, a thickness of the battery cell 2011 in the first direction is greater than or equal to 60 mm, and the area of the orthographic projection of the heat exchange tube on the wall surface may be greater than or equal to 65% of the area of the wall surface.

The thickness of the battery cell 2011 in the first direction is greater than or equal to 60 mm, for example, the thickness of the battery cell 2011 may be 60 mm, 65 mm, 70 mm, 75 mm, 80 mm, 85 mm, 90 mm, 95 mm, 100 mm, 105 mm, or the like. A ratio of the area of the orthographic projection of the heat exchange tube on the wall surface to the area of the wall surface is limited to be greater than or equal to 65%, for example, the ratio of the area of the orthographic projection of the heat exchange tube on the wall surface to the area of the wall surface may be 65%, 70%, 75%, 80%, 85%, 90%, 95%, or the like, and the ratio of the area of the orthographic projection of the heat exchange tube on the wall surface to the area of the wall surface may be correspondingly arranged according to the thickness of the battery cell 2011.

In the foregoing embodiment, when the thickness of the battery cell 2011 is greater than or equal to 60 mm, by setting a ratio of the heat exchange area of the battery cell 2011 to the area of the wall surface to be greater than or equal to 65%, the heat exchange contact area between the heat exchange tube and the battery cell 2011 can better match the heat exchange requirements of the thickened battery cell 2011, allowing the battery assembly 200 to better maintain an appropriate temperature range, thereby providing better temperature uniformity of the battery assembly 200 and ensuring more stable operation of the battery 1000.

In some embodiments of the present application, a thickness of the battery cell 2011 in the first direction is greater than or equal to 50 mm and less than 60 mm, and the area of the orthographic projection of the heat exchange tube on the wall surface may be greater than or equal to 45% of the area of the wall surface and less than 65% of the area of the wall surface.

The thickness of the battery cell 2011 in the first direction is greater than or equal to 50 mm and less than 60 mm, for example, the thickness of the battery cell 2011 may be 50 mm, 51 mm, 52 mm, 53 mm, 54 mm, 55 mm, 56 mm, 57 mm, 58 mm, or the like. A ratio of the area of the orthographic projection of the heat exchange tube on the wall surface to the area of the wall surface is limited to be greater than or equal to 45% and less than 65%, for example, the ratio of the area of the orthographic projection of the heat exchange tube on the wall surface to the area of the wall surface may be 45%, 46%, 47%, 48%, 49%, 50%, 51%, 52%, 53%, 54%, 55%, 56%, 57%, 58%, 59%, 60%, 61%, 62%, 63%, or the like, and the ratio of the area of the orthographic projection of the heat exchange tube on the wall surface to the area of the wall surface may be correspondingly arranged according to the thickness of the battery cell 2011.

In the foregoing embodiment, when the thickness of the battery cell 2011 is greater than or equal to 50 mm and less than 60 mm, by setting a ratio of the heat exchange area of the battery cell 2011 to the area of the wall surface to be greater than or equal to 45% and less than 65%, the heat exchange contact area between the heat exchange tube and the battery cell 2011 can well match the heat exchange requirements of the thickened battery cell 2011, allowing the battery assembly 200 to well maintain an appropriate temperature range, thereby making the temperature distribution within the battery assembly 200 more uniform and ensuring more stable operation of the battery 1000.

In some embodiments of the present application, a thickness of the battery cell 2011 in the first direction is greater than or equal to 80 mm, and the area of the orthographic projection of the heat exchange tube on the wall surface may be greater than or equal to 75% of the area of the wall surface.

The thickness of the battery cell 2011 in the first direction is greater than or equal to 80 mm, for example, the thickness of the battery cell 2011 may be 80 mm, 85 mm, 90 mm, 95 mm, 100 mm, 105 mm, or the like. A ratio of the area of the orthographic projection of the heat exchange tube on the wall surface to the area of the wall surface is limited to be greater than or equal to 75%, for example, the ratio of the area of the orthographic projection of the heat exchange tube on the wall surface to the area of the wall surface may be 75%, 80%, 85%, 90%, 95%, or the like, and the ratio of the area of the orthographic projection of the heat exchange tube on the wall surface to the area of the wall surface may be correspondingly arranged according to the thickness of the battery cell 2011.

In the foregoing embodiment, when the thickness of the battery cell 2011 is greater than or equal to 80 mm, by setting a ratio of the heat exchange area of the battery cell 2011 to the area of the wall surface to be greater than or equal to 75%, the heat exchange contact area between the heat exchange tube and the battery cell 2011 can better match the heat exchange requirements of the thickened battery cell 2011, allowing the battery assembly 200 to better maintain an appropriate temperature range, thereby providing better temperature uniformity of the battery assembly 200 and ensuring more stable operation of the battery 1000.

In some embodiments of the present application, a thickness of the battery cell 2011 in the first direction is greater than or equal to 60 mm and less than 80 mm, and the area of the orthographic projection of the heat exchange tube on the wall surface may be greater than or equal to 65% of the area of the wall surface and less than 75% of the area of the wall surface.

The thickness of the battery cell 2011 in the first direction is greater than or equal to 60 mm and less than 80 mm, for example, the thickness of the battery cell 2011 may be 60 mm, 61 mm, 62 mm, 63 mm, 64 mm, 65 mm, 66 mm, 67 mm, 68 mm, 69 mm, 70 mm, 71 mm, 72 mm, 73 mm, 74 mm, 75 mm, or the like. A ratio of the area of the orthographic projection of the heat exchange tube on the wall surface to the area of the wall surface is limited to be greater than or equal to 65% and less than 75%, for example, the ratio of the area of the orthographic projection of the heat exchange tube on the wall surface to the area of the wall surface may be 65%, 66%, 67%, 68%, 69%, 70%, 71%, 72%, 73%, 74%, or the like, and the ratio of the area of the orthographic projection of the heat exchange tube on the wall surface to the area of the wall surface may be correspondingly arranged according to the thickness of the battery cell 2011.

In the foregoing embodiment, when the thickness of the battery cell 2011 is greater than or equal to 60 mm and less than 80 mm, by setting a ratio of the heat exchange area of the battery cell 2011 to the area of the wall surface to be greater than or equal to 65% and less than 75%, the heat exchange contact area between the heat exchange tube and the battery cell 2011 can well match the heat exchange requirements of the thickened battery cell 2011, allowing the battery assembly 200 to well maintain an appropriate temperature range, thereby making the temperature distribution within the battery assembly 200 more uniform and ensuring more stable operation of the battery 1000.

In some embodiments of the present application, a thickness of the battery cell 2011 in the first direction is greater than 100 mm, and the area of the orthographic projection of the heat exchange tube on the wall surface may be greater than or equal to 90% of the area of the wall surface.

The thickness of the battery cell 2011 in the first direction is greater than 100 mm, for example, the thickness of the battery cell 2011 may be 105 mm, 110 mm, 115 mm, 120 mm, 125 mm, 130 mm, or the like. A ratio of the area of the orthographic projection of the heat exchange tube on the wall surface to the area of the wall surface is limited to be greater than or equal to 90%, for example, the ratio of the area of the orthographic projection of the heat exchange tube on the wall surface to the area of the wall surface may be 90%, 91%, 92%, 93%, 94%, 95%, 96%, 97%, 98%, 99%, or the like, and the ratio of the area of the orthographic projection of the heat exchange tube on the wall surface to the area of the wall surface may be correspondingly arranged according to the thickness of the battery cell 2011.

In the foregoing embodiment, when the thickness of the battery cell 2011 is greater than 100 mm, by setting a ratio of the heat exchange area of the battery cell 2011 to the area of the wall surface to be greater than or equal to 90%, the heat exchange contact area between the heat exchange tube and the battery cell 2011 can better match the heat exchange requirements of the thickened battery cell 2011, allowing the battery assembly 200 to better maintain an appropriate temperature range, thereby providing better temperature uniformity of the battery assembly 200 and ensuring more stable operation of the battery 1000.

In some embodiments of the present application, a thickness of the battery cell 2011 in the first direction is greater than or equal to 80 mm and less than or equal to 100 mm, and the area of the orthographic projection of the heat exchange tube on the wall surface may be greater than or equal to 75% of the area of the wall surface and less than 90% of the area of the wall surface.

The thickness of the battery cell 2011 in the first direction is greater than or equal to 80 mm and less than or equal to 100 mm, for example, the thickness of the battery cell 2011 may be 80 mm, 81 mm, 82 mm, 83 mm, 84 mm, 85 mm, 86 mm, 87 mm, 88 mm, 89 mm, 90 mm, 91 mm, 92 mm, 93 mm, 94 mm, 95 mm, 96 mm, 97 mm, 98 mm, 99 mm, 100 mm, or the like. A ratio of the area of the orthographic projection of the heat exchange tube on the wall surface to the area of the wall surface is limited to be greater than or equal to 75% and less than 90%, for example, the ratio of the area of the orthographic projection of the heat exchange tube on the wall surface to the area of the wall surface may be 75%, 79%, 83%, 87%, or the like, and the ratio of the area of the orthographic projection of the heat exchange tube on the wall surface to the area of the wall surface may be correspondingly arranged according to the thickness of the battery cell 2011.

In the foregoing embodiment, when the thickness of the battery cell 2011 is greater than or equal to 80 mm and less than or equal to 100 mm, by setting a ratio of the heat exchange area of the battery cell 2011 to the area of the wall surface to be greater than or equal to 75% and less than 90%, the heat exchange contact area between the heat exchange tube and the battery cell 2011 can well match the heat exchange requirements of the thickened battery cell 2011, allowing the battery assembly 200 to well maintain an appropriate temperature range, thereby making the temperature distribution within the battery assembly 200 more uniform and ensuring more stable operation of the battery 1000.

It should be noted that in the foregoing embodiments, the heat exchange contact area between the heat exchange tube and a single battery cell 2011 is designed and determined according to the thickness of the battery cell 2011. In a specific design process, a required heating power of the battery cell 2011 per unit length may be preset first, the number of battery cells 2011 may be derived according to the heating power, and then the thickness of the battery cell 2011 may be derived.

For example, a heating power required by all battery cells 2011 covered by a heat exchange flow channel per unit length (for example, 1 m) is set, assuming that a side plate on one side of a large surface of the housing of each battery cell 2011 is a fin, a heating power required by the battery cells 2011 per unit length is approximately equal to a heating power of fins for the battery cells 2011 per unit length. Therefore, a required number of fins can be calculated according to the heating power required by the battery cells 2011 per unit length, and each battery cell 2011 is equivalent to having only two fins. In this way, the number of battery cells 2011 per unit length can be obtained, and then the thickness of the battery cell 2011 can be obtained.

In some embodiments of the present application, as shown in FIG. 4 and FIG. 5, the heat exchange flow channel may include a first heat exchange flow channel 10, the first heat exchange flow channel 10 includes a first heat exchange section 11 and a second heat exchange section 12, the second heat exchange section 12 is bent to form a U-shaped region 120, the first heat exchange section 11 is arranged in a bent manner in the U-shaped region 120, and is connected to the second heat exchange section 12 in a bent manner, battery cells 2011 located at an outermost periphery in a circumferential direction of the battery assembly 200 form peripheral battery cells, and at least a portion of the second heat exchange section 12 is in contact with the peripheral battery cells.

The heat exchange flow channel includes the first heat exchange flow channel 10, the first heat exchange flow channel 10 may be provided in one or plurality, and when the first heat exchange flow channel 10 is provided in plurality, the plurality of first heat exchange flow channels 10 may be sequentially arranged along the first direction, or the plurality of first heat exchange flow channels 10 may be sequentially arranged along a third direction (direction Y shown in FIG. 4), where the third direction may intersect the first direction and the second direction. For example, the third direction may perpendicularly intersect the first direction and the second direction or intersect at an acute angle or an obtuse angle, for example, the first direction and the second direction may be arranged at an included angle of 30°, 60°, 80°, 120°, 150°, or 170°.

The above "the second heat exchange section 12 is bent to form a U-shaped region 120, and the first heat exchange section 11 is arranged in a bent manner in the U-shaped region 120" is intended to indicate that the second heat exchange section 12 is disposed at a circumferential periphery of the first heat exchange section 11 and may be arranged on three circumferential sides of the first heat exchange section 11, and the second heat exchange section 12 may be arranged closer to a peripheral position of the battery 1000 relative to the first heat exchange section 11.

The second heat exchange section 12 is bent to form a U-shaped region 120, meaning that, in a direction from one end of the second heat exchange section 12 toward the other end, the second heat exchange section 12 extends along a U-shaped line to form the U-shaped region 120 having a U-shape.

The first heat exchange section 11 is arranged in a bent manner in the U-shaped region 120, meaning that the first heat exchange section 11 is arranged in a space enclosed by the second heat exchange section 12, and the first heat exchange section 11 extends non-linearly on an inner side of the second heat exchange section 12 and has at least one bending position.

It should be noted that in the foregoing embodiment, it is only limited that the first heat exchange section 11 is arranged in a bent manner in the U-shaped region 120, and a bending form of the first heat exchange section 11 is not limited. In other words, the first heat exchange section 11 may be designed according to the heat exchange requirements of the battery 1000. For example, the first heat exchange section 11 may extend along a length direction of the battery cell 2011 (direction Y shown in FIG. 4) and be bent toward a width direction of the battery cell 2011 (direction X shown in FIG. 4) after extending to a certain length, and then continue to extend along the length direction of the battery cell 2011 and be bent along the width direction, or the first heat exchange section 11 may extend along the width direction of the battery cell 2011 and be bent toward the length direction of the battery cell 2011 after extending to a certain length, and then continue to extend along the width direction of the battery cell 2011 and be bent along the length direction.

The first heat exchange section 11 and the second heat exchange section 12 are bent to connect, meaning that one end of the first heat exchange section 11 is connected to one end of the second heat exchange section 12, and a connection position between the first heat exchange section 11 and the second heat exchange section 12 is a bent non-linear structure. For example, the connection position between the first heat exchange section 11 and the second heat exchange section 12 may be bent into an arc segment.

The first heat exchange section 11 and the second heat exchange section 12 are connected, so that one of an end of the first heat exchange section 11 away from the second heat exchange section 12 and an end of the second heat exchange section 12 away from the first heat exchange section 11 may serve as a liquid inlet end and the other may serve as a liquid outlet end. In this way, when the first heat exchange flow channel 10 performs heat exchange, the heat exchange medium may flow from the first heat exchange section 11 to the second heat exchange section 12 or from the second heat exchange section 12 to the first heat exchange section 11.

The second heat exchange section 12 is connected to the first heat exchange section 11 in a bent manner. Since the second heat exchange section 12 is located at a circumference of the first heat exchange section 11, one end of the first heat exchange section 11 connected to the second heat exchange section 12 may be located on one side of the first heat exchange section 11 in the first direction or on one side in the third direction, and when the heat exchange member 100 performs heat exchange operations, the heat exchange fluid in the first heat exchange flow channel 10 may flow from the first heat exchange section 11 of the first heat exchange flow channel 10 to the second heat exchange section 12, or the heat exchange fluid may flow from the second heat exchange section 12 to the first heat exchange section 11.

Battery cells 2011 located at an outermost periphery in the circumferential direction of the battery assembly 200 may refer to battery cells 2011 in the battery assembly 200 adjacent to a side wall of the battery 1000 and battery cells 2011 adjacent to structures such as an end plate in the battery 1000, the battery cells 2011 at the outermost periphery form peripheral battery cells, at least a portion of the second heat exchange section 12 is in contact with the peripheral battery cells, and the second heat exchange section 12 may partially be in contact with the peripheral battery cells or be in contact with some peripheral battery cells, or the second heat exchange section 12 may entirely be in contact with the peripheral battery cells or be in contact with some peripheral battery cells.

The first heat exchange section 11 is located in the U-shaped region 120 of the second heat exchange section 12, the second heat exchange section 12 may be located on an outermost side in a circumferential direction of the first heat exchange flow channel 10, and the first heat exchange section 11 may be in contact with battery cells 2011 located on an inner side of the peripheral battery cells. When the heat exchange member 100 performs heat exchange on the battery assembly 200, for example, when the battery assembly 200 needs to be cooled and dissipate heat, the heat exchange fluid in the first heat exchange flow channel 10 may flow from the first heat exchange section 11 to the second heat exchange section 12, so that the heat exchange fluid may first cool and dissipate heat from the battery cells 2011 located on the inner side of the peripheral battery cells in the battery assembly 200, and then the heat exchange fluid flows to the second heat exchange section 12 to cool and dissipate heat from the battery cells 2011 among the peripheral battery cells of the battery assembly 200.

At least a portion of the second heat exchange section 12 is in contact with the peripheral battery cells. As used herein, "being in contact with" may refer to the heat exchange tube forming the second heat exchange section 12 being directly abutted against and in contact with the peripheral battery cells or the heat exchange tube forming the second heat exchange section 12 being indirect in contact with the peripheral battery cells, similarly, the first heat exchange section 11 may also be directly abutted against or indirectly in contact with battery cells 2011 at a middle position of the battery assembly 200.

When the battery assembly 200 needs to be heated and raise temperature, the heat exchange fluid may flow from the second heat exchange section 12 to the first heat exchange section 11, so that the heat exchange fluid may first heat battery cells 2011 among the peripheral battery cells of the battery assembly 200, and then the heat exchange fluid flows to the first heat exchange section 11 to cool battery cells 2011 at a middle position of the battery assembly 200.

It can be understood that during operation and use of the battery 1000, the battery cells 2011 in the battery 1000 generate heat, where the peripheral battery cells and the battery cells 2011 at the middle position of the battery assembly 200 have different heat dissipation environments. Specifically, the battery cells 2011 among the peripheral battery cells can more easily dissipate heat outward through a side wall or an end plate or other structures of the battery 1000 and are less affected by heat dissipation of adjacent battery cells 2011, while the battery cells 2011 at the middle position of the battery assembly 200 have difficulty in dissipating heat and are significantly affected by heat dissipation of adjacent battery cells 2011, making heat dissipation conditions of battery cells 2011 at different positions in the battery assembly 200 different, resulting in relatively uneven temperature distribution within the battery 1000 after operation of the battery 1000, which makes the battery 1000 relatively unstable during operation and prone to performance degradation.

For example, the uneven temperature distribution within the battery 1000 greatly increases the risk of capacity decay and thermal runaway in one or some battery cells 2011 in the battery assembly 200 due to excessive temperature, and adjacent battery cells 2011 may also experience temperature rise and capacity decay under the influence of heat variation thereof, thereby reducing overall operational stability of the battery 1000 and reducing the battery performance. The battery performance herein refers to performance indicators such as capacity, charge-discharge rate, and voltage of the battery 1000.

It can be understood that during flow of the heat exchange fluid in the first heat exchange flow channel 10, the heat exchange effect of the heat exchange fluid gradually decreases. For example, when the heat exchange member 100 cools and dissipates heat from the battery assembly 200, heat of the battery cells 2011 is gradually transferred to the heat exchange fluid, making the temperature of the heat exchange fluid gradually increase during flow along the first heat exchange flow channel 10, and higher-temperature heat exchange fluid has a poor cooling effect when cooling the battery cells 2011; when the heat exchange member 100 heats and raises the temperature of the battery assembly 200, heat in the heat exchange fluid is gradually transferred to the battery cells 2011, making the temperature of the heat exchange fluid gradually decrease during flow along the first heat exchange flow channel 10, and lower-temperature heat exchange fluid has a poor heating effect when heating the battery cells 2011.

When the heat exchange member 100 cools and dissipates heat from the battery assembly 200, the heat exchange fluid may flow from the first heat exchange section 11 to the second heat exchange section 12 during flow along the first heat exchange flow channel 10. This allows the battery cells 2011 at the middle position of the battery assembly 200 to be cooled first, followed by the battery cells 2011 among the peripheral battery cells. Since the battery cells 2011 among the peripheral battery cells have better heat dissipation conditions, the higher-temperature heat exchange fluid flowing to the second heat exchange section 12 can still well meet heat dissipation needs of the battery cells 2011 among the peripheral battery cells. As a result, both the peripheral battery cells and the battery cells 2011 at the middle position of the battery assembly 200 can achieve excellent cooling effects. This in turn ensures that the temperatures of the peripheral battery cells and the battery cells 2011 at the middle position of the battery assembly 200 are relatively consistent after cooling and heat dissipation, making the temperature distribution within the battery 1000 more uniform.

When the heat exchange member 100 heats and raises the temperature of the battery assembly 200, the heat exchange fluid may flow from the second heat exchange section 12 to the first heat exchange section 11 during flow along the first heat exchange flow channel 10, to heat the heating battery cells 2011 among the peripheral battery cells of the battery assembly 200 first, and then the heat exchange fluid cools the battery cells 2011 located in the middle of the battery assembly 200. Since battery cells 2011 among the peripheral battery cells have good heat dissipation conditions and temperatures of the battery cells 2011 among the peripheral battery cells are more likely to decrease, the heat exchange fluid first heats the battery cells 2011 among the peripheral battery cells, and higher-temperature heat exchange fluid can well meet their heating requirements.

Since the battery cells 2011 at the middle position of the battery assembly 200 have poor heat dissipation conditions, lower-temperature heat exchange fluid flowing in the first heat exchange section 11 can cooperate with heat generated by the battery cells 2011 to well meet their heating requirements. As a result, both the peripheral battery cells and the battery cells 2011 at the middle position of the battery assembly 200 can achieve excellent heating effects. This in turn ensures that the temperatures of the peripheral battery cells and the battery cells 2011 at the middle position of the battery assembly 200 are relatively consistent after heating and temperature rise, making the temperature distribution within the battery 1000 more uniform.

In the foregoing embodiment, by providing the first heat exchange flow channel 10 in the heat exchange member 100, the second heat exchange section 12 of the first heat exchange flow channel 10 being connected to the first heat exchange section 11, the second heat exchange section 12 being bent to form the U-shaped region 120 with at least a portion being in contact with the peripheral battery cells, and the first heat exchange section 11 being disposed in the U-shaped region, the heat exchange member 100 can have better cooling and heat dissipation effects and heating and temperature rise effects when performing heat exchange operations for the battery assembly 200, making the temperature distribution within the battery 1000 more uniform, thereby ensuring more stable operation of the battery 1000 and allowing good battery performance to be maintained.

In an embodiment of the present application, as shown in FIG. 4, the first heat exchange section 11 and the second heat exchange section 12 may be bent in the same plane.

The first heat exchange section 11 and the second heat exchange section 12 are bent in the same plane. Specifically, the first heat exchange section 11 and the second heat exchange section 12 may be bent in a plane perpendicular to the second direction, and the plane may be parallel to one side surface of the battery assembly 200 in the second direction.

In the foregoing embodiment, by configuring the first heat exchange section 11 and the second heat exchange section 12 to be bent in the same plane, the first heat exchange flow channel 10 can perform heat exchange for the battery 1000 in the same plane, thereby simplifying a structure of the first heat exchange flow channel 10, reducing production difficulty of the first heat exchange flow channel 10, and reducing the space occupied by the first heat exchange flow channel 10.

In an embodiment of the present application, as shown in FIG. 4, the peripheral battery cells may include a first group of battery cells 202, a second group of battery cells 203, and a third group of battery cells 204 that are adjacently arranged, where a plurality of battery cells 2011 included in the first group of battery cells 202 are stacked along the first direction, a plurality of battery cells 2011 included in the second group of battery cells 203 are stacked along the third direction, a plurality of battery cells 2011 included in the third group of battery cells 204 are stacked along the third direction, and the first direction, the second direction, and the third direction are arranged at included angles with each other; the second heat exchange section 12 includes a second heat exchange portion 121, a third heat exchange portion 122, and a fourth heat exchange portion 125 that are connected; and the second heat exchange portion 121 extends to be in contact with the first group of battery cells 202 for heat exchange, and/or the third heat exchange portion 122 extends to be in contact with the second group of battery cells 203 for heat exchange, and/or the fourth heat exchange portion 125 extends to be in contact with the third group of battery cells 204 for heat exchange.

The plurality of battery cells 2011 in the first group of battery cells 202 are stacked along the first direction, meaning that the first group of battery cells 202 extends along the first direction; and the plurality of battery cells 2011 in the second group of battery cells 203 are stacked along the third direction, meaning that the second group of battery cells 203 extends along the third direction. The stacking herein may refer to stacking a plurality of battery cells 2011 along a thickness direction of the battery cells 2011 or stacking a plurality of battery cells 2011 along a length direction of the battery cells 2011.

The first group of battery cells 202, the second group of battery cells 203, and the third group of battery cells 204 are adjacently arranged, which may mean that a battery cell 2011 at one end of the first group of battery cells 202 in the first direction may be adjacent to a battery cell 2011 in the second group of battery cells 203 or the third group of battery cells 204, or a battery cell 2011 at one end of the second group of battery cells 203 in the third direction may be adjacent to a battery cell 2011 in the first group of battery cells 202, a single battery 1000 cell at one end of the third group of battery cells 204 in the third direction may be adjacent to a battery cell 2011 in the first group of battery cells 202, and the first group of battery cells 202, the second group of battery cells 203, and the third group of battery cells 204 may all be arranged adjacent to the side wall of the battery 1000.

The second heat exchange section 12 is configured to include the second heat exchange portion 121, the third heat exchange portion 122, and the fourth heat exchange portion 125, where the second heat exchange portion 121 may be in contact with the first group of battery cells 202, or the third heat exchange portion 122 may be in contact with the second group of battery cells 203, or the fourth heat exchange portion 125 may be in contact with the third group of battery cells 204; or the second heat exchange portion 121 is in contact with the first group of battery cells 202 and the third heat exchange portion 122 is in contact with the second group of battery cells 203, while the fourth heat exchange portion 125 is not in contact with the third group of battery cells 204.

Alternatively, the second heat exchange portion 121 is in contact with the first group of battery cells 202 and the fourth heat exchange portion 125 is in contact with the second group of battery cells 203, while the third heat exchange portion 122 is not in contact with the second group of battery cells 203; or the second heat exchange portion 121 is in contact with the first group of battery cells 202, the third heat exchange portion 122 is in contact with the second group of battery cells 203, and the fourth heat exchange portion 125 is in contact with the third group of battery cells 204.

The second heat exchange portion 121, the third heat exchange portion 122, and the fourth heat exchange portion 125 in the second heat exchange section 12 may cooperate to form the U-shaped region 120. Specifically, the third heat exchange portion 122 and the fourth heat exchange portion 125 may be respectively connected to two ends of the second heat exchange portion 121, the heat exchange fluid may flow along the third heat exchange portion 122, the second heat exchange portion 121, and the fourth heat exchange portion 125 when flowing in the second heat exchange section 12, and the heat exchange fluid may also flow along the fourth heat exchange portion 125, the second heat exchange portion 121, and the third heat exchange portion 122.

For example, as shown in FIG. 4, the first direction may be a thickness direction of the battery cell 2011, that is, direction X shown in FIG. 4, and the second direction may be a length direction of the battery cell 2011, that is, direction Y shown in the figure. Thus, the plurality of battery cells 2011 included in the first group of battery cells 202 are stacked along the thickness direction of the battery cells 2011, the plurality of battery cells 2011 included in the second group of battery cells 203 are stacked along the length direction of the battery cells 2011, the plurality of battery cells 2011 included in the third group of battery cells 204 are stacked along the length direction of the battery cells 2011, and as shown in FIG. 4, the first group of battery cells 202 is disposed at one end of the battery assembly 200 in direction Y, and the second group of battery cells 203 and the third group of battery cells 204 are respectively disposed at two ends of the battery assembly 200 in direction X.

When the heat exchange member 100 performs heat exchange on the battery assembly 200, for example, when the heat exchange member 100 heats the battery assembly 200, the heat exchange fluid may flow into the second heat exchange section 12 through the fourth heat exchange portion 125 and then heat the first group of battery cells 202 and the second group of battery cells 203 in the peripheral battery cells along the second heat exchange portion 121 and the third heat exchange portion 122; or the heat exchange fluid may flow into the second heat exchange section 12 through the third heat exchange portion 122 and then heat the first group of battery cells 202 and the third group of battery cells 204 along the second heat exchange portion 121 and the fourth heat exchange portion 125; or the heat exchange fluid may heat the third group of battery cells 204, the second group of battery cells 203, and the first group of battery cells 202 along the fourth heat exchange portion 125, the second heat exchange portion 121, and the third heat exchange portion 122; or the heat exchange fluid may heat the second group of battery cells 203, the first group of battery cells 202, and the third group of battery cells 204 along the third heat exchange portion 122, the second heat exchange portion 121, and the fourth heat exchange portion 125.

The heat exchange fluid with a decreased temperature then flows out to the first heat exchange section 11 to heat battery cells 2011 at the middle position of the battery assembly 200; when the heat exchange member 100 cools the battery assembly 200, the heat exchange fluid may first flow into the first heat exchange section 11 to cool the battery cells 2011 at the middle position of the battery assembly 200, and the heat exchange fluid with an increased temperature flows into the second heat exchange section 12 to cool the peripheral battery cells.

In the foregoing embodiment, by providing the second heat exchange portion 121, the third heat exchange portion 122, and the fourth heat exchange portion 125 in the second heat exchange section 12 to be in contact with the first group of battery cells 202, and/or the second group of battery cells 203, and/or the third group of battery cells 204 in the peripheral battery cells for heat exchange, the heat exchange member 100 can stably and reliably cool or heat the peripheral battery cells, allowing the battery assembly 200 to have a good heat exchange effect, thereby ensuring more stable operation of the battery 1000, and when the heat exchange member 100 performs heat exchange operations for the battery assembly 200, making the temperature distribution within the battery 1000 more uniform.

In an example of the present application, as shown in FIG. 4, a plurality of first heat exchange portions 111 may be spaced apart along the third direction, each first heat exchange portion 111 extends linearly along the first direction, and the third direction intersects the first direction at an included angle.

"The third direction intersects the first direction at an included angle" is intended to mean that the third direction and the first direction may be arranged perpendicularly, or may only intersect without being perpendicular. For example, the third direction and the first direction may be arranged at an included angle of 30°, 60°, 80°, 120°, 150°, or 170°. For example, as shown in FIG. 1, the third direction may be a length direction of the battery cell 2011, the first direction may be a thickness direction of the battery cell 2011, and the first heat exchange portions 111 extend along the length direction of the battery cell 2011 and are spaced apart along the thickness direction of the battery cell 2011, so that the plurality of first heat exchange portions 111 are connected in a bent manner to form an S-shaped heat exchange flow channel, which can enable heat exchange for the plurality of battery cells 2011.

In the foregoing embodiment, by configuring the first heat exchange portion 111 to extend linearly along the first direction, production difficulty of the first heat exchange portion 111 can be reduced, thereby reducing production complexity of the first heat exchange flow channel 10, and a straight tube can also increase a flow rate of the heat exchange fluid, thereby improving the heat exchange effect of the first heat exchange flow channel 10.

In an example of the present application, as shown in FIG. 4, the third heat exchange portion 122 and the fourth heat exchange portion 125 may extend along the third direction, and the first heat exchange portion 111 and the second heat exchange portion 121 may both extend along the first direction.

Further, the third heat exchange portion 122 and the fourth heat exchange portion 125 may both extend linearly along the third direction, and the first heat exchange portion 111 and the second heat exchange portion 121 may both extend linearly along the first direction. Such a linear structure is simple, convenient for production, and convenient for arrangement, thereby further reducing production complexity and production costs of the first heat exchange flow channel 10.

In the foregoing embodiment, by configuring the third heat exchange portion 122 and the fourth heat exchange portion 125 to extend along the third direction and the first heat exchange portion 111 and the second heat exchange portion 121 to both extend along the first direction, meandering arrangement of the first heat exchange flow channel 10 can be facilitated, thereby reducing production difficulty of the first heat exchange flow channel 10 and reducing production costs of the heat exchange member 100. Meanwhile, such arrangement also makes a structure of the first heat exchange flow channel more compact and reliable.

In an example of the present application, as shown in FIG. 9, the first heat exchange portion 111, the third heat exchange portion 122, and the fourth heat exchange portion 125 may all extend along the first direction, and the second heat exchange portion 121 may extend along the third direction.

For example, as shown in FIG. 9, the third direction is a length direction of the battery cell 2011, that is, direction Y shown in the figure, and the first direction is a thickness direction of the battery cell 2011, that is, direction X shown in the figure. Thus, the first heat exchange portion 111, the third heat exchange portion 122, and the fourth heat exchange portion 125 extend along the thickness direction of the battery cell 2011, the third heat exchange portion 122 and the fourth heat exchange portion 125 are respectively disposed on two sides of the battery 1000 in direction Y for heat exchange with the battery assembly 200 close to a side of the battery 1000, and the second heat exchange portion 121 extends along the length direction of the battery cell 2011 and is disposed at one end of the battery 1000 in direction X for heat exchange with battery cells 2011 at one end of the battery 1000 in direction X.

Further, the first heat exchange portion 111, the third heat exchange portion 122, and the fourth heat exchange portion 125 extend linearly along the first direction, and the second heat exchange portion 121 extends linearly along the third direction. Such a linear structure is simple, convenient for production, and convenient for arrangement, thereby further reducing production complexity and production costs of the first heat exchange flow channel 10.

In the foregoing embodiment, by configuring the first heat exchange portion 111, the third heat exchange portion 122, and the fourth heat exchange portion 125 to extend along the first direction and the second heat exchange portion 121 to extend along the third direction, meandering arrangement of the first heat exchange flow channel 10 can be facilitated, thereby reducing production difficulty of the first heat exchange flow channel 10 and reducing production costs of the heat exchange member 100.

In an example of the present application, as shown in FIG. 4, the third heat exchange portion 122 and the fourth heat exchange portion 125 may both extend along the third direction, and in the third direction, a length of the fourth heat exchange portion 125 may be less than or equal to a length of the third heat exchange portion 122.

When the length of the fourth heat exchange portion 125125 is equal to the length of the third heat exchange portion 122, the fourth heat exchange portion 125, the second heat exchange portion 121, and the third heat exchange portion 122 are sequentially connected to form a standard U-shaped flow channel; when the length of the fourth heat exchange portion 125 is less than the length of the third heat exchange portion 122, it can facilitate avoiding other flow channel sections (for example, avoiding the first inlet/outlet section 15 shown in FIG. 4), other heat exchange flow channels, or other components, thereby facilitating layout of the first heat exchange flow channel 10. For example, as shown in FIG. 4, the length of the fourth heat exchange portion 125 in the figure is denoted as b1, and the length of the third heat exchange portion 122 is denoted as a1, then b1 may be less than or equal to a1.

In the foregoing embodiment, by setting the length of the fourth heat exchange portion 125 to be less than or equal to the length of the third heat exchange portion 122, dimensions of two ends of the U-shaped region 120 can be made close to each other, which helps to control a temperature difference of battery cells 2011 at two ends of the battery assembly 200 in the second direction and improve the temperature uniformity of the battery assembly 200. By setting the length of the fourth heat exchange portion 125 to be less than the length of the third heat exchange portion 122 in the first direction, the fourth heat exchange portion 125 can be conveniently connected to the current collector 20, and the fourth heat exchange portion 125 can also avoid other flow channel sections, other flow channel structures, or other components of the first heat exchange flow channel 10.

In an example of the present application, as shown in FIGS. 4 and 9, the first heat exchange portion 111 and the third heat exchange portion 122 may extend along the first direction, the second heat exchange portion 121 extends along the third direction, and in the first direction, a length of the third heat exchange portion 122 is greater than a length of the first heat exchange portion 111. For example, in FIG. 9, the length of the first heat exchange portion 111 is denoted as c1, and the length of the third heat exchange portion 122 is denoted as a2, then a2 is greater than c1.

In the foregoing embodiment, by setting the length of the third heat exchange portion 122 to be greater than the length of the first heat exchange portion 111 in the first direction, the first heat exchange section 11 can be covered in the U-shaped region 120 of the second heat exchange section 12. This increases the length of the third heat exchange portion 122, increases the heat exchange area of the third heat exchange portion 122, enables the second heat exchange section 12 to enclose a larger U-shaped region 120, and improves the heat exchange effect of the heat exchange member 100. By setting the length a2 of the third heat exchange portion 122 to be equal to the length c1 of the first heat exchange portion 111, length dimensions of the third heat exchange portion 122 and the plurality of first heat exchange portions 111 extending along the first direction of the first heat exchange flow channel 10 are made close to each other, which helps to control a temperature difference of the battery assembly 200 along the first direction and improve the temperature uniformity of the battery assembly 200.

In an example of the present application, as shown in FIG. 4, the fourth heat exchange portion 125 may extend along the third direction and extend to a position close to one of the plurality of first heat exchange portions 111 that is farthest from the second heat exchange portion 121.

Specifically, the fourth heat exchange portion 125 extends along the third direction, one end of the fourth heat exchange portion 125 is connected to the second heat exchange portion 121, and the other end of the fourth heat exchange portion 125 extends to a position close to one of the plurality of first heat exchange portions 111 that is farthest from the second heat exchange portion 121, to be specific, the other end of the fourth heat exchange portion 125 extends to be flush with the first heat exchange portion 111 farthest from the second heat exchange portion 121, or the other end of the fourth heat exchange portion 125 extends to be close to the first heat exchange portion 111 farthest from the second heat exchange portion 121, or the other end of the fourth heat exchange portion 125 extends beyond the first heat exchange portion 111 farthest from the second heat exchange portion 121.

Thus, the length of the fourth heat exchange portion 125 can be increased, the heat exchange area between the fourth heat exchange portion 125 and the battery assembly 200 can be increased, the heat exchange effect of the heat exchange member 100 can be further improved, and the layout of the first heat exchange flow channel 10 can also be facilitated.

In the foregoing embodiment, by configuring the fourth heat exchange portion 125 to extend along the third direction and extend to a position close to one of the plurality of first heat exchange portions 111 that is farthest from the second heat exchange portion 121, the heat exchange area of the fourth heat exchange portion 125 can be increased, enabling the first heat exchange flow channel 10 to perform heat exchange for the plurality of battery cells 2011 correspondingly arranged with the first heat exchange flow channel 10 as much as possible, improving the comprehensiveness of heat exchange of the first heat exchange flow channel 10, thereby improving the heat exchange effect of the battery 1000.

In some examples of the present application, as shown in FIG. 4, the second heat exchange section 12 may further include a second bending portion 123 and a third bending portion 124, where both the second bending portion 123 and the third bending portion 124 are arcuate, the second bending portion 123 is connected between a first end of the third heat exchange portion 122 and the second heat exchange portion 121, and the third bending portion 124 is connected between a second end of the third heat exchange portion 122 and the first heat exchange portion 111.

Specifically, the second bending portion 123 is configured to connect the second heat exchange portion 121 and the third heat exchange portion 122, the third bending portion 124 is configured to connect the third heat exchange portion 122 and the first heat exchange portion 111, the second bending portion 123 is arcuate, to be specific, the second bending portion 123 extends along an arc, and fluid flow directions at two ends of the second bending portion 123 form a certain included angle; and the third bending portion 124 is arcuate, to be specific, the third bending portion 124 extends along an arc, and fluid flow directions at two ends of the third bending portion 124 have a certain included angle.

Thus, the second bending portion 123 and the third bending portion 124 can change a flow direction of the heat exchange fluid, enabling the second heat exchange section 12 to extend in a preset region and be used for heat exchange with the battery assembly 200. Meanwhile, the arcuate second bending portion 123 and third bending portion 124 can reduce the flow resistance of the fluid and reduce the pressure drop, thereby increasing the flow rate of the heat exchange fluid and further increasing the heat exchange efficiency of the first heat exchange flow channel 10. In addition, by providing the second bending portion 123 and the third bending portion 124, meandering arrangement of the first heat exchange flow channel 10 can also be achieved. This can increase the heat exchange area of the first heat exchange flow channel 10 and make its structure be more compact, which is more conducive to achieving a miniaturized design of the battery and improving the volumetric energy density of the battery 1000.

In the foregoing embodiment, by providing the second bending portion 123 and the third bending portion 124, the fluid flow direction in the first heat exchange flow channel 10 can be changed, achieving the smooth transitional connection between the third heat exchange portion 122 and the second heat exchange portion 121 and the smooth transitional connection between the third heat exchange portion 122 and the first heat exchange portion 111. Thus, the second bending portion 123 and the third bending portion 124 can reduce the flow resistance of the fluid flow and decrease the pressure drop, thereby increasing the flow rate of the heat exchange fluid and further increasing the heat exchange efficiency of the first heat exchange flow channel 10.

In some specific embodiments of the present application, as shown in FIG. 4, the second bending portion 123 may be quarter-arc shaped.

That is, the second bending portion 123 may extend along a semicircular arc. Specifically, the second bending portion 123 may extend along a quarter-circular arc protruding away from the first heat exchange section 11. An included angle between an inlet and an outlet of the second bending portion 123 may be 90°, and the second bending portion 123 is similar to a 90° elbow in piping materials, and can change a flow channel direction, enabling the flow direction of the fluid to change 90° after the heat exchange fluid passes through the second bending portion 123, for example, enabling the fluid flow direction to change from direction X to direction Y or from direction Y to direction X. The second bending portion 123 connects the second heat exchange portion 121 and the third heat exchange portion 122, and in this case, the second heat exchange portion 121 and the third heat exchange portion 122 are perpendicular to each other, enabling the layout of the second heat exchange section 12 to be more regular and the flow channel of the second heat exchange section 12 to be better adapted to the layout of the battery assembly 200, thereby improving the heat exchange effect of the second heat exchange section 12 on the battery assembly 200.

In other embodiments, a bending degree of the second bending portion 123 may also be adjusted as required, for example, may be 50°, 80°, 120°, 135°, 150°, or the like, which is not limited in the embodiments of the present application.

In the foregoing embodiment, by configuring the second bending portion 123 to be quarter-arc shaped, the flow direction of the fluid can be changed from an original flow direction to a direction perpendicular to the original flow direction after the fluid passes through the second bending portion 123. In addition, the arc shape can also reduce the flow resistance of the fluid, enabling the fluid to flow smoothly in the second bending portion 123, and effectively preventing a decrease in the heat exchange efficiency caused by excessively slow fluid flow.

In some specific embodiments of the present application, as shown in FIG. 4, the third bending portion 124 may be quarter-arc shaped.

That is, the third bending portion 124 may extend along a semicircular arc. Specifically, the third bending portion 124 may extend along a quarter-circular arc protruding away from the first heat exchange section 11. It can be understood that an included angle between an inlet and an outlet of the third bending portion 124 is 90°, and the third bending portion 124 is similar to a 90° elbow in piping materials, and can change a flow channel direction, enabling the flow direction of the fluid to change 90° after the heat exchange fluid passes through the third bending portion 124, for example, enabling the fluid flow direction to change from direction X to direction Y or from direction Y to direction X. The third bending portion 124 connects the third heat exchange portion 122 and the first heat exchange portion 111, and in this case, the third heat exchange portion 122 and the first heat exchange portion 111 are perpendicular to each other, enabling the layout of the first heat exchange flow channel 10 to be more regular and the first heat exchange flow channel 10 to be better adapted to the layout of the battery assembly 200, thereby improving the heat exchange effect of the first heat exchange flow channel on the battery assembly 200.

In other embodiments, a bending degree of the third bending portion 124 may also be adjusted as required, for example, may be 50°, 80°, 120°, 135°, 150°, or the like, which is not limited in the embodiments of the present application.

In the foregoing embodiment, by configuring the third bending portion 124 to be quarter-arc shaped, the flow direction of the fluid can be changed from an original flow direction to a direction perpendicular to the original flow direction after the heat exchange fluid passes through the third bending portion 124. In addition, the arcuate third bending portion 124 can also reduce the flow resistance of the fluid, enabling the heat exchange fluid to flow smoothly in the third bending portion 124, and effectively preventing a decrease in heat exchange efficiency caused by excessively slow fluid flow.

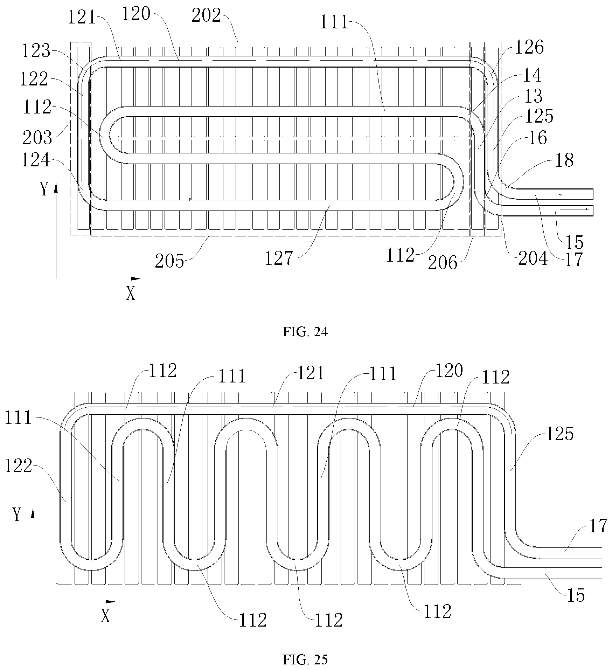

In some examples of the present application, as shown in FIG. 10 and FIG. 24, the peripheral battery cells may further include a fourth group of battery cells 205, a plurality of battery cells 2011 included in the fourth group of battery cells 205 are arranged along the first direction, the second heat exchange section 12 further includes a fifth heat exchange portion 127, the fifth heat exchange portion 127 closes at least a portion of an opening of the U-shaped region 120 formed by the second heat exchange portion 121, the third heat exchange portion 122, and the fourth heat exchange portion 125, and the fifth heat exchange portion 127 extends to be in contact with the fourth group of battery cells 205 so as to perform heat exchange.

The peripheral battery cells further include the fourth group of battery cells 205. Specifically, the fourth group of battery cells 205 may be spaced apart from the first group of battery cells 202 in the third direction, the fourth group of battery cells 205 is disposed on one side of the battery assembly 200 close to the side wall of the battery 1000, the fifth heat exchange portion 127 of the second heat exchange section 12 is in contact with the fourth group of battery cells 205, and when heat exchange fluid flows along the second heat exchange section 12, the heat exchange fluid performs heat exchange with the fourth group of battery cells 205 along the fifth heat exchange portion 127.

When the heat exchange member 100 performs heat exchange for the battery assembly 200, the heat exchange fluid may perform heat exchange operations along the second heat exchange section 12 for battery cells 2011 disposed close to a side wall of the battery 1000 in the first direction and battery cells 2011 disposed close to a side wall of the battery 1000 in the third direction in the battery assembly 200, and then heat exchange fluid flows into the first heat exchange section 11 to perform heat exchange operations for battery cells 2011 located on an inner side of the peripheral battery cells in the battery assembly 200, or the heat exchange fluid flows in an opposite direction for heat exchange operations.

In the foregoing embodiment, by providing the fifth heat exchange portion 127 in the second heat exchange section 12 to be in contact with the fourth group of battery cells 205, the second heat exchange section 12 is enabled to perform heat exchange for four peripheral sides of the battery assembly 200. Thus, heat exchange can be achieved on the four peripheral sides of the battery assembly 200 using only the second heat exchange section 12 of one first heat exchange flow channel 10, thereby improving a heat exchange effect on the four peripheral sides of the battery assembly 200 and enhancing temperature uniformity of the battery assembly 200.

In an example of the present application, as shown in FIG. 10, the fifth heat exchange portion 127 may be disposed opposite the second heat exchange portion 121, the fifth heat exchange portion 127 is connected between a second end of the third heat exchange portion 122 and the first heat exchange section 11 and is connected to the third heat exchange portion 122 at an included angle and is connected to the first heat exchange section 11 at an included angle.

It should be noted that in the foregoing embodiment, the second heat exchange portion 121 is disposed on one side of the first heat exchange section 11 in the third direction (for example, one side of the plurality of first heat exchange portions 111 shown in FIG. 10 away from a coordinate origin along direction Y), and the fifth heat exchange portion 127 is disposed opposite the second heat exchange portion 121, meaning that the fifth heat exchange portion 127 is disposed on the other side of the first heat exchange section 11 in the third direction (for example, one side of the plurality of first heat exchange portions 111 shown in FIG. 10 close to the coordinate origin along direction Y), the third heat exchange portion 122 is disposed on one side of the first heat exchange section 11 in the first direction (for example, one side of the plurality of first heat exchange portions 111 shown in FIG. 10 close to the coordinate origin along direction X), and two ends of the third heat exchange portion 122 in direction Yare respectively connected to the second heat exchange portion 121 and the fifth heat exchange portion 127.

The fifth heat exchange portion 127 is connected to the third heat exchange portion 122 at an included angle. For example, the fifth heat exchange portion 127 may be connected to the third heat exchange portion 122 and arranged at an included angle greater than 0° and less than or equal to 180°. For example, the included angle between the fifth heat exchange portion 127 and the third heat exchange portion 122 is 30°, 45°, 60°, 90°, 120°, 135°, 150°, or the like. The fifth heat exchange portion 127 is connected to the first heat exchange section 11 at an included angle. For example, the fifth heat exchange portion 127 may be connected to the first heat exchange section 11 and arranged at an included angle greater than 0° and less than or equal to 180°. For example, the included angle between the fifth heat exchange portion 127 and the third heat exchange portion 122 is 30°, 45°, 60°, 90°, 120°, 135°, 150°, or the like.

Further, the fifth heat exchange portion 127 and the third heat exchange portion 122 may be connected via an arc segment, for example, the fifth heat exchange portion 127 and the third heat exchange portion 122 are connected via a quarter-circular arc.

Further, the fifth heat exchange portion 127 and the first heat exchange section 11 may be connected via an arc segment, for example, the fifth heat exchange portion 127 and the first heat exchange section 11 may be connected via a semicircular arc.

In the foregoing embodiment, by disposing the fifth heat exchange portion 127 opposite the second heat exchange portion 121 and connecting the fifth heat exchange portion 127 between the third heat exchange portion 122 and the first heat exchange section 11, the structure of the first heat exchange flow channel 10 can be further optimized according to the heat exchange requirements of the battery assembly 200.

In an example of the present application, as shown in FIG. 12, the fifth heat exchange portion 127 may be disposed opposite the second heat exchange portion 121, one end of the fifth heat exchange portion 127 is connected to one end of the fourth heat exchange portion 125 away from the second heat exchange portion 121, and the fifth heat exchange portion 127 is connected to the fourth heat exchange portion 125 at an included angle.

The fifth heat exchange portion 127 is connected to the fourth heat exchange portion 125 at an included angle. For example, the fifth heat exchange portion 127 may be connected to the fourth heat exchange portion 125 and arranged at an included angle greater than 0° and less than or equal to 180°. For example, an included angle between the fifth heat exchange portion 127 and the fourth heat exchange portion 125 is 30°, 45°, 60°, 90°, 120°, 135°, 150°, or the like.

For example, referring to FIG. 13, the second heat exchange portion 121 and the fifth heat exchange portion 127 are respectively disposed on two sides of the first heat exchange section 11 in direction X, the third heat exchange portion 122 and the fourth heat exchange portion 125 are respectively disposed on two sides of the first heat exchange section 11 in direction Y, the fifth heat exchange portion 127 extends along direction Y, one end of the fifth heat exchange portion 127 close to the coordinate origin in direction Y is connected to the fourth heat exchange portion 125, and one end of the fifth heat exchange portion 127 away from the coordinate origin in direction Y extends toward the third heat exchange section 13.

The fifth heat exchange portion 127 and the fourth heat exchange portion 125 may be connected via an arc, for example, the fifth heat exchange portion 127 and the fourth heat exchange portion 125 may be connected via a quarter-circular arc.

In the foregoing embodiment, by disposing the fifth heat exchange portion 127 opposite the second heat exchange portion 121 and connecting the fifth heat exchange portion 127 to the fourth heat exchange portion 125, the structure of the first heat exchange flow channel 10 can be further optimized according to the heat exchange requirements of the battery assembly 200.

In the foregoing embodiment, by disposing the fifth heat exchange portion 127 opposite the second heat exchange portion 121 and connecting the fifth heat exchange portion 127 between a second end of the third heat exchange portion 122 and the first heat exchange section 11, or connecting one end of the fifth heat exchange portion 127 to one end of the fourth heat exchange portion 125 away from the second heat exchange portion 121, various arrangements of the heat exchange flow channels can be achieved, thereby meeting the heat exchange requirements of the various batteries 1000.

In some examples of the present application, as shown in FIG. 4, the first heat exchange section 11 may include a plurality of first heat exchange portions 111, the plurality of first heat exchange portions 111 are spaced apart and sequentially bent and connected, at least one battery unit 201 located at two ends along the third direction is the first group of battery cells 202, and the second heat exchange portion 121 and at least one first heat exchange portion 111 of the first heat exchange section 11 are jointly in contact with the first group of battery cells 202 for heat exchange.

The first heat exchange section 11 includes a plurality of first heat exchange portions 111. For example, the first heat exchange portions 111 in the first heat exchange section 11 may be provided in two, three, four, five, six, or the like, the plurality of first heat exchange portions 111 are sequentially bent and connected, that is, the plurality of first heat exchange portions 111 are sequentially connected, and a connection position between two connected first heat exchange portions 111 is bent. For example, two connected first heat exchange portions 111 may be bent along a fold line or may be bent along an arc.

It should be noted that shapes of the first heat exchange portions 111 may be various, for example, the first heat exchange portions 111 may be linear or arcuate. Extension directions of the first heat exchange portions 111 may also be various, for example, may extend along the length direction or thickness direction of the battery cell 2011. Thus, the plurality of first heat exchange portions 111 are sequentially bent and connected, enabling the first heat exchange section 11 to form heat exchange flow channels in shapes such as S-shape, zigzag shape, V-shape, or the like.

The first heat exchange portions 111 may be spaced apart in the first direction and sequentially bent and connected, or the first heat exchange portions 111 may be spaced apart along the third direction and sequentially connect, and the first heat exchange portions 111 may be in contact with a plurality of battery units 201 arranged along the first direction in the battery assembly 200 for heat exchange, and when the heat exchange tube performs heat exchange with the battery assembly 200, the heat exchange fluid in the first heat exchange flow channel 10 may flow along the plurality of first heat exchange portions 111 in the first heat exchange section 11, the heat exchange fluid may sequentially heat or cool battery units 201 from an outermost battery unit 201 toward an inner battery unit 201 of the battery assembly 200 along the third direction, or the heat exchange fluid may heat or cool battery units 201 from an inner battery unit 201 toward an outermost battery unit 201 of the battery assembly 200 along the first direction.

There may be one or more battery units 201 at two ends of the battery assembly 200 in the third direction forming the first group of battery cells 202, and there may be one or more first heat exchange portions 111 in the first heat exchange section 11 being in contact with the first group of battery cells 202. For example, one first heat exchange portion 111 and the second heat exchange portion 121 are jointly in contact with the first group of battery cells 202, or two, three, four, or the like first heat exchange portions 111 and one second heat exchange portion 121 are jointly in contact with the first group of battery cells 202.

In the foregoing embodiment, by providing a plurality of first heat exchange portions 111, the heat exchange area of the first heat exchange section 11 can be increased, and in turn the heat exchange area of the first heat exchange flow channel 10 can be increased, thereby improving the heat exchange effect of the first heat exchange flow channel 10. In addition, since inner battery cells 2011 are wrapped by peripheral battery cells 2011 and temperature differences between the inner battery cells 2011 are small, providing a plurality of first heat exchange portions 111 can ensure the overall heat exchange effect while ensuring small temperature differences between the inner and peripheral battery cells 2011.

In some specific embodiments of the present application, as shown in FIG. 4, the first heat exchange section 11 may further include: a first bending portion 112, where the first bending portion 112 is arcuate and bent to be connected between two adjacent first heat exchange portions 111.

The first bending portion 112 is arcuate, that is, the first bending portion 112 extends along an arc, and fluid flow directions at two ends of the first bending portion 112 form a certain included angle. Thus, the first bending portion 112 can change the flow direction of the fluid, and the two connected first heat exchange portions 111 can extend in a preset region, thereby increasing the heat exchange area of the first heat exchange section 11 and improving the heat exchange efficiency of the first heat exchange section 11. Meanwhile, the first bending portion 112 is arc-shaped, where the arc-shaped bending structure can reduce the flow resistance of the fluid and reduce the pressure drop, thereby increasing the flow rate of the fluid and further increasing the heat exchange efficiency of the first heat exchange section 11.

Further, the first bending portion 112 may be provided in one, two, three, or more. The first bending portion 112 can allow meandering arrangement of the first heat exchange flow section, thereby increasing the heat exchange area of the first heat exchange flow channel 10 and improving the heat exchange efficiency of the first heat exchange flow channel 10.

In the foregoing embodiment, by providing the first bending portion 112, the fluid flow direction inside the first heat exchange section 11 can be changed, achieving smooth transitional connection between two first heat exchange portions 111 and meandering arrangement of the first heat exchange flow channel 10. In this way, the contact area between a single battery cell 2011 and the first heat exchange flow channel 10 can be increased, and in turn the heat exchange area can be increased and the heat exchange efficiency of the first heat exchange flow channel 10 can be improved. Meanwhile, the arcuate first bending portion 112 can also reduce the flow resistance of the fluid and reduce the pressure drop, thereby increasing the flow rate of the fluid and further increasing the heat exchange efficiency of the first heat exchange section 11.

In some specific examples of the present application, as shown in FIG. 4, the first bending portion 112 may be semicircular arc shaped.

That is, the first bending portion 112 may extend along a semicircular arc. Specifically, the first bending portion 112 may extend along a semicircular arc protruding in a direction away from two first heat exchange portions 111 connected to the first bending portion 112. Specifically, an included angle between an inlet and an outlet of the first bending portion 112 is 180°, and flow directions at positions of the outlet and the inlet of the first bending portion 112 are opposite. In this way, two adjacent first heat exchange portions 111 are closer, making the overall structure of the first heat exchange section 11 more compact and reliable. The first bending portion 112 is configured to connect two first heat exchange portions 111 that are parallel and spaced apart. In other embodiments, a bending degree of the first bending portion 112 may also be adjusted as required, for example, may be 150°, 135°, or the like, which is not limited in the embodiments of the present application.

Two first heat exchange portions 111 form a "U"-shaped heat exchange channel through the first bending portion 112, and the first heat exchange section 11 may include one or more "U"-shaped heat exchange channels, where the plurality of "U"-shaped heat exchange channels are sequentially connected, and those connected "U"-shaped heat exchange channels are connected through the first bending portion 112.

In the foregoing embodiment, by configuring the first bending portion 112 to be semicircular arc shaped, the design diversity of the heat exchange flow channel can be increased, thereby improving the adaptability of the heat exchange member 100. Meanwhile, a semicircular arc structure is relatively simple, thereby reducing the production difficulty of the heat exchange member 100 and increasing the production speed of the heat exchange member 100.

In an example of the present application, as shown in FIG. 25, the plurality of first heat exchange portions 111 of the first heat exchange section 11 may extend along the third direction and be sequentially connected in the first direction.

The first heat exchange portion 111 extends along the third direction. Specifically, the plurality of battery cells 2011 in the battery unit 201 may be stacked along the first direction, and the battery cells 2011 extend along the third direction. Thus, an extension direction of the first heat exchange portion 111 may be the same as an extension direction of the battery cells 2011, and when the heat exchange tube performs heat exchange with the battery cell 2011, the heat exchange fluid may cool the battery cells 2011 in their extension direction along the first heat exchange portion 111.

In the foregoing embodiment, by configuring the plurality of first heat exchange portions 111 of the first heat exchange section 11 to extend along the third direction and be sequentially connected in the first direction, a single first heat exchange portion 111 and a single battery cell 2011 can have a large heat exchange area, thereby allowing the heat exchange member 100 to conveniently and reliably meet the heat exchange area requirements of the battery assembly 200 when arranged on the battery assembly 200, and to some extent reducing the arrangement difficulty of the first heat exchange section 11.

In an example of the present application, as shown in FIG. 4, the plurality of first heat exchange portions 111 of the first heat exchange section 11 may extend along the first direction and be sequentially connected along the third direction.

The first heat exchange portion 111 extends along the first direction, the first heat exchange portion 111 may be bent and extend along the first direction, or the first heat exchange portion 111 may extend linearly along the first direction. As shown in FIG. 4, the plurality of battery cells 2011 are stacked in the first direction, and the battery cells 2011 extend along the first direction. Thus, one first heat exchange portion 111 may span the plurality of battery cells 2011 in the first direction, the first heat exchange portion 111 may perform heat exchange with the plurality of battery cells 2011, and a plurality of first heat exchange portions 111 may cooperate to meet required heat exchange area of a single battery cell 2011.

In the foregoing embodiment, by configuring a plurality of first heat exchange portions 111 to extend along the first direction and be sequentially connected along the third direction, the plurality of first heat exchange portions 111 may cooperate to perform heat exchange for one battery cell 2011 to meet the required heat exchange area, thereby allowing the first heat exchange section 11 to have fewer bends when arranged in a bent manner, thereby providing lower flow resistance in the first heat exchange section 11, smoother flow of the heat exchange fluid in the first heat exchange section 11, and reduced pressure drop, thereby allowing the heat exchange member 100 to perform heat exchange operations for the battery assembly 200 more effectively.

Referring to FIG. 4 and FIG. 25, in FIG. 4, the first heat exchange portion 111 extends along the first direction, that is, the first heat exchange portion extends along the thickness direction of the battery cell 2011, and in FIG. 25, the first heat exchange portion 111 extends along the third direction, that is, the first heat exchange portion extends along the length direction of the battery cell 2011. When a length of the first heat exchange portion 111 is constant, the first heat exchange portion 111 extending along the first direction can perform heat exchange for more battery cells 2011 than the first heat exchange portion 111 extending along the third direction; when the number of bends of the first heat exchange section 11 is constant, two adjacent first heat exchange portions 111 of the first heat exchange portion 111 extending along the first direction are closer than the first heat exchange portion 111 extending along the third direction, thereby achieving a better heat exchange effect; when it is limited that one battery cell 2011 performs heat exchange with two heat exchange portions, the number of first heat exchange portions 111 extending along the first direction and arranged along the third direction used is relatively lower than the number of first heat exchange portions 111 extending along the third direction and spaced apart along the first direction, in other words, fewer bends are required, thereby providing low forming difficulty of the first heat exchange portion 11 and convenient processing.

Thus, the first heat exchange portion 111 extending along the first direction can reduce the number of first heat exchange portions 111 while meeting the heat exchange effect, thereby reducing the number of bends of the first heat exchange flow channel 10, reducing the pressure drop of the heat exchange fluid in the first heat exchange flow channel 10, improving the heat exchange efficiency, reducing the forming difficulty and production costs of the heat exchange member 100, and increasing the production speed of the heat exchange member 100.

In an example of the present application, as shown in FIG. 4, the plurality of first heat exchange portions 111 of the first heat exchange section 11 may extend along the first direction and be sequentially connected along the third direction, a first end of the third heat exchange portion 122 is connected to the second heat exchange portion 121 at an included angle, a second end of the third heat exchange portion 122 is connected to one of the plurality of first heat exchange portions 111 that is farthest from the second heat exchange portion 121 along the third direction, and the second end of the third heat exchange portion 122 is connected to the first heat exchange section 11 at an included angle.

The first end of the third heat exchange portion 122 is connected to the second heat exchange portion 121 at an included angle, for example, the first end may be connected to the second heat exchange portion 121 at an acute angle, an obtuse angle, or a right angle, the included angle between the first end of the third heat exchange portion 122 and the second heat exchange portion 121 may be reasonably set according to the arrangement requirements of the third heat exchange portion 122 and the second heat exchange portion 121 in the battery 1000. Similarly, the second end may also be connected to the first heat exchange section 11 at an acute angle, an obtuse angle, or a right angle, and the included angle between the second end of the third heat exchange portion 122 and the first heat exchange section 11 may be reasonably set according to the arrangement requirements of the third heat exchange portion 122 and the first heat exchange section 11 in the battery 1000.

Since the second heat exchange portion 121 is in contact with the first group of battery cells 202, one of the first heat exchange portions 111 that is farthest from the second heat exchange portion 121 is one of the first heat exchange portions 111 that is farthest from the first group of battery cells 202, and the one of the first heat exchange portions 111 that is farthest from the second heat exchange portion 121 may be in contact with a battery unit 201 that is innermost in the third direction in the battery unit 201.

When the heat exchange member 100 performs heat exchange operations, for example, when the heat exchange member 100 heats the battery assembly 200, the heat exchange fluid may heat the first group of battery cells 202 along the second heat exchange portion 121 of the second heat exchange section 12, the heat exchange fluid then flows to the third heat exchange portion 122 to heat the second group of battery cells 203, next, the heat exchange fluid flows to the first heat exchange portion 111 to heat a plurality of battery cells 2011 in an inner battery unit 201, and the heat exchange fluid continues to flow along the plurality of first heat exchange portions 111 in the first heat exchange section 11 to heat the battery cells 2011 from inside to outside along the third direction. When the heat exchange member 100 cools and lowers the temperature of the battery assembly 200, the heat exchange fluid may flow along the first heat exchange flow channel 10 in an opposite direction.

In the foregoing embodiment, by connecting the third heat exchange portion 122 to the second heat exchange portion 121 at an included angle and connecting the third heat exchange portion 122 to the first heat exchange section 11 at an included angle, the second heat exchange section 12 and the first heat exchange section 11 can be conveniently arranged during assembly in the battery 1000. This meets the arrangement requirements of the heat exchange member 100 and the battery assembly 200, featuring a simple structure and ease of use.

Connecting a first section of the third heat exchange portion 122 to the second heat exchange portion 121 and connecting a second end to one first heat exchange portion 111 that is farthest from the second heat exchange portion 121 along the third direction allows the heat exchange member 100 to be well adapted to the heat dissipation conditions at different positions of the battery assembly 200 when performing heat exchange operations, thereby allowing the battery 1000 to achieve excellent heat exchange effect.

It can be understood that when the heat exchange fluid heats the peripheral battery cells in the battery assembly 200, the peripheral battery cells dissipate heat quickly. Therefore, when the heat exchange fluid flows from the second heat exchange portion 121 to the third heat exchange portion 122 for heating operations, the heat exchange fluid needs to be at a high temperature to meet the heating requirements of the peripheral battery cells and subsequent heating requirements of other positions in the battery assembly 200. Since the heat exchange fluid in the second heat exchange portion 121 is at a high temperature, while it can fully meet the heating requirements of the peripheral battery cells, it is prone to excessive heating when cooperating with other heat exchange portions for heating. This leads to excessively high temperatures of the peripheral battery cells, which in turn results in uneven temperature distribution within the battery 1000.

In the foregoing embodiment, by connecting the third heat exchange portion 122 to the second heat exchange portion 121 and one first heat exchange portion 111 away from the second heat exchange portion 121, the heat exchange fluid can well heat the first group of battery cells 202 and the second group of battery cells 203202 along the second heat exchange portion 121 and the third heat exchange portion 122, enabling the peripheral battery cells to achieve good heating effects. Next, the heat exchange fluid with a decreased temperature flows from the first heat exchange portion 111 away from the second heat exchange portion 121 to the first heat exchange portion 111 close to the second heat exchange portion 121, allowing the first heat exchange portion 111 close to the second heat exchange portion 121 to be a portion with a lowest temperature of the heat exchange fluid, thereby better cooperating with the second heat exchange portion 121 for heating operations. This reduces a possibility of excessive heating at the second heat exchange portion 121 causing high temperature, thereby achieving a better heating effect of the heat exchange member 100 on the battery 1000 and more uniform temperature distribution within the battery 1000. Similarly, when the heat exchange member 100 cools and lowers the temperature of the battery assembly 200, the second heat exchange portion 121 can also cooperate with the first heat exchange portion 111 close to the second heat exchange portion 121 to achieve a good cooling effect.

In the foregoing embodiment, by connecting the third heat exchange portion 122 to the second heat exchange portion 121 and one first heat exchange portion 111 away from the second heat exchange portion 121, the heat exchange member 100 can achieve a better heat exchange effect when performing heat exchange for the battery assembly 200, making the temperature distribution within the battery 1000 more uniform, thereby allowing the battery 1000 to operate stably and allowing the battery 1000 to maintain good battery performance.

In some specific embodiments of the present application, as shown in FIG. 4, the first heat exchange flow channel 10 may further include a third heat exchange section 13, where the third heat exchange section 13 communicates with one end of the first heat exchange section 11 away from the second heat exchange section 12 and is connected to the first heat exchange section 11 at an included angle, the third heat exchange section 13 is disposed on one side of the first heat exchange section 11 facing away from the third heat exchange portion 122 and is connected to one of the plurality of first heat exchange portions 111 that is closest to the second heat exchange portion 121 along the third direction.

The third heat exchange section 13 is connected to the first heat exchange section 11 at an included angle, for example, the third heat exchange section 13 may be connected to the first heat exchange section 11 at an acute angle, an obtuse angle, or a right angle. The third heat exchange section 13 is connected to the first heat exchange section 11 and arranged at an included angle greater than 0° and less than or equal to 180°. For example, the included angle between the third heat exchange section 13 and the first heat exchange section 11 is 30°, 45°, 60°, 90°, 120°, 135°, 150°, or the like. The third heat exchange section 13 communicates with one end of the first heat exchange section 11 away from the second heat exchange section 12, where "away from" herein may may mean being distant from the second heat exchange section 12 in an extension direction of the first heat exchange section 11, the second heat exchange section 12 is connected to one end of the first heat exchange section 11 through the third heat exchange portion 122, and the third heat exchange section 13 is connected to the other end of the first heat exchange section 11.

When the heat exchange member 100 performs heating operations, the heat exchange fluid may sequentially flow along the second heat exchange section 12, the first heat exchange section 11, and the third heat exchange section 13 of the first heat exchange flow channel 10 or flow in an opposite direction. Specifically, the heat exchange fluid flows from the third heat exchange portion 122 to the third heat exchange portion 122 in the second heat exchange portion 121 of the second heat exchange section 12 along the first direction, next, the heat exchange fluid flows away from the second heat exchange portion 121 along the third direction in the third heat exchange portion 122 to the first heat exchange portion 111, the heat exchange fluid then flows toward the second heat exchange portion 121 along the third direction in the plurality of first heat exchange portions 111, and finally, the heat exchange fluid flows away from the second heat exchange portion 121 along the third direction in the third heat exchange section 13. Correspondingly, when the heat exchange member 100 performs cooling operations, the heat exchange fluid may flow in an opposite flow direction.

Specifically, when heat exchange fluid flows from the first heat exchange section 11 to the third heat exchange section 13, since the third heat exchange section 13 is connected to the first heat exchange portion 111 close to the second heat exchange portion 121 and disposed on one side of the first heat exchange section 11 facing away from the third heat exchange portion 122, the heat exchange fluid may flow away from the third heat exchange portion 122 along the first direction in the first heat exchange portion 111 close to the second heat exchange portion 121.

In the foregoing embodiment, by providing the third heat exchange section 13 connected to the first heat exchange section 11 and being in contact with the second group of battery cells 203, when the heat exchange member 100 performs heat exchange for the battery assembly 200, a flow direction of the heat exchange fluid in the second heat exchange portion 121 may be opposite a flow direction of the heat exchange fluid close to the second heat exchange portion 121, a flow direction of the heat exchange fluid in the third heat exchange portion 122 may be opposite a flow direction of the heat exchange fluid in the first heat exchange section 11, and a flow direction of the heat exchange fluid in the third heat exchange section 13 may be opposite a flow direction of the heat exchange fluid in the first heat exchange section 11, thereby enabling the second heat exchange section 12, the first heat exchange section 11, and the third heat exchange section 13 to better cooperate for heat exchange operations.

In the foregoing embodiment, by connecting the third heat exchange section 13 to the first heat exchange section 11 and being in contact with the second group of battery cells 203, the heat exchange member 100 can perform more balanced and good heat exchange when performing heat exchange on battery cells 2011 at different positions in the battery 1000, making the temperature distribution within the battery 1000 more uniform after heat exchange operations, thereby allowing the battery 1000 to operate more stably and reliably and maintain good battery performance.

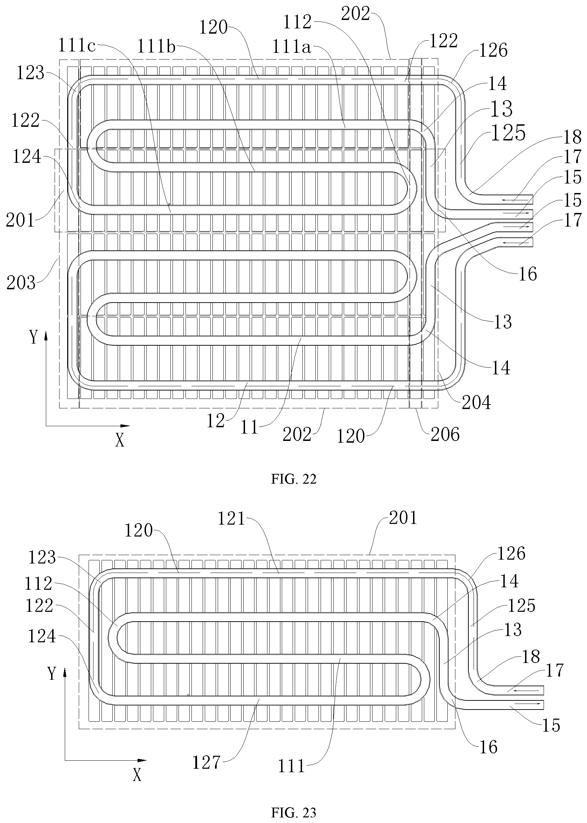

In some specific embodiments of the present application, as shown in FIG. 4 and FIG. 22, the battery assembly 200 may further have a fifth group of battery cells 206, a plurality of battery cells 2011 of the fifth group of battery cells 206 are stacked along the third direction, and the fifth group of battery cells 206 and the third group of battery cells 204 are adjacently arranged, where both the third heat exchange section 13 and the fourth heat exchange portion 125 are in contact with the third group of battery cells 204 for heat exchange; or the third heat exchange section 13 is in contact with the fifth group of battery cells 206 for heat exchange, and the fourth heat exchange portion 125 is in contact with the third group of battery cells 204 for heat exchange; or the third heat exchange section 13 is in contact with the third group of battery cells 204 for heat exchange, and the fourth heat exchange portion 125 is disposed on the outer side of the battery assembly 200 in the first direction.

The fifth group of battery cells 206 and the third group of battery cells 204 are adjacently arranged. Since the third group of battery cells 204 is peripheral battery cells, the fifth group of battery cells 206 may be disposed on one side of the third group of battery cells 204 facing away from the side wall of the battery 1000 in the first direction. When the heat exchange member 100 is arranged with the battery assembly 200, the fourth heat exchange portion 125 may be disposed on the same side of the battery assembly 200 in the first direction as the third heat exchange section 13. Specifically, the fourth heat exchange portion 125 may be disposed on one side of the third heat exchange section 13 facing away from the side wall of the battery 1000, the fourth heat exchange portion 125 may cooperate with the third heat exchange section 13 to be in contact with the third group of battery cells 204, the fourth heat exchange portion 125 may also be in contact with the third group of battery cells 204 while the third heat exchange section 13 is in contact with the fifth group of battery cells 206, or the fourth heat exchange portion 125 may also be disposed between the side wall of the battery 1000 and the third group of battery cells 204, and the third heat exchange section 13 is in contact with the third group of battery cells 204.

In the foregoing embodiment, by having the third heat exchange section 13 cooperate with the fourth heat exchange portion 125 to be in contact with the third group of battery cells 204, the heat exchange member 100 can have good heat exchange area with each battery cell 2011 in the third group of battery cells 204 for heat exchange, thereby ensuring a good heat exchange effect for the third group of battery cells 204. Additionally, the fourth heat exchange portion 125 being in contact with the third group of battery cells 204 and the third heat exchange section 13 being in contact with the fifth group of battery cells 206 allows for the convenient arrangement of the fourth heat exchange portion 125 and the third heat exchange section 13 of the heat exchange member 100. Furthermore, disposing the fourth heat exchange portion 125 on the outer side of the battery assembly 200 in the first direction facilitates the injection and outflow of the heat exchange fluid in the heat exchange member 100.

In some other specific embodiments, the third heat exchange section 13 may be in contact with the fifth group of battery cells 206 for heat exchange, and the fourth heat exchange portion 125 is in contact with the third group of battery cells 204 for heat exchange.

Specifically, both the third heat exchange section 13 and the fourth heat exchange portion 125 extend along the third direction. When the third direction is a length direction of the battery cell 2011, the contact area between the third heat exchange section 13 and the fourth heat exchange section 31 and the battery cell 2011 can be increased, thereby improving the heat exchange effects on the fifth group of battery cells 206 and the third group of battery cells 204. Meanwhile, since the fifth group of battery cells 206 and the third group of battery cells 204 are adjacently arranged, the third heat exchange section 13 is in contact with the fifth group of battery cells 206 for heat exchange, and the fourth heat exchange portion 125 is in contact with the third group of battery cells 204 for heat exchange, which can also balance a temperature difference at an edge position of the battery assembly 200 due to a water temperature difference.

In some other specific embodiments, the third heat exchange section 13 may be in contact with the third group of battery cells 204 for heat exchange, and the fourth heat exchange portion 125 is disposed on the outer side of the battery assembly 200 in the first direction.

That is, the fourth heat exchange portion 125 does not perform heat exchange with the battery assembly 200, and the third heat exchange portion 122 extends along the third direction and is in contact with the third group of battery cells 204 for heat exchange. Thus, when the third direction is a length direction of the battery cell 2011, the contact area between the third heat exchange section 13 and the third group of battery cells 204 can be increased, thereby improving the heat exchange effect of the heat exchange member 100.

In the foregoing embodiment, by configuring both the third heat exchange section 13 and the fourth heat exchange portion 125 to be in contact with the third group of battery cells 204 for heat exchange, the temperature difference of the third group of battery cells 204 can be balanced, and the temperature uniformity of the third group of battery cells 204 can be improved. By configuring the third heat exchange section 13 to be in contact with the third group of battery cells 204 for heat exchange and disposing the fourth heat exchange portion 125 the outer side of the battery assembly 200 in the first direction, the heat exchange process can be simplified, and the production difficulty of the heat exchange member 100 can be reduced.

According to some embodiments of the present application, as shown in FIG. 4, the third heat exchange section 13 extends along the third direction to a position close to one of the plurality of first heat exchange portions 111 that is farthest from the second heat exchange portion 121.

In the foregoing embodiment, by configuring the third heat exchange section 13 to extend along the third direction to a position close to one of the plurality of first heat exchange portions 111 that is farthest from the second heat exchange portion 121, the length of the third heat exchange portion 122 can be increased, the heat exchange area of the third heat exchange portion 122 can be increased, and the heat exchange effect of the first heat exchange flow channel 10 can be improved.

In some specific embodiments of the present application, as shown in FIG. 4, the first heat exchange flow channel 10 may further include a fourth bending portion 14, where the fourth bending portion 14 is arcuate and bent to be connected between the third heat exchange section 13 and the first heat exchange portion 111.

The fourth bending portion 14 is arcuate, that is, the fourth bending portion 14 extends along an arc, and fluid flow directions at two ends of the fourth bending portion 14 have a certain included angle, and thus the fourth bending portion 14 can change a flow direction of fluid, thereby allowing the third heat exchange section 13 to extend in a preset direction. Meanwhile, the arcuate flow channel structure can reduce the flow resistance of the fluid and reduce the pressure drop, thereby increasing the flow rate of the fluid and further increasing the heat exchange efficiency of the first heat exchange flow channel 10.

In addition, by providing the fourth bending portion 14, meandering arrangement of the first heat exchange flow channel 10 can also be achieved, ensuring the heat exchange area of the first heat exchange flow channel 10 to be increased and the structure to be more compact, which is more conducive to achieving a miniaturized design of the battery 1000 and improving the volumetric energy density of the battery 1000.

In the foregoing embodiment, by providing the fourth bending portion 14, the flow direction of the fluid between the third heat exchange section 13 and the first heat exchange portion 111 can be changed, and the arcuate fourth bending portion 14 can reduce the flow resistance of the fluid and reduce the pressure drop, thereby increasing the flow rate of the fluid and further increasing the heat exchange efficiency of the first heat exchange flow channel 10.

In some specific examples of the present application, as shown in FIG. 4, the fourth bending portion 14 may be quarter-arc shaped.

That is, the fourth bending portion 14 may extend along a semicircular arc, specifically, the fourth bending portion 14 may extend along a quarter-circular arc protruding toward a connection position between the second heat exchange portion 121 and the fourth heat exchange portion 125. An included angle between an inlet and an outlet of the fourth bending portion 14 is 90°, and the fourth bending portion 14 is similar to a 90° elbow in piping materials, which can change the flow channel direction, allowing the fluid flow direction to change 90° after the fluid passes through the fourth bending portion 14, for example, allowing the fluid flow direction to change from direction X to direction Y or from direction Y to direction X.

Further, the fourth bending portion 14 connects the third heat exchange section 13 and the first heat exchange portion 111, and the third heat exchange section 13 and the first heat exchange portion 111 may be perpendicular to each other, where the first heat exchange portion 111 extends along the first direction, the third heat exchange section 13 extends along the third direction, and the first direction is perpendicular to the third direction. In this way, the layout of the first heat exchange flow channel 10 can be more regular, and the first heat exchange flow channel 10 can be better in contact with the layout of the battery assembly 200, thereby improving the heat exchange effect of the first heat exchange flow channel on the battery assembly 200.

In other embodiments, a bending degree of the fourth bending portion 14 may also be adjusted as required, for example, may be 50°, 80°, 120°, 135°, 150°, or the like, which is not limited in the embodiments of the present application.

In the foregoing embodiment, by configuring the fourth bending portion 14 to be quarter-arc shaped, the flow direction of the fluid can be changed from an original flow direction to a direction perpendicular to the original flow direction after the fluid passes through the fourth bending portion 14. Meanwhile, the arc shape can also reduce the flow resistance of the fluid, enabling the fluid to flow smoothly in the fourth bending portion 14, and effectively preventing a decrease in heat exchange efficiency caused by excessively slow fluid flow.

In a specific embodiment of the present application, as shown in FIG. 4, the first heat exchange flow channel 10 may further include: a first inlet/outlet section 15 and a second inlet/outlet section 17, where one end of the first inlet/outlet section 15 is connected to the third heat exchange section 13 at an included angle, the other end of the first inlet/outlet section 15 forms a first inlet/outlet of the first heat exchange flow channel 10, one end of the second inlet/outlet section 17 is connected to the fourth heat exchange portion 125 at an included angle, and the other end of the second inlet/outlet section 17 forms a second inlet/outlet of the first heat exchange flow channel 10; where one of the first inlet/outlet and the second inlet/outlet is an inlet of the first heat exchange flow channel 10 and the other is an outlet.

One end of the first inlet/outlet section 15 is connected to the third heat exchange section 13 at an included angle. For example, the first inlet/outlet section 15 may be connected to the third heat exchange section 13 at an acute angle, an obtuse angle, a right angle, or a flat angle. Specifically, the first inlet/outlet section 15 is connected to the third heat exchange section 13 and arranged at an included angle greater than 0° and less than or equal to 180°, and the included angle between the first inlet/outlet section 15 and the third heat exchange section 13 is 30°, 45°, 60°, 90°, 120°, 135°, 150°, or the like. Similarly, the second inlet/outlet section 17 may be connected to the fourth heat exchange portion 125 at an acute angle, an obtuse angle, a right angle, or a flat angle. Specifically, the first inlet/outlet section 15 is connected to the fourth heat exchange portion 125 and arranged at an included angle greater than 0° and less than or equal to 180°, and the included angle between the first inlet/outlet section 1515 and the fourth heat exchange portion 125 is 30°, 45°, 60°, 90°, 120°, 135°, 150°, or the like. The included angle between the first inlet/outlet section 15 and the third heat exchange section 13 and the included angle between the second inlet/outlet section 17 and the fourth heat exchange portion 125 may be set and adjusted according to arrangement requirements.

When the heat exchange tube performs heat exchange with the battery assembly 200, the heat exchange fluid may flow from the first inlet/outlet section 15 into the third heat exchange section 13 and then flow in the first heat exchange flow channel 10, or the heat exchange fluid may flow from the third heat exchange section 13 to the first inlet/outlet section 15 and flow out of the first heat exchange flow channel 10 from the first inlet/outlet, the heat exchange fluid may also flow from the second inlet/outlet section 17 into the fourth heat exchange portion 125 and then flow in the first heat exchange flow channel 10, or the heat exchange fluid may flow from the fourth heat exchange portion 125 to the second inlet/outlet section 17 and flow out from the second inlet/outlet. The inflow and outflow directions of the heat exchange fluid in the first heat exchange flow channel 10 may be correspondingly adjusted or set according to the heat exchange requirements.

In the foregoing embodiment, by providing the first inlet/outlet section 15 and the second inlet/outlet section 17, an external pipeline can be conveniently connected. This allows the heat exchange fluid to enter or exit the first heat exchange flow channel 10 from the first inlet/outlet section 15 or the second inlet/outlet section 17, and also enables the heat exchange member 100 to conveniently adjust the flow direction of the heat exchange fluid in the first heat exchange flow channel 10 as required. Additionally, the first inlet/outlet section 15 and the second inlet/outlet section 17 feature a simple structure and are easy to use.

In a specific example of the present application, as shown in FIG. 4, the first inlet/outlet section 15 may extend along the first direction in a direction away from the first heat exchange section 11, and the third heat exchange section 13 may extend along the third direction.

It can be understood that a certain included angle is formed between the first inlet/outlet section 15 and the third heat exchange section 13, thereby one side of the third heat exchange section 13 facing the first inlet/outlet section 15 forms a certain space, which can facilitate the layout of other components in the battery 1000.

In the foregoing embodiment, by configuring the first inlet/outlet section 15 to extend along the first direction in a direction away from the first heat exchange section 11, pipeline arrangement of the first heat exchange flow channel 10 can be more rationalized and convenient for connection with an external pipeline. Meanwhile, the first inlet/outlet can also be away from the battery assembly 200, which helps to reduce the damage to the battery assembly 200 due to water leakage at the first inlet/outlet.

Further, as shown in FIG. 4, the first heat exchange flow channel 10 may further include a fifth bending portion 16, where the fifth bending portion 16 is arcuate and bent to be connected between the third heat exchange section 13 and the first inlet/outlet section 15.

The fifth bending portion 16 is arcuate, that is, the fifth bending portion 16 extends along an arc, and the fluid flow directions at two ends of the fifth bending portion 16 form a certain included angle. Thus, the third heat exchange section 13 and the first inlet/outlet section 15 can be connected, enabling the heat exchange fluid to smoothly flow from the third heat exchange section 13 to the first inlet/outlet section 15 or from the first inlet/outlet section 15 to the third heat exchange section 13, and achieving the liquid inlet or liquid outlet of the first inlet/outlet section 15. Meanwhile, the arcuate flow channel structure can also reduce the flow resistance of the fluid and reduce the pressure drop, thereby increasing the flow rate of the heat exchange fluid and further increasing the heat exchange efficiency of the first heat exchange flow channel 10.

In the foregoing embodiment, by providing the fifth bending portion 16, the heat exchange fluid can smoothly flow from the third heat exchange section 13 to the first inlet/outlet section 15 or from the first inlet/outlet section 15 to the third heat exchange section 13, achieving the liquid inlet or liquid outlet of the first inlet/outlet section 15. Meanwhile, the arcuate fifth bending portion 16 can also reduce the flow resistance of the fluid and reduce the pressure drop, thereby increasing the flow rate of the heat exchange fluid and further increasing the heat exchange efficiency of the first heat exchange flow channel 10.

Further, as shown in FIG. 4, the fifth bending portion 16 is arcuate, and a central angle corresponding to the fifth bending portion 16 is greater than or equal to 90° and less than 180°.

For example, the central angle corresponding to the fifth bending portion 16 may be 90°, 100°, 110°, 120°, 130°, 140°, 150°, 160°, or 170°, or the like.

As shown in FIG. 4, the heat exchange member 100 includes two first heat exchange flow channels 10, where the fifth bending portion 16 of the first heat exchange flow channel 10 located on one side of the battery assembly 200 facing the coordinate origin in direction Y is quarter-arc shaped, and the third heat exchange section 13 and the first inlet/outlet section 15 are perpendicularly arranged. Meanwhile, the first inlet/outlet section 15 of the lower first heat exchange flow channel 10 may include a first extension segment and a second extension segment, where the first extension segment is connected between the second extension segment and the third heat exchange section 13, the first extension segment extends linearly in a direction inclined relative to the first direction, the second extension segment extends linearly in a direction parallel to the first direction, the first extension segment and the third heat exchange section 13 are connected through the fifth bending portion 16, and a central angle corresponding to an arc line of the fifth bending portion 16 is greater than 90° and less than 135°.

In the foregoing embodiment, by configuring the fifth bending portion 16 to be arcuate, the flow resistance of the fluid can be further reduced, enabling the fluid to flow smoothly in the fifth bending portion 16, and effectively preventing a decrease in heat exchange efficiency caused by excessively slow fluid flow. Meanwhile, the central angle corresponding to the fifth bending portion 16 being greater than or equal to 90° and less than 180° can also form a clearance space on one side of the third heat exchange section 13 facing the first inlet/outlet section 15, thereby facilitating the layout of other components in the battery 1000 and improving the layout rationality of the battery 1000.

Further, as shown in FIG. 4, the second heat exchange section 12 may further include a sixth bending portion 126, where the sixth bending portion 126 may be arcuate, and the sixth bending portion 126 is connected between the fourth heat exchange portion 125 and the second heat exchange portion 121.

The sixth bending portion 126 is formed arcuate, that is, the sixth bending portion 126 extends along an arc, and fluid flow directions at two ends of the sixth bending portion 126 form a certain included angle. Thus, the sixth bending portion 126 can change the flow direction of the heat exchange fluid, thereby allowing the second heat exchange portion 121 and the fourth heat exchange portion 125 to extend in a preset direction. Meanwhile, the arcuate sixth bending portion 126 can reduce the flow resistance of the fluid and reduce the pressure drop, thereby increasing the flow rate of the heat exchange fluid and further increasing the heat exchange efficiency of the first heat exchange flow channel 10.

In the foregoing embodiment, by providing the sixth bending portion 126, the fluid flow direction in the first heat exchange flow channel 10 can be changed, achieving meandering arrangement of the first heat exchange flow channel 10. Thus, the heat exchange area of the first heat exchange flow channel 10 can be increased, and the heat exchange efficiency of the first heat exchange flow channel 10 can be improved. Meanwhile, the arcuate sixth bending portion 126 can also reduce the flow resistance of the fluid and reduce the pressure drop, thereby increasing the flow rate of the heat exchange fluid and further increasing the heat exchange efficiency of the first heat exchange flow channel 10.

In addition, by providing the sixth bending portion 126, the second heat exchange section 12 can form the U-shaped region 120, thereby enabling the second heat exchange section 12 to enclose the first heat exchange section 11. This can increase the arrangement compactness of the first heat exchange flow channel 10, achieve the structural miniaturization of the first heat exchange flow channel 10, and helps to increase the volumetric energy density of the battery.

Further, as shown in FIG. 4, the sixth bending portion 126 may be quarter-arc shaped.

That is, the sixth bending portion 126 may extend along a semicircular arc. Specifically, the sixth bending portion 126 may extend along a quarter-circular arc protruding away from the first heat exchange section 11. An included angle between an inlet and an outlet of the sixth bending portion 126 is 90°, and the sixth bending portion 126 is similar to a 90° elbow in piping materials, which can change the flow channel direction, allowing the fluid flow direction to change 90° after the fluid passes through the sixth bending portion 126, for example, allowing a liquid flow direction to change from direction X to direction Y or from direction Y to direction X. The sixth bending portion 126 connects the second heat exchange portion 121 and the fourth heat exchange portion 125, and in this case, the second heat exchange portion 121 and the fourth heat exchange portion 125 are perpendicularly arranged. Thus, the layout of the second heat exchange section 12 can be more regular, and the second heat exchange section 12 can be better in contact with the layout of the battery assembly 200, thereby improving the heat exchange effect of the second heat exchange section 12 on the battery assembly 200.

In other embodiments, a bending degree of the sixth bending portion 126 may also be adjusted as required, for example, may be 50°, 80°, 120°, 135°, 150°, or the like, which is not limited in the embodiments of the present application.

In the foregoing embodiment, by configuring the sixth bending portion 126 to be quarter-arc shaped, the flow direction of the fluid can be changed from an original flow direction to a direction perpendicular to the original flow direction after the fluid passes through the sixth bending portion 126. Meanwhile, the arc shape can also reduce the flow resistance of the fluid, enabling the fluid to flow smoothly in the sixth bending portion 126, and effectively preventing a decrease in heat exchange efficiency caused by excessively slow fluid flow.

In a specific example of the present application, as shown in FIG. 4, the second inlet/outlet section 17 extends along the first direction in a direction away from the first heat exchange section 11, and the fourth heat exchange portion 125 extends along the third direction.

It can be understood that the certain included angle is formed between the second inlet/outlet section 17 and the fourth heat exchange portion 125, and thus one side of the fourth heat exchange portion 125 facing the second inlet/outlet section 17 forms a certain space, which can facilitate the layout of other components in the battery 1000.

In the foregoing embodiment, by configuring the second inlet/outlet section 17 to extend along the first direction in a direction away from the first heat exchange section 11, pipeline arrangement of the first heat exchange flow channel 10 can be more rationalized and convenient for connection with an external pipeline. Meanwhile, the second inlet/outlet can also be away from the battery assembly 200, which helps to reduce the damage to the battery assembly 200 due to water leakage at the second inlet/outlet.

Further, as shown in FIG. 4, the first heat exchange flow channel 10 may further include a seventh bending portion 18, where the seventh bending portion 18 is arcuate and bent to be connected between the fourth heat exchange portion 125 and the second inlet/outlet section 17.

The seventh bending portion 18 is arcuate, that is, the seventh bending portion 18 has a certain included angle. Thus, the seventh bending portion 18 is bent to be connected between the fourth heat exchange portion 125 and the second inlet/outlet section 17, allowing communication between the fourth heat exchange portion 125 and the second inlet/outlet section 17, enabling the heat exchange fluid to smoothly flow from the fourth heat exchange portion 125 to the second inlet/outlet section 17 or from the second inlet/outlet section 17 to the fourth heat exchange portion 125, and achieving the liquid inlet or liquid outlet of the second inlet/outlet section 17. Meanwhile, the arcuate flow channel structure can also reduce the flow resistance of the fluid and reduce the pressure drop, thereby increasing the flow rate of the heat exchange fluid and further increasing the heat exchange efficiency of the first heat exchange flow channel 10.

In the foregoing embodiment, by providing the seventh bending portion, the heat exchange fluid can smoothly flow from the fourth heat exchange portion 125 to the second inlet/outlet section 17 or from the second inlet/outlet section 17 to the fourth heat exchange portion 125, achieving the liquid inlet or liquid outlet of the second inlet/outlet section 17. Meanwhile, the arcuate seventh bending portion 18 can also reduce the flow resistance of the fluid and reduce the pressure drop, thereby increasing the flow rate of the heat exchange fluid and further increasing the heat exchange efficiency of the first heat exchange flow channel 10.

Further, as shown in FIG. 4, the seventh bending portion 18 is arcuate, and a central angle corresponding to the seventh bending portion 18 is greater than or equal to 90° and less than 180°.

For example, the central angle corresponding to the seventh bending portion 18 may be 90°, 100°, 110°, 120°, 130°, 140°, 150°, 160°, or 170°, or the like.

As shown in FIG. 4, the heat exchange member 100 includes two first heat exchange flow channels 10, where the seventh bending portion 18 of the first heat exchange flow channel 10 located on one side of the battery assembly 200 facing the coordinate origin in direction Y is quarter-arc shaped, and the fourth heat exchange portion 125 and the second inlet/outlet section 17 are perpendicularly arranged. Meanwhile, the second inlet/outlet section 17 of the lower first heat exchange flow channel 10 includes a third extension segment and a fourth extension segment, where the third extension segment is connected between the fourth extension segment and the fourth heat exchange portion 125, the third extension segment extends linearly in a direction inclined relative to the third direction, the fourth extension segment extends linearly in a direction parallel to the third direction, the third extension segment and the fourth heat exchange portion 125 are connected through the seventh bending portion 18, and a central angle corresponding to an arc line of the seventh bending portion 18 is greater than 90° and less than 135°.

In the foregoing embodiment, by configuring the seventh bending portion 18 to be arcuate, the flow resistance of the fluid can be further reduced, enabling the fluid to flow smoothly in the seventh bending portion 18, and effectively preventing a decrease in heat exchange efficiency caused by excessively slow fluid flow. Meanwhile, the central angle corresponding to the seventh bending portion 18 being greater than or equal to 90° and less than 180° can also form a clearance space on one side of the fourth heat exchange portion 125 facing the second inlet/outlet section 17, thereby facilitating the layout of other components in the battery 1000 and improving the layout rationality of the battery 1000.

In some examples of the present application, as shown in FIG. 4 and FIG. 5, the first heat exchange section 11 may include a plurality of first heat exchange portions 111, where the plurality of first heat exchange portions 111 are spaced apart and sequentially bent and connected, the plurality of first heat exchange portions 111 and the second heat exchange portion 121 both extend along the first direction and are spaced apart in the third direction, and one battery unit 201 is in contact with one second heat exchange portion 121 and at least one first heat exchange portion 111 for heat exchange; or one battery unit 201 is in contact with at least two first heat exchange portions 111 for heat exchange.

The plurality of first heat exchange portions 111 are provided in the first heat exchange section 11. For example, there may be two, three, four, five, six, or the like first heat exchange portions 111. The plurality of first heat exchange portions 111 may extend linearly along the first direction, the plurality of first heat exchange portions 111 may be spaced apart in the third direction, and the second heat exchange portion 121 and the first heat exchange portion 111 may be arranged in parallel and at intervals. One battery unit 201 may be in contact with one second heat exchange portion 121 and one first heat exchange portion 111, one battery unit 201 may alternatively be in contact with one second heat exchange portion 121 and the plurality of first heat exchange portions 111, or one battery unit 201 may alternatively be in contact with two or more first heat exchange portions 111.

Configuring one battery unit 201 to be in contact with one second heat exchange portion 121 and at least one first heat exchange portion 111 or one battery unit 201 to be in contact with at least two first heat exchange portions 111 enables the heat exchange member 100 to conveniently meet requirements for heat exchange area with each battery cell 2011 in the battery unit 201 Additionally, since the first heat exchange portions 111 and the second heat exchange portion 121 both extend along the first direction and are spaced apart in the third direction, the heat exchange member 100 can be easily arranged within the battery 1000, resulting in a relatively compact overall structure of the first heat exchange section 11 and the second heat exchange section 12 in the first heat exchange flow channel 10.

In some embodiments of the present application, a total number of first heat exchange portions 111 and second heat exchange portions 121 in the first heat exchange flow channel 10 is greater than or equal to 4.

For example, the total number of first heat exchange portions 111 and second heat exchange portions 121 in the first heat exchange flow channel 10 may be 4, 5, 6, 7, or higher.

In the foregoing embodiment, by setting the total number of first heat exchange portions 111 and second heat exchange portions 121 in the first heat exchange flow channel 10 to be greater than or equal to 4, the length of each heat exchange flow channel can be increased, the total number of heat exchange flow channels can be increased, and the sealing performance of the heat exchange member 100 can be improved.

In an example of the present application, as shown in FIG. 4, the first heat exchange flow channel 10 may be provided in two, and each first heat exchange flow channel 10 includes: three first heat exchange portions 111, one second heat exchange portion 121, one third heat exchange portion 122, one fourth heat exchange portion 125, and one third heat exchange section 13. The battery unit 201 is provided in four, the battery unit 201 located at an end along the third direction is in contact with one first heat exchange portion 111 and one second heat exchange portion 121 for heat exchange, and any remaining battery unit 201 is in contact with two first heat exchange portions 111 for heat exchange. The battery assembly 200 further has a fifth group of battery cells 206, where a plurality of battery cells 2011 of the fifth group of battery cells 206 are stacked along the third direction, and the fifth group of battery cells 206 and the third group of battery cells 204 are adjacently arranged. The third heat exchange portion 122 connects the second heat exchange portion 121 and one first heat exchange portion 111 farthest from the second heat exchange portion 121 and is in contact with the second group of battery cells 203 for heat exchange, the third heat exchange section 13 is connected to one first heat exchange portion 111 closest to the second heat exchange portion 121 and is in contact with the fifth group of battery cells 206 for heat exchange, and the fourth heat exchange portion 125 is in contact with the third group of battery cells 204 for heat exchange.

The first heat exchange flow channel 10 is provided in two, the two first heat exchange flow channels 10 may be spaced apart in the third direction, each heat exchange flow channel may be in contact with two battery units 201 for heat exchange, and the two first heat exchange flow channels 10 may be symmetrically arranged in the third direction. The battery assembly 200 is provided with four battery units 201, and the four battery units 201 may extend along the first direction and be sequentially arranged in the third direction. Specifically, each battery unit 200 may have 30 battery cells 2011, and a plurality of battery cells 2011 in the battery unit 201 may be stacked along the third direction, with a thickness direction of the battery cells 2011 being the same as the third direction. A battery unit 201 close to a side wall of the battery 1000 in the third direction may form the first group of battery cells 202 in peripheral battery cells of the battery assembly 200, among two battery units 201 sequentially arranged along the third direction, four battery cells 2011 close to a side wall of the battery 1000 in the first direction may separately form the second group of battery cells 203 and the third group of battery cells 204 in peripheral battery cells, and the fifth group of battery cells 206 is arranged along the third direction and located on one side of the third group of battery cells 204 facing the second group of battery cells 203 in the first direction.

The first heat exchange section 11 is provided with three first heat exchange portions 111, where the three first heat exchange portions 111 extend along the first direction and are spaced apart in the third direction, two of the first heat exchange portions 111 sequentially spaced apart in the third direction are in contact with a battery unit 201 close to the first group of battery cells 202 in the third direction, and another first heat exchange portion 111 is in contact with the first group of battery cells 202. The second heat exchange portion 121 in the second heat exchange section 12 is disposed between the first heat exchange portion 111 and a side wall of the battery 1000, and the second heat exchange portion 121 is in contact with the first group of battery cells 202. The third heat exchange portion 122 extends along the third direction and is in contact with the second group of battery cells 203, the third heat exchange section 13 extends along the third direction and is located on one side of the first heat exchange section 11 facing away from the third heat exchange portion 122 in the first direction, and the third heat exchange section 13 may be in contact with the fifth group of battery cells 206. The fourth heat exchange portion 125 is in contact with the third group of battery cells 204.

In the foregoing embodiment, by providing two first heat exchange flow channels 10 to perform heat exchange with the battery assembly 200, the structure is simple and arrangement is convenient, which can to some extent improve the heat exchange efficiency of the heat exchange member 100, enabling the heat exchange member 100 to perform heat exchange operations for the battery assembly 200 more effectively. By configuring three first heat exchange portions 111, one second heat exchange portion 121, one third heat exchange portion 122, one fourth heat exchange portion 125, and one third heat exchange section 13 in the first heat exchange flow channel 10, the first heat exchange flow channel 10 can have sufficient heat exchange area after cooperating with two battery units 201 to meet the heat exchange requirements and increase the heat exchange rate.

Through the arrangement of the first heat exchange section 11, the second heat exchange section 12, and the third heat exchange section 13 in the first heat exchange flow channel 10, the heat exchange member 100 can be well adapted to heat exchange conditions at different positions of battery cells 2011 in the battery 1000 when performing heat exchange operations. This allows the battery cells 2011 at different positions in the battery assembly 200 to achieve relatively uniform heat exchange effects, thereby making the temperature distribution within the battery 1000 more uniform during heat exchange operations, ensuring more stable operation of the battery 1000, and maintaining good battery performance.

In an example of the present application, as shown in FIG. 5, the first heat exchange flow channel 10 may be provided in two, and each first heat exchange flow channel 10 may include: five first heat exchange portions 111, one second heat exchange portion 121, one third heat exchange portion 122, one fourth heat exchange portion 125, and one third heat exchange section 13. The battery unit 201 is provided in four, the battery unit 201 located at an end along the third direction is in contact with two first heat exchange portions 111 and one second heat exchange portion 121 for heat exchange, and any remaining battery unit 201 is in contact with three first heat exchange portions 111 for heat exchange. The battery assembly 200 further has a fifth group of battery cells 206, where a plurality of battery cells 2011 of the fifth group of battery cells 206 are stacked along the third direction, and the fifth group of battery cells 206 and the third group of battery cells 204 are adjacently arranged. The third heat exchange portion 122 connects the second heat exchange portion 121 and one first heat exchange portion 111 farthest from the second heat exchange portion 121 and is in contact with the second group of battery cells 203 for heat exchange, and the third heat exchange section 13 is connected to one first heat exchange portion 111 closest to the second heat exchange portion 121 and is in contact with the fifth group of battery cells 206 for heat exchange. The fourth heat exchange portion 125 is in contact with the third group of battery cells 204 for heat exchange.

The first heat exchange flow channel 10 is provided in two, the two first heat exchange flow channels 10 may be spaced apart in the third direction, each heat exchange flow channel may be in contact with two battery units 201 for heat exchange, and the two first heat exchange flow channels 10 may be symmetrically arranged in the third direction. The battery assembly 200 is provided with four battery units 201, and the four battery units 201 may extend along the first direction and be sequentially arranged in the third direction. Specifically, each battery unit 200 may have 30 battery cells 2011, and a plurality of battery cells 2011 in the battery unit 201 may be stacked along the first direction, with a thickness direction of the battery cells 2011 being the same as the first direction. A battery unit 201 close to a side wall of the battery 1000 along the third direction may form the first group of battery cells 202 in peripheral battery cells of the battery assembly 200, among two battery units 201 sequentially arranged along the third direction, four battery cells 2011 close to a side wall of the battery 1000 in the first direction may separately form the second group of battery cells 203 and the third group of battery cells 204 in peripheral battery cells, and the fifth group of battery cells 206 is arranged along the third direction and located on one side of the third group of battery cells 204 facing the second group of battery cells 203 in the first direction.

The first heat exchange section 11 is provided with five first heat exchange portions 111, where the five first heat exchange portions 111 extend along the first direction and are spaced apart along the third direction, three of the first heat exchange portions 111 sequentially spaced apart along the third direction are in contact with a battery unit 201 close to the first group of battery cells 202 along the third direction, and another two first heat exchange portions 111 may be in contact with the first group of battery cells 202. The second heat exchange portion 121 in the second heat exchange section 12 is disposed between the first heat exchange portion 111 and a side wall of the battery 1000, and the second heat exchange portion 121 is in contact with the first group of battery cells 202. The third heat exchange portion 122 extends along the third direction and is in contact with the second group of battery cells 203, the third heat exchange section 13 extends along the third direction and is located on one side of the first heat exchange section 11 facing away from the third heat exchange portion 122 in the first direction, and the third heat exchange section 13 may be in contact with the fifth group of battery cells 206. The fourth heat exchange portion 125 is in contact with the third group of battery cells 204.

In the foregoing embodiment, by providing two first heat exchange flow channels 10 to perform heat exchange with the battery assembly 200, the structure is simple and arrangement is convenient, which can to some extent improve the heat exchange efficiency of the heat exchange member 100, enabling the heat exchange member 100 to perform heat exchange for the battery assembly 200 more effectively. By configuring five first heat exchange portions 111, one second heat exchange portion 121, one third heat exchange portion 122, one fourth heat exchange portion 125, and one third heat exchange section 13 in the first heat exchange flow channel 10, the first heat exchange flow channel 10 can have sufficient heat exchange area after cooperating with two battery units 201 to meet the heat exchange requirements and increase the heat exchange rate.

Through the arrangement of the first heat exchange section 11, the second heat exchange section 12, and the third heat exchange section 13 in the first heat exchange flow channel 10, the heat exchange member 100 can be well adapted to heat exchange conditions at different positions of battery cells 2011 in the battery 1000 when performing heat exchange operations. This allows the battery cells 2011 at different positions in the battery assembly 200 to achieve relatively uniform heat exchange effects, thereby making the temperature distribution within the battery 1000 more uniform during heat exchange operations, ensuring more stable operation of the battery 1000, and maintaining good battery performance.

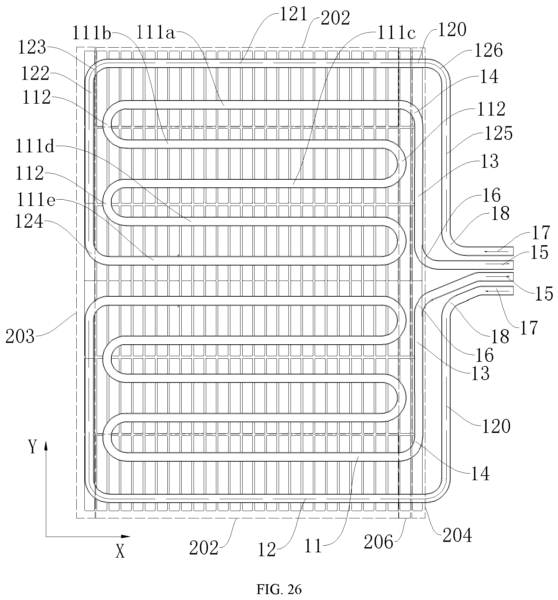

In an example of the present application, as shown in FIG. 26, the first heat exchange flow channel 10 may be provided in two, and each first heat exchange flow channel 10 may include: five first heat exchange portions 111, one second heat exchange portion 121, one third heat exchange portion 122, one fourth heat exchange portion 125, and one third heat exchange section 13. The battery unit 201 is provided in six, the battery unit 201 located at an end along the third direction is in contact with one first heat exchange portion 111 and one second heat exchange portion 121 for heat exchange, and any remaining battery unit 201 is in contact with two first heat exchange portions 111 for heat exchange. The battery assembly 200 further has a fifth group of battery cells 206, where a plurality of battery cells 2011 of the fifth group of battery cells 206 are stacked along the third direction, and the fifth group of battery cells 206 and the third group of battery cells 204 are adjacently arranged. The third heat exchange portion 122 connects the second heat exchange portion 121 and one first heat exchange portion 111 farthest from the second heat exchange portion 121 and is in contact with the second group of battery cells 203 for heat exchange, and the third heat exchange section 13 is connected to one first heat exchange portion 111 closest to the second heat exchange portion 121 and is in contact with the fifth group of battery cells 206 for heat exchange. The fourth heat exchange portion 125 is in contact with the third group of battery cells 204 for heat exchange.

The first heat exchange flow channel 10 is provided in two, the two first heat exchange flow channels 10 may be spaced apart in the third direction, each heat exchange flow channel may be in contact with two battery units 201 for heat exchange, and the two first heat exchange flow channels 10 may be symmetrically arranged in the third direction. The battery assembly 200 is provided with four battery units 201, and the four battery units 201 may extend along the first direction and be sequentially arranged in the third direction. Specifically, each battery unit 200 may have 30 battery cells 2011, and a plurality of battery cells 2011 in the battery unit 201 may be stacked along the first direction, with a thickness direction of the battery cells 2011 being the same as the first direction. A battery unit 201 close to a side wall of the battery 1000 in the third direction may form the first group of battery cells 202 in peripheral battery cells of the battery assembly 200. Among two battery units 201 sequentially arranged along the third direction, four battery cells 2011 close to a side wall of the battery 1000 in the first direction may separately form the second group of battery cells 203 and the third group of battery cells 204 in peripheral battery cells, and the fifth group of battery cells 206 is arranged along the third direction and located on one side of the third group of battery cells 204 facing the second group of battery cells 203 in the first direction.

The first heat exchange section 11 is provided with five first heat exchange portions 111, where the five first heat exchange portions 111 extend along the first direction and are spaced apart along the third direction, three of the first heat exchange portions 111 sequentially spaced apart along the third direction be in contact with a battery unit 201 close to the first group of battery cells 202 along the third direction, and another two first heat exchange portions 111 may be in contact with the first group of battery cells 202. The second heat exchange portion 121 in the second heat exchange section 12 is disposed between the first heat exchange portion 111 and a side wall of the battery 1000, and the second heat exchange portion 121 is in contact with the first group of battery cells 202. The third heat exchange portion 122 extends along the third direction and is in contact with the second group of battery cells 203, the third heat exchange section 13 extends along the third direction and is located on one side of the first heat exchange section 11 facing away from the third heat exchange portion 122 in the first direction, and the third heat exchange section 13 may be in contact with the fifth group of battery cells 206. The fourth heat exchange portion 125 is in contact with the third group of battery cells 204.

In the foregoing embodiment, by providing two first heat exchange flow channels 10 to perform heat exchange with the battery assembly 200, the structure is simple and arrangement is convenient, which can to some extent improve the heat exchange efficiency of the heat exchange member 100, enabling the heat exchange member 100 to perform heat exchange for the battery assembly 200 more effectively. By configuring five first heat exchange portions 111, one second heat exchange portion 121, one third heat exchange portion 122, one fourth heat exchange portion 125, and one third heat exchange section 13 in the first heat exchange flow channel 10, the first heat exchange flow channel 10 can have sufficient heat exchange area after cooperating with two battery units 201 to meet the heat exchange requirements and increase the heat exchange rate.

Through the arrangement of the first heat exchange section 11, the second heat exchange section 12, and the third heat exchange section 13 in the first heat exchange flow channel 10, the heat exchange member 100 can be well adapted to heat exchange conditions at different positions of battery cells 2011 in the battery 1000 when performing heat exchange operations. This allows the battery cells 2011 at different positions in the battery assembly 200 to achieve relatively uniform heat exchange effects, thereby making the temperature distribution within the battery 1000 more uniform during heat exchange operations, ensuring more stable operation of the battery 1000, and maintaining good battery performance.

According to some embodiments of the present application, the battery unit 201 may be provided in 2 to 8.

For example, the number of battery units 201 may be 2, 3, 4, 5, 6, 7, or 8.

In the foregoing embodiment, by setting the number of battery units 201 to be 2 to 8, the overall design of the battery 1000 and the heat exchange member 100 can be facilitated, the production difficulty of the heat exchange member 100 and the battery 1000 can be reduced, the application range of the battery 1000 can be increased, and the market competitiveness of the battery 1000 can be improved.

In an example of the present application, as shown in FIG. 4, each battery unit 200 may have 30 battery cells 2011.

As shown in FIG. 4, each of the four battery units 200 in the figure may be provided with 30 battery cells 2011.

In the foregoing embodiment, providing 30 battery cells 2011 in each battery unit 200 can better meet the operation needs of the battery 1000.

In an embodiment of the present application, as shown in FIG. 4, the first heat exchange section 11 may be connected downstream of the second heat exchange section 12 along a fluid flow direction.

That is, the heat exchange fluid first flows through the second heat exchange section 12 and then flows into the first heat exchange section 11, where the second heat exchange section 12 is disposed around a circumference of the first heat exchange section 11. When the first heat exchange flow channel 10 performs heat exchange with the battery assembly 200, heat dissipates faster at a periphery of the battery assembly 200. Especially under low-temperature heating conditions, high-temperature heat exchange fluid starts heat exchange from the second heat exchange section 12, enabling the first heat exchange flow channel 10 to preferentially perform heat exchange for an outer circumferential side of the battery assembly 200. This helps to reduce an internal-external temperature difference of the battery assembly 200 and to some extent extends the service life of the battery 1000.

In the foregoing embodiment, by connecting the first heat exchange section 11 downstream of the second heat exchange section 12 along a fluid flow direction, the first heat exchange flow channel 10 can preferentially perform heat exchange for an outer circumferential side of the battery 1000, thereby helping to reduce the temperature differences of the battery 1000 in different environments and to some extent extending service life of the battery 1000.

The heat exchange member 100 is configured such that: when heating the battery assembly 200 of the battery 1000, the first heat exchange section 11 is connected downstream of the second heat exchange section 12 along a fluid flow direction; when cooling the battery assembly 200 of the battery 1000, the first heat exchange section 11 is connected upstream of the second heat exchange section 12 along a fluid flow direction.

Specifically, when heating the battery assembly 200 of the battery 1000, the temperature of the heat exchange fluid flowing in the heat exchange member 100 is higher than the operating temperature of the battery 1000, the heat exchange member 100 heats and raises the temperature of the battery assembly 200, the high-temperature heat exchange fluid first flows into the second heat exchange section 12 and then flows to the first heat exchange section 11, and the temperature of the heat exchange fluid flowing inside the second heat exchange section 12 is higher than a temperature of the heat exchange fluid inside the first heat exchange section 11.

Since the high-temperature fluid first enters the second heat exchange section 12 located at a periphery of the first heat exchange flow channel 10, the second heat exchange section 12 can first heat battery cells 2011 at a periphery of the battery assembly 200, and the heat exchange fluid entering the first heat exchange section 11 then cools battery cells 2011 at a middle position of the battery assembly 200. Since the battery cells 2011 at the periphery of the battery 1000 dissipate more heat to an external environment and temperatures of the battery cells 2011 at the periphery of the battery 1000 decrease more, the heat exchange fluid first heats the battery cells 2011 at the periphery of the battery 1000, and the higher-temperature heat exchange fluid can compensate for heat lost by the battery cells 2011 due to heat dissipation to an external environment while raising temperatures of peripheral battery cells 2011, meeting their heating requirements.

The battery cells 2011 at the middle position of the battery assembly 200 have less contact area with an external environment and less heat loss, and the lower-temperature heat exchange fluid flowing in the first heat exchange section 11 can cooperate with heat generated by battery cells 2011 themselves to fully meet their heating requirements. Thus, the heating effects achieved by the battery cells 2011 at the periphery of the battery assembly 200 and the battery cells 2011 at the middle position of the battery assembly 200 are substantially the same, thereby making temperatures of the battery cells 2011 at the periphery of the battery assembly 200 and the battery cells 2011 at the middle position of the battery assembly 200 relatively consistent after heating and temperature rise, and making the temperature distribution within the battery 1000 more uniform.

When cooling the battery assembly 200 of the battery 1000, the temperature of the heat exchange fluid flowing in the heat exchange member 100 is lower than the operating temperature of the battery 1000, the heat exchange member 100 is used to cool the battery 1000, the heat exchange fluid flows from the first heat exchange section 11 to the second heat exchange section 12, and the temperature of the heat exchange fluid flowing in the first heat exchange section 11 is lower than the temperature of the heat exchange fluid inside the second heat exchange section 12.

When cooling and lowering the temperature of the battery 1000, the heat exchange fluid flows from the first heat exchange section 11 to the second heat exchange section 12, that is, the heat exchange fluid flows from a middle portion of the battery assembly 200 to an edge position of the battery assembly 200 and performs heat exchange. Since the battery cells 2011 at the peripheral position of the battery 1000 have better heat dissipation conditions than inner battery cells 2011, the lower-temperature heat exchange fluid in the first heat exchange section 11 can better meet the heat dissipation requirements of the battery cells 2011 at the middle position of the battery 1000, and since the battery cells 2011 at the peripheral position of the battery assembly 200 can directly dissipate heat naturally toward an external environment, even if the temperature of the heat exchange fluid in the second heat exchange section 12 is slightly higher, the heat dissipation requirements of peripheral battery cells 2011 can still be met. This allows the cooling effects achieved by the battery cells 2011 at the peripheral position of the battery 1000 and the battery cells 2011 at the middle position of the battery 1000 to be substantially the same, and in turn makes the temperatures of the battery cells 2011 at the peripheral position of the battery 1000 and the battery cells 2011 at the middle position of the battery 1000 relatively consistent after cooling and heat dissipation, reducing an internal-external temperature difference of the battery assembly 200, and making the temperature distribution within the battery 1000 more uniform.

In the foregoing embodiment, by configuring the heat exchange member 100 such that: when heating the battery assembly 200 of the battery 1000, the first heat exchange section 11 is connected downstream of the second heat exchange section 12 along a fluid flow direction; when cooling the battery assembly 200 of the battery 1000, the first heat exchange section 11 is connected upstream of the second heat exchange section 12 along a fluid flow direction, the heat exchange effect on the battery 1000 can be further improved, and the temperature uniformity of the battery assembly 200 can be enhanced.

In some examples of the present application, as shown in FIG. 4 and FIG. 8 to FIG. 13, the heat exchange tube may be provided in one or plurality, and an inner side of each heat exchange tube defines a heat exchange flow channel. When the heat exchange tube is provided in plurality, the plurality of heat exchange tubes are spaced apart along the third direction or are arranged around each other, and the heat exchange flow channel of at least one heat exchange tube is formed as the first heat exchange flow channel 10.

The heat exchange tube is provided in one or plurality. When the heat exchange tube is provided in plurality, there may be two, three, four, or the like heat exchange tubes, the plurality of heat exchange tubes define a plurality of heat exchange flow channels, and among the plurality of heat exchange flow channels, one heat exchange flow channel or some heat exchange flow channels or all heat exchange flow channels may be formed as the first heat exchange flow channel 10. The plurality of heat exchange tubes may be spaced apart in the third direction, or the plurality of heat exchange tubes may be arranged around each other, and the plurality of heat exchange flow channels formed by the plurality of heat exchange tubes are correspondingly arranged around each other. For example, the plurality of first heat exchange portions 111 in the first heat exchange flow channel 10 may be staggered in the first direction with the plurality of first heat exchange portions 111 in another first heat exchange flow channel 10, or the second heat exchange portion 121 in the first heat exchange flow channel 10 may be adjacently arranged with the second heat exchange portion 121 or the third heat exchange portion 122 in another first heat exchange flow channel 10, and other forms of arrangement around each other, which are not enumerated herein.

For example, as shown in FIG. 12, the heat exchange member 100 has two heat exchange flow channels arranged in parallel, and the two heat exchange flow channels are arranged around each other, and further, the two heat exchange flow channels may be formed as the first heat exchange flow channel 10. As another example, as shown in FIG. 13, the heat exchange member 100 has three heat exchange flow channels arranged in parallel, and the three heat exchange flow channels are arranged around each other.

In the foregoing embodiment, by providing one or more heat exchange tubes, the heat exchange tubes can be reasonably arranged according to the heat exchange requirements of the battery 1000, thereby better meeting the heat exchange requirements of different batteries 1000. The plurality of first heat exchange flow channels 10 are spaced apart along the first direction, the overall structure of the first heat exchange flow channels 10 can be arranged relatively compactly, thereby facilitating design and arrangement of the heat exchange member 100. By arranging the plurality of first heat exchange flow channels 10 around each other, the plurality of first heat exchange flow channels 10 in the heat exchange member 100 can have better integrity, allowing the overall structure of the heat exchange member 100 to be more flexible and compact, thereby enabling the heat exchange member 100 to better meet the requirements for heat exchange area with battery cells 2011 at different positions in the battery assembly 200.

In an example of the present application, as shown in FIG. 4, the heat exchange tube may be provided in plurality, the plurality of heat exchange tubes form a plurality of heat exchange flow channels, the plurality of heat exchange flow channels are spaced apart along the third direction, and two of the heat exchange flow channels located at two ends along the third direction are both the first heat exchange flow channel 10, and the two first heat exchange flow channels 10 may be symmetrically arranged with respect to a centerline of the heat exchange member 100 along the first direction, where the first direction and the third direction intersect at an included angle.

It can be understood that disposing the second heat exchange section 12 of the first heat exchange flow channel 10 at a periphery of the battery assembly 200 can improve the uniformity of internal and external temperatures of the battery assembly 200. Therefore, forming two heat exchange flow channels located at two ends in the first direction as the first heat exchange flow channel 10 can provide better temperature uniformity performance of battery cells 2011 at positions at two ends of the battery assembly 200 in the first direction, achieving overall temperature uniformity of the battery assembly 200.

Further, fluid flow directions and inlets/outlets at two ends of the two first heat exchange flow channels 10 are symmetrically arranged. This allows the two first heat exchange flow channels 10 to simultaneously perform heat exchange for two ends of the battery assembly 200 in the first direction, so as to achieve better temperature uniformity effect.

"The first direction intersects the third direction at an included angle" is intended to mean that the third direction and the first direction may be arranged perpendicularly, or may only intersect without being perpendicular. For example, the third direction and the first direction may be arranged at an included angle of 30°, 40°, 50°, 60°, 70°, 80°, or the like.

In the foregoing embodiment, by providing two symmetrically arranged first heat exchange flow channels 10, liquid inlet from both sides can be achieved simultaneously, increasing the liquid inlet flow rate, shortening the length of a single heat exchange flow channel, reducing the pressure drop in a single heat exchange flow channel, thereby improving the heat exchange efficiency.

In some specific embodiments of the present application, as shown in FIG. 4, a plurality of heat exchange flow channels may be symmetrically arranged with respect to a centerline of the heat exchange member 100 along the first direction.

The plurality of heat exchange flow channels have symmetric flow directions and symmetric inlets/outlets at two ends, allowing the heat exchange member 100 to be divided into two symmetrically distributed parts, so that during heat exchange, the fluid distribution in the two symmetric parts of the heat exchange member 100 is consistent, improving the temperature consistency of regions of the battery assembly 200 respectively corresponding to the two parts of the heat exchange member 100 for heat exchange, thereby further improving the temperature uniformity effect of the battery assembly 200.

In the foregoing embodiment, by symmetrically arranging a plurality of heat exchange flow channels with respect to a centerline of the heat exchange member 100 along the first direction, the plurality of heat exchange flow channels can synchronously perform heat exchange with the battery assembly 200, improving the heat exchange efficiency. This arrangement can also improve the temperature consistency of regions of the battery assembly 200 respectively corresponding to the two symmetrically arranged parts of the heat exchange member 100 for heat exchange, thereby further improving the temperature uniformity effect of the battery assembly 200.

In some specific embodiments of the present application, the plurality of heat exchange flow channels are asymmetrically arranged with respect to a centerline of the heat exchange member 100 along the first direction, allowing the plurality of heat exchange flow channels to be designed according to actual conditions of the battery assembly 200, enabling the heat exchange member 100 to meet the heat exchange requirements of the battery assembly 200, and further ensuring a heat exchange effect of the battery assembly 200.

In an example of the present application, as shown in FIG. 11, the heat exchange tube may be provided in plurality, the heat exchange flow channel of at least one heat exchange tube is formed as a second heat exchange flow channel 30, and a structure of any second heat exchange flow channel 30 is the same as or different from a structure of the first heat exchange flow channel 10.

Specifically, the second heat exchange flow channel 30 may be provided between two first heat exchange flow channels 10 and is mainly used for heat exchange with a middle position of the battery assembly 200, where temperatures of the battery units 201 provided at the middle portion are relatively balanced. Therefore, the structure of any second heat exchange flow channel 30 may be the same as or different from the structure of the first heat exchange flow channel 10. For example, the structure of the second heat exchange flow channel 30 may be a simple U-shaped structure, and further, the structure of the second heat exchange flow channel 30 may be designed according to actual heat exchange conditions of the battery 1000.

In addition, the second heat exchange flow channel 30 may be provided in one or plurality. For example, the number of second heat exchange flow channels 30 may be one, two, three, or higher, and the number of second heat exchange flow channels 30 may be selected according to an arrangement of the battery assembly 200.

In the foregoing embodiment, by providing at least one second heat exchange flow channel 30, the diversity of heat exchange flow channel arrangements can be increased, enabling the heat exchange member 100 to perform heat exchange with the battery assembly 200 more effectively, and improving a heat exchange effect of the heat exchange member 100.

In a specific embodiment of the present application, as shown in FIG. 11, the second heat exchange flow channel 30 may be provided between two first heat exchange flow channels 10, where the structure of any second heat exchange flow channel 30 is the same as or different from the structure of the first heat exchange flow channel 10.

Specifically, the second heat exchange flow channel 30 is provided between two first heat exchange flow channels 10 and is mainly used for heat exchange with a middle position of the battery assembly 200, where temperatures of the battery units 201 provided at the middle portion are relatively balanced. Therefore, the structure of any second heat exchange flow channel 30 may be the same as or different from the structure of the first heat exchange flow channel 10. For example, the structure of the second heat exchange flow channel 30 may be a simple U-shaped structure, and further, the structure of the second heat exchange flow channel 30 may be designed according to actual heat exchange conditions of the battery 1000.

In addition, the second heat exchange flow channel 30 may be provided in one or plurality. For example, the number of second heat exchange flow channels 30 may be one, two, three, or higher, and the number of second heat exchange flow channels 30 may be selected according to an arrangement of the battery assembly 200.

In the foregoing embodiment, by providing at least one second heat exchange flow channel 30, the diversity of heat exchange flow channel arrangements can be increased, enabling the heat exchange member 100 to perform heat exchange with the battery assembly 200 more effectively, and improving the heat exchange effect of the heat exchange member 100.

In some specific embodiments of the present application, as shown in FIG. 11, the second heat exchange flow channel 30 may include a plurality of fourth heat exchange sections 31, where the plurality of fourth heat exchange sections 31 are sequentially connected, the fourth heat exchange section 31 may extend along the first direction, and the plurality of fourth heat exchange sections 31 are spaced apart along the third direction.

Specifically, the plurality of fourth heat exchange sections 31 sequentially connected may form a U-shaped heat exchange flow channel or an S-shaped heat exchange flow channel.

For example, the number of fourth heat exchange sections 31 may be two, three, or higher, and the number of fourth heat exchange sections 31 may be designed according to a size of the battery assembly 200.

In the foregoing embodiment, by configuring the second heat exchange flow channel 30 to include a plurality of sequentially connected fourth heat exchange sections 31, the structural complexity of the second heat exchange flow channel 30 can be reduced, the production costs of the second heat exchange flow channel 30 can be reduced, and thus the production costs of the heat exchange member 100 can be reduced.

In an example of the present application, as shown in FIG. 12, the heat exchange tube may be provided in plurality, one of the heat exchange tubes defines the first heat exchange flow channel 10, the heat exchange flow channel of at least one heat exchange tube is formed as a third heat exchange flow channel 40, the third heat exchange flow channel 40 is arranged in a bent manner in the U-shaped region 120 of the first heat exchange flow channel 10, the first heat exchange flow channel 10 and the third heat exchange flow channel 40 are bent in the same plane, and bending structures of the first heat exchange flow channel 10 and the third heat exchange flow channel 40 are the same or different.

At least one of the plurality of heat exchange tubes forms the third heat exchange flow channel 40, there may be one or more third heat exchange flow channels 40. For example, the number of third heat exchange flow channels 40 may be one, two, three, or higher. The first heat exchange flow channel 10 and the third heat exchange flow channel 40 each may include a first heat exchange portion 111, a second heat exchange portion 121, a third heat exchange portion 122, and a fourth heat exchange portion 125.

For example, as shown in FIG. 12, the plurality of heat exchange flow channels include one first heat exchange flow channel 10 and one third heat exchange flow channel 40, the third heat exchange flow channel 40 and the first heat exchange flow channel 10 have the same structure, and the third heat exchange flow channel 40 is arranged in a bent manner in the U-shaped region 120 of the first heat exchange flow channel 10.

Specifically, the first heat exchange flow channel 10 and the third heat exchange flow channel 40 each include a first heat exchange portion 111, a second heat exchange portion 121, a third heat exchange portion 122, and a fourth heat exchange portion 125, where the plurality of first heat exchange portions 111, third heat exchange portions 122, and fourth heat exchange portions 125 of the first heat exchange flow channel 10 and the third heat exchange flow channel 40 all extend along direction X, and the second heat exchange portion 121 extends along direction Y. The fourth heat exchange portion 125, the second heat exchange portion 121, and the third heat exchange portion 122 are sequentially bent and connected to form a U-shaped structure with an opening facing away from a coordinate origin in direction X. There are a plurality of first heat exchange portions 111, and the plurality of first heat exchange portions 111 are disposed in the U-shaped region 120 and are spaced apart along direction Yand sequentially bent and connected.

The third heat exchange portion 122 of the first heat exchange flow channel 10 is disposed on one side of the plurality of first heat exchange portions 111 away from a coordinate origin in direction Y, and the fourth heat exchange portion 125 is disposed on one side of the plurality of first heat exchange portions 111 close to the coordinate origin in direction Y, and the third heat exchange flow channel 40 is connected to the first heat exchange portion 111 farthest from the coordinate origin in direction Y. The third heat exchange portion 122 of the third heat exchange flow channel 40 is disposed on one side of the plurality of first heat exchange portions 111 close to the coordinate origin in direction Y, and the fourth heat exchange portion 125 is disposed on one side of the plurality of first heat exchange portions 111 away from the coordinate origin in direction Y, and the third heat exchange portion 122 of the third heat exchange flow channel 40 is connected to the first heat exchange portion 111 closest to a coordinate origin in direction Y. The third heat exchange flow channel 40 is disposed between the fourth heat exchange portion 125 of the first heat exchange flow channel 10 and the plurality of first heat exchange portions 111.

In addition, the first heat exchange flow channel 10 and the third heat exchange flow channel 40 each further include a first inlet/outlet section 15 and a second inlet/outlet section 17, where the first inlet/outlet section 15 of the first heat exchange flow channel 10 is connected to the fourth heat exchange portion 125, the second inlet/outlet section 17 is connected to the first heat exchange portion 111 closest to the coordinate origin in direction Y, the first inlet/outlet section 15 of the third heat exchange flow channel 40 is connected to the first heat exchange portion 111 farthest from a coordinate origin in direction Y, and the second inlet/outlet section 17 is connected to the fourth heat exchange portion 125.

In the foregoing embodiment, by providing a plurality of heat exchange flow channels, the diversity of heat exchange flow channels can be increased, allowing the arrangement of the heat exchange flow channels to be designed according to the cooling requirements of the battery 1000, thereby further enhancing the heat exchange effect of the heat exchange member 100 and improving the temperature uniformity of the battery 1000.

In an example of the present application, as shown in FIG. 12 and FIG. 13, the third heat exchange flow channel 40 may include a U-shaped region 120 having the same structure as the first heat exchange flow channel 10, and at least a portion of the first heat exchange section 11 of the first heat exchange flow channel 10 is provided in the U-shaped region 120 of the third heat exchange flow channel 40.

It can be understood that only a portion of the first heat exchange section 11 of the first heat exchange flow channel 10 may be provided in the U-shaped region 120 of the third heat exchange flow channel 40, or all of the first heat exchange section 11 may be provided in the U-shaped region 120 of the third heat exchange flow channel 40.

For example, as shown in FIG. 13, the plurality of heat exchange flow channels include one first heat exchange flow channel 10 and two third heat exchange flow channels 40, and the two third heat exchange flow channels 40 have the same structure as the first heat exchange flow channel 10.

Specifically, the first heat exchange flow channel 10 and the two third heat exchange flow channels 40 each include a first heat exchange portion 111, a second heat exchange portion 121, a third heat exchange portion 122, and a fourth heat exchange portion 125. The fourth heat exchange portion 125, the second heat exchange portion 121, and the third heat exchange portion 122 of any one of the first heat exchange flow channel 10 and the two third heat exchange flow channels 40 are sequentially bent and connected to form a U-shaped structure with an opening facing away from a coordinate origin in direction X. There are a plurality of first heat exchange portions 111, the plurality of first heat exchange portions 111 are disposed in the U-shaped region 120, and the plurality of first heat exchange portions 111 extend linearly along direction X and are spaced apart along direction Y and sequentially bent and connected. The second heat exchange portion 121 extends along direction Y, and both the third heat exchange portion 122 and the fourth heat exchange portion 125 extend along direction X.

The third heat exchange portion 122 of the first heat exchange flow channel 10 is located on one side of a plurality of first heat exchange portions 111 away from the coordinate origin in direction Y and is connected to a first heat exchange portion 111 farthest from a coordinate origin in direction Y, and the fourth heat exchange portion 125 is located on one side of the plurality of first heat exchange portions 111 close to the coordinate origin in direction Y.

The third heat exchange portion 122 of the third heat exchange flow channel 40a is located on one side of the plurality of first heat exchange portions 111 away from the coordinate origin in direction Y and is connected to the first heat exchange portion 111 farthest from the coordinate origin in direction Y, and the third heat exchange portion 122 of the third heat exchange flow channel 40a and the first heat exchange portion 111 farthest from the coordinate origin in direction Y of the third heat exchange flow channel 40a are located between the third heat exchange portion 122 of the first heat exchange flow channel 10 and the plurality of first heat exchange portions 111 of the first heat exchange flow channel 10. The plurality of first heat exchange portions 111 of the first heat exchange flow channel 10 are located between the first heat exchange portion 111 farthest from the coordinate origin in direction Y of the third heat exchange flow channel 40a and the second first heat exchange portion 111 on one side away from the coordinate origin in direction Y of the third heat exchange flow channel 40a.

The third heat exchange flow channel 40b is located between the fourth heat exchange portion 125 of the third heat exchange flow channel 40a and the plurality of first heat exchange portions 111 of the third heat exchange flow channel 40a, and the fourth heat exchange portion 125 of the third heat exchange flow channel 40b is located on one side of the plurality of first heat exchange portions 111 of the third heat exchange flow channel 40b away from a coordinate origin in direction Y, and the third heat exchange portion 122 of the third heat exchange flow channel 40b is connected to the first heat exchange portion 111 closest to the coordinate origin in direction Y of the third heat exchange flow channel 40.

In addition, the first heat exchange flow channel 10 and the two third heat exchange flow channels 40 each further include a first inlet/outlet section 15 and a second inlet/outlet section 17, where the first inlet/outlet section 15 and the second inlet/outlet section 17 are respectively connected to the fourth heat exchange portion 125 and the first heat exchange portion 111.

In the foregoing embodiment, by configuring the third heat exchange flow channel 40 to include a U-shaped region 120 having the same structure as the first heat exchange flow channel 10, and disposing at least a portion of the first heat exchange section 11 of the first heat exchange flow channel 10 in the U-shaped region 120 of the third heat exchange flow channel 40, at least portions of the first heat exchange flow channel 10 and the third heat exchange flow channel 40 can be wound around each other. This allows the winding arrangement of the heat exchange flow channels to be tailored to the heat exchange requirements of various parts of the battery assembly 200, further enhancing the heat exchange effect of the heat exchange member 100 and improving the temperature uniformity of the battery 1000.

According to some embodiments of the present application, as shown in FIG. 12 and FIG. 13, the U-shaped region 120 of the second heat exchange section 12 of the first heat exchange flow channel 10 is located at an outermost circumference of the heat exchange member 100.

To be specific, the U-shaped region 120 of the second heat exchange section 12 of the first heat exchange flow channel 10 is formed as an outermost heat exchange flow channel of the heat exchange member 100, enabling the U-shaped region 120 of the first heat exchange flow channel 10 to be used for heat exchange with an outer circumferential side of the battery assembly 200, improving the heat exchange effect on the periphery of the battery assembly 200.

In the foregoing embodiment, by providing the U-shaped region 120 of the second heat exchange section 12 of the first heat exchange flow channel 10 at an outermost circumference of the heat exchange member 100, the second heat exchange section 12 can perform heat exchange for the outer circumferential side of the battery 1000, which helps to reduce the temperature differences of the battery 1000 in different environments and to some extent extends service life of the battery 1000.

In some embodiments of the present application, as shown in FIG. 4 and FIG. 14, the heat exchange tube may be formed by bending a single tube. The heat exchange tube may be bent arcuately at a bending position.

The formation by bending a single tube refers to: the heat exchange tube may be formed by bending a single straight tube multiple times through a processing technique such as rolling. For example, the single straight tube may be bent at a plurality of preset positions to form a V-shape, a U-shape, or the like at bending positions, and the bending shape of the single tube may be designed according to actual conditions.

In the foregoing embodiment, by forming the heat exchange tube by bending a single tube, the number of welds of the heat exchange member 100 can be reduced, thereby reducing the risk of leakage of the heat exchange member 100 and improving the operational reliability of the heat exchange member 100. Meanwhile, the processing technique of bending a single tube to form is relatively simple compared to the manufacturing technique of a platelike structure, thereby significantly reducing the costs of the heat exchange member 100.

In some embodiments of the present application, the heat exchange tube may be bent arcuately at a bending position.

An arcuate bend can reduce the flow resistance of the fluid and reduce the pressure drop, and thus, arcuately bending the heat exchange tube at a bending position can increase the flow rate of the heat exchange fluid in the heat exchange flow channel, thereby increasing the heat exchange efficiency of the heat exchange member 100.

In the foregoing embodiment, by arcuately bending the heat exchange tube at the bending position, the flow resistance of the fluid can be reduced and the pressure drop can be reduced, thereby increasing the flow rate of the heat exchange fluid in the heat exchange flow channel, and increasing the heat exchange efficiency of the heat exchange member 100.

According to some embodiments of the present application, as shown in FIG. 14, a bending angle of the heat exchange tube at the bending position is less than 180°.

For example, the bending angle of the heat exchange tube at the bending position may be 30°, 60°, 90°, 120°, 150°, or 179°.

In the foregoing embodiment, by setting the bending angle of the heat exchange tube at the bending position to be less than 180°, a probability of damage to the heat exchange tube caused by bending can be reduced.

In an embodiment of the present application, as shown in FIG. 14, the heat exchange tube may be bent arcuately at the bending position, and a ratio of a bending radius on a centerline of the heat exchange tube along a length direction to a width of the heat exchange tube is greater than or equal to 0.6.

For example, as shown in FIG. 12, the bending radius on the centerline of the heat exchange tube along the length direction is denoted as r, and the width of the heat exchange tube is denoted as d, then the ratio of r to d may be 0.6, 0.8, 1.0, 1.2, 1.4, 1.6, 1.8, 2.0, or higher.

It should be noted that when the heat exchange tube is bent, its circular cross-section tends to be elliptical under internal pressure stress, forming a minor axis and a major axis. A bending machine generates additional stress at the major axis, and greater ellipticity, that is, greater bending angle and smaller ratio of the bending radius to the width of the heat exchange tube, results in greater additional stress and even leads to the formation of a high-stress region and local plastic deformation. When the additional stress reaches a certain value, the load-bearing capacity of the bent tube decreases, resulting in damage.

In the foregoing embodiment, by setting the ratio of the bending radius on the centerline of the heat exchange tube along the length direction to the width of the heat exchange tube to be greater than or equal to 0.6, the heat exchange tube is less prone to damage during bending and stretching, thereby reducing the probability of damage to the heat exchange tube during bending, enhancing structural strength of the heat exchange tube 1 at the bending position, and improving the sealing performance of the heat exchange tube at the bending position.

In some examples of the present application, as shown in FIG. 14, the ratio of the bending radius of the heat exchange tube to the width of the heat exchange tube may be greater than or equal to 0.8.

For example, as shown in FIG. 12, the bending radius on the centerline of the heat exchange tube along the length direction is denoted as r, and the width of the heat exchange tube is denoted as d, then the ratio of r to d may be 0.8, 1.0, 1.2, 1.4, 1.6, 1.8, 2.0, or higher.

In the foregoing embodiment, by further limiting the ratio of the bending radius of the heat exchange tube to the width of the heat exchange tube to be greater than or equal to 0.8, the probability of damage to the heat exchange tube during bending can be further reduced, the structural strength of the heat exchange tube at the bending position can be further enhanced, and the sealing performance of the heat exchange tube at the bending position can be improved.

In some examples of the present application, as shown in FIG. 14, a wall thickness of the heat exchange tube at the bending position may be greater than or equal to 0.2 mm.

For example, the wall thickness of the heat exchange tube at the bending position may be 0.2 mm, 0.3 mm, 0.4 mm, or higher.

In the foregoing embodiment, by setting the wall thickness of the heat exchange tube at the bending position to be greater than or equal to 0.2 mm, the wall thickness of the heat exchange tube at the bending position can be prevented from being excessively thin, which helps to ensure the strength of the heat exchange tube at the bending position, thereby effectively reducing the risk of leakage at the bending position of the heat exchange tube, and improving the operational reliability of the heat exchange tube.

In an embodiment of the present application, at the bending position of the heat exchange tube, a bending thinning rate of the wall thickness of the heat exchange tube may be less than or equal to 50%.

The bending thinning rate is equal to the extended thickness loss of the heat exchange tube divided by its original thickness, multiplied by 100%.

For example, the bending thinning rate of the wall thickness of the heat exchange tube may be 2%, 5%, 10%, 20%, 30%, 40%, or 50%.

In the foregoing embodiment, by setting the bending thinning rate of the wall thickness of the heat exchange tube to be less than or equal to 50%, the wall thickness loss of the heat exchange tube can be controlled within a preset range. This can prevent the wall thickness of the heat exchange tube at the bending position from being excessively thin, which helps to ensure the strength of the heat exchange tube at the bending position, thereby effectively reducing the risk of leakage at the bending position of the heat exchange tube, and improving the operational reliability of the heat exchange tube.

In some examples of the present application, the bending thinning rate of the heat exchange tube may be less than or equal to 30%.

For example, the bending thinning rate of the wall thickness of the heat exchange tube may be 2%, 5%, 10%, 20%, or 30%.

In the foregoing embodiment, by setting the bending thinning rate of the heat exchange tube to be less than or equal to 30%, the wall thickness loss of the bent heat exchange tube can be further reduced, and the strength of the heat exchange tube at the bending position can be further enhanced.

In some embodiments of the present application, the heat exchange tube may be a flat tube or a harmonica tube.

It can be understood that in some embodiments, the heat exchange tube is a flat tube, and in some other embodiments, the heat exchange tube is a harmonica tube. The flat tube refers to a tube whose cross-section perpendicular to its extension direction is non-circular, for example, an elliptical or rectangular cross-section. The harmonica tube is a type of flat tube.

Specifically, upper and lower surfaces of the flat tube are flat and have a large contact area, which can increase the heat transfer area of the heat exchange member 100, thereby improving the heat exchange effect of the heat exchange member 100. Meanwhile, the flat tube has a relatively light weight under the same bending resistance and torsion resistance. Therefore, using the flat tube as the heat exchange tube can also reduce the overall weight of the heat exchange member 100, thereby increasing the energy density of the battery 1000.

Further, one heat exchange flow channel may be formed inside the flat tube, or a plurality of heat exchange flow channels may be formed by providing partitions inside.

For example, the flat tube and the harmonica tube each may be provided with partition ribs inside, where the partition ribs may extend along a length direction of the flat tube or the harmonica tube and divide the heat exchange flow channel inside the flat tube or the harmonica tube into a plurality of sub-flow channels.

In the foregoing embodiment, by configuring the heat exchange tube as the flat tube or the harmonica tube, the heat transfer area of the heat exchange member 100 can be increased, thereby improving the heat exchange effect of the heat exchange member 100. Meanwhile, the overall weight of the heat exchange member 100 can also be reduced, thereby increasing the energy density of the battery 1000.

In some embodiments of the present application, the heat exchange tube may be an aluminum tube.

In the foregoing embodiment, by configuring the heat exchange tube as an aluminum tube, as the aluminum tube has a light weight, a low price, good structural strength, and excellent thermal conductivity, the heat exchange member 100 achieves low production and processing costs and better meets the lightweight requirements of the battery 1000, ensuring good heat exchange efficiency when the heat exchange tube performs heat exchange with the battery cells 2011, thereby achieving better heat exchange effect for the battery cells 2011.

In an embodiment of the present application, as shown in FIG. 14, the wall thickness of the heat exchange tube may be 0.2 mm-3 mm.

For example, as shown in FIG. 12, the wall thickness of the heat exchange tube is denoted as m, and then the wall thickness m of the heat exchange tube may be 0.2 mm, 0.3 mm, 0.4 mm, 0.5 mm, 0.6 mm, 0.8 mm, 1.0 mm, 1.2 mm, 1.5 mm, 1.7 mm, 2 mm, 2.4 mm, 2.6 mm, 2.8 mm, 3 mm, or the like.

In the foregoing embodiment, by setting the wall thickness of the heat exchange tube to be 0.2 mm-3 mm, the heat exchange tube has an appropriate wall thickness, preventing the wall thickness of the heat exchange tube from being excessively small, thereby ensuring the operational strength of the heat exchange tube and effectively reducing the risk of damage to the heat exchange tube; and also preventing the wall thickness of the heat exchange tube from being excessively large, which helps to reduce the overall weight of the heat exchange tube, thereby reducing the overall weight of the battery 1000 and achieving the lightweight of the battery 1000.

In an embodiment of the present application, as shown in FIG. 14, the wall thickness of the heat exchange tube may be 0.5 mm-1.2 mm.

For example, the wall thickness m of the heat exchange tube may be 0.5 mm, 0.6 mm, 0.7 mm, 0.8 mm, 0.9 mm, 1.0 mm, 1.1 mm, or 1.2 mm, or the like.

In the foregoing embodiment, by setting the wall thickness of the heat exchange tube to be 0.5 mm-1.2 mm, the strength of the heat exchange tube can be ensured while reducing the overall weight of the heat exchange tube, thereby achieving the lightweight of the battery 1000.

In an embodiment of the present application, the heat exchange member 100 may include a heat exchange plate, and the heat exchange flow channel may be formed on the heat exchange plate by stamping.

Stamping forming is a forming processing method that applies external force to plates, strips, tubes, and profiles by a press and a die to cause them to undergo plastic deformation or separation, thereby obtaining workpieces (stamped parts) with desired shapes and dimensions. Thus, the heat exchange member 100 does not need assembly, which can reduce the number of parts of the heat exchange member 100, simplify the assembly steps of the battery 1000, and increase the assembly speed of the battery 1000.

In the foregoing embodiment, stamping the heat exchange flow channel on the heat exchange plate can simplify the processing steps of the heat exchange member 100, thereby increasing the production speed of the heat exchange member 100. Meanwhile, stamping forming is simple to implement and has low material consumption, thereby further reducing the production costs of the heat exchange member 100.

In some examples of the present application, as shown in FIG. 14, a width of the heat exchange flow channel may be 3 mm-200 mm.

For example, the width f of the heat exchange flow channel may be 3 mm, 5 mm, 6 mm, 8 mm, 12 mm, 15 mm, 16 mm, 18 mm, 21 mm, 23 mm, 24 mm, 26 mm, 28 mm, 30 mm, 60 mm, 90 mm, 120 mm, 150 mm, 180 mm, or 200 mm. The width of the heat exchange flow channel may be designed according to an arrangement of the heat exchange flow channel and the width dimension of the battery cell 2011.

In the foregoing embodiment, by setting the width of the heat exchange flow channel to be 3 mm-200 mm, the width of the heat exchange flow channel is presented from being excessively large, which is conducive to arrangement of the heat exchange flow channel and can meet the required heat exchange effect of the heat exchange member 100; and also preventing the width of the heat exchange flow channel from being excessively small, which can reduce the number of arrangements of the first heat exchange section 11, thereby reducing the overall costs of the heat exchange member 100.

In an example of the present application, as shown in FIG. 14, the width f of the heat exchange flow channel may be 5 mm-80 mm.

For example, the width f of the heat exchange flow channel may be 5 mm, 7 mm, 9 mm, 12 mm, 15 mm, 16 mm, 18 mm, 21 mm, 23 mm, 24 mm, 26 mm, 28 mm, 30 mm, 40 mm, 50 mm, 60 mm, 70 mm, or 80 mm.

In the foregoing embodiment, by further limiting the width of the heat exchange flow channel to be between 5 mm and 80 mm, the width of the heat exchange flow channel can better meet the arrangement requirements of the heat exchange flow channel in the battery 1000 and the required heat exchange effect of the heat exchange member 100.

In some examples of the present application, as shown in FIG. 14, a height of the heat exchange flow channel in the second direction may be 1 mm-20 mm.

For example, the second direction may refer to direction Z shown in FIG. 3, and the height of the heat exchange flow channel in the second direction may be 1 mm, 2 mm, 3 mm, 5 mm, 6 mm, 8 mm, 9 mm, 10 mm, 12 mm, 15 mm, 16 mm, 17 mm, 19 mm, 20 mm, or the like.

In the foregoing embodiment, by setting the height of the heat exchange flow channel in the second direction to be 1 mm-20 mm, the height of the heat exchange member 100 is prevented from being excessively small, thereby ensuring the flow rate of the heat exchange fluid in the heat exchange member 100, thereby ensuring the heat exchange effect of the heat exchange member 100. Meanwhile, the height of the heat exchange member 100 is also prevented from being excessively large, which helps to reduce the space occupied by the heat exchange member 100 and achieving the miniaturization of the battery 1000.

In an example of the present application, the height of the heat exchange flow channel in the second direction may be 4 mm-6 mm.

For example, the height of the heat exchange flow channel in the second direction may be 4 mm, 5 mm, or 6 mm.

In the foregoing embodiment, by setting the height of the heat exchange flow channel in the second direction to be 4 mm-6 mm, not only can the heat exchange effect of the heat exchange member 100 be ensured, but also the space occupied by the heat exchange member 100 be reduced, thereby achieving the miniaturization of the battery 1000.

In an example of the present application, the number of heat exchange flow channels may be 2 to 4.

For example, the number of heat exchange flow channels may be 2, 3, or 4, where the number of heat exchange flow channels may be designed according to actual demands.

In the foregoing embodiment, by setting the number of heat exchange flow channels to be 2 to 4, the length of a single heat exchange flow channel can be reduced, reducing the frictional resistance of the heat exchange flow channel, and reducing the pressure drop, thereby improving the heat exchange efficiency of the heat exchange member 100.

In some embodiments of the present application, the heat exchange fluid in the heat exchange flow channel may be a mixture of water and ethylene glycol; further optionally, the heat exchange fluid is a mixture of 50% water and 50% ethylene glycol.

The heat exchange fluid is a mixture of water and ethylene glycol. Specifically, a mixing ratio of water and ethylene glycol in the heat exchange fluid may be set according to the heat exchange requirements. For example, the heat exchange fluid may be a mixture of 35% water and 65% ethylene glycol, a mixture of 38% water and 62% ethylene glycol, a mixture of 42% water and 58% ethylene glycol, a mixture of 48% water and 52% ethylene glycol, a mixture of 50% water and 50% ethylene glycol, a mixture of 52% water and 48% ethylene glycol, or the like. Further, the heat exchange fluid is a mixture of 50% water and 50% ethylene glycol. Proportions of water and ethylene glycol in the foregoing mixtures are volume ratios.

In the foregoing embodiment, the heat exchange fluid in the heat exchange flow channel is configured as a mixture of water and ethylene glycol. The ethylene glycol aqueous solution has good stability and good heat transfer performance, which can efficiently perform heat exchange operations.

In some embodiments of the present application, a thermal conductivity of the heat exchange fluid in the heat exchange flow channel may be greater than or equal to 0.3 W/(m·K); further optionally, the thermal conductivity is 0.328 W/(m·K)-0.417 W/(m·K).

For example, the thermal conductivity of the heat exchange fluid in the heat exchange flow channel may be 0.3 W/(m·K), 0.32 W/(m·K), 0.35 W/(m·K), 0.38 W/(m·K), 0.4 W/(m·K), 0.44 W/(m·K), 0.48 W/(m·K), or the like, and the heat exchange fluid may be configured according to the heat exchange requirements to meet thermal conductivity requirements for heat exchange. Further, the thermal conductivity may be set between 0.328 W/(m·K) and 0.417 W/(m·K), for example, the thermal conductivity may be 0.33 W/(m·K), 0.34 W/(m·K), 0.35 W/(m·K), 0.36 W/(m·K), 0.37 W/(m·K), 0.38 W/(m·K), 0.39 W/(m·K), 0.4 W/(m·K), 0.41 W/(m·K), or the like.

In the foregoing embodiment, by setting the thermal conductivity to be greater than or equal to 0.3 W/(m·K), the heat exchange fluid can achieve good heat exchange efficiency and heat exchange effect, thereby enabling the battery 1000 to achieve good heat exchange. Furthermore, by limiting the thermal conductivity to be between 0.328 W/(m·K) and 0.417 W/(m·K), the heat exchange fluid can achieve better heat exchange efficiency and heat exchange effect, thereby enabling the battery 1000 to achieve better heat exchange.

In some embodiments of the present application, the housing of the battery cell 2011 may be an aluminum housing.

The aluminum housing may be manufactured by processing a 3-series aluminum alloy or a 5-series aluminum alloy. The 3-series aluminum alloy includes the following components by mass percentage: aluminum ≥99.6%, copper ≤0.05%, iron ≤0.35%, magnesium ≤0.03%, manganese ≤0.03%, silicon ≤0.25%, titanium ≤0.03%, vanadium ≤0.05%, zinc ≤0.05%, and other single elements ≤0.03%. The 5-series aluminum alloy includes the following components by mass percentage: aluminum ≥96.7%, 0.05%≤copper≤0.2%, iron ≤0.7%, manganese ≤1.5%, silicon ≤0.6%, zinc ≤0.1%, other single element components ≤0.05%, and other element total components ≤0.15%. For example, the housing of the battery cell 2011 in this solution is manufactured by processing 3003 aluminum alloy in the 3-series aluminum.

In the foregoing embodiment, the housing of the battery cell 2011 is configured as an aluminum housing. The housing has a light weight, which can to some extent increase the energy density of the battery cell 2011. The aluminum housing is convenient for processing and forming, ensuring high processing and manufacturing efficiency of the battery cell 2011, and the aluminum housing has good thermal conductivity, ensuring high heat exchange efficiency for the battery cell 2011 during heat exchange, thereby achieving better heat exchange effect for the battery cell 2011.

In some embodiments of the present application, the housing of the battery cell 2011 may be a 3-series aluminum alloy part or a 5-series aluminum alloy part.

For example, the housing of the battery cell 2011 may be manufactured by processing 3003 aluminum plate, 3004 aluminum plate, 3014 aluminum plate, or the like, and the housing of the battery cell 2011 may also be manufactured by processing 5052 aluminum plate, 5083 aluminum plate, 5754 aluminum plate, 5182 aluminum plate, or the like.

In the foregoing embodiment, configuring the housing of the battery cell 2011 as a 3-series aluminum alloy part or a 5-series aluminum alloy part, can endow the housing with good processing and forming performance, corrosion resistance, thermal conductivity, and good structural strength. This enables efficient heat transfer, and ensures high heat exchange efficiency for the battery cell 2011 during heat exchange, thereby fully meeting the operational needs and protection needs of the battery cell 2011.

In some embodiments of the present application, as shown in FIG. 15, a length l of the battery cell 2011 may be 154 mm-234 mm.

For example, the length l of the battery cell 2011 may be 154 mm, 164 mm, 174 mm, 184 mm, 195 mm, 203 mm, 207 mm, 215 mm, 230 mm, 234 mm, or the like.

In the foregoing embodiment, setting the length l of the battery cell 2011 between 154 mm and 234 mm allows the battery cell 2011 to be set with a corresponding length dimension according to different operational needs, so as to meet the operational needs of the battery 1000.

In some embodiments of the present application, as shown in FIG. 15, a width w of the battery cell 2011 may be 63 mm-103 mm.

For example, the width w of the battery cell 2011 may be 63 mm, 65 mm, 68 mm, 72 mm, 73 mm, 76 mm, 80 mm, 85 mm, 91 mm, 95 mm, 100 mm, 103 mm, or the like.

In the foregoing embodiment, setting the width of the battery cell 2011 between 63 mm and 103 mm allows the battery cell 2011 to be set with a corresponding width dimension according to different operational needs, so as to meet the operational needs of the battery 1000.

In some embodiments of the present application, as shown in FIG. 15, a wall thickness δ of the housing of the battery cell 2011 may be 0.4 mm-1 mm.

For example, the wall thickness δ of the housing of the battery cell 2011 may be 0.4 mm, 0.5 mm, 0.6 mm, 0.7 mm, 0.8 mm, 0.9 mm, 1 mm, or the like.

In the foregoing embodiment, by setting the wall thickness δ of the housing of the battery cell 2011 between 0.4 mm and 1 mm, the housing can have sufficient strength to well protect a battery cell 2011, ensuring a stable and reliable operation of the battery cell 2011. In addition, a smaller wall thickness of the housing facilitates the heat transfer between an interior and an exterior of the battery cell 2011, thereby enabling the battery cell 2011 to achieve better heat exchange effect.

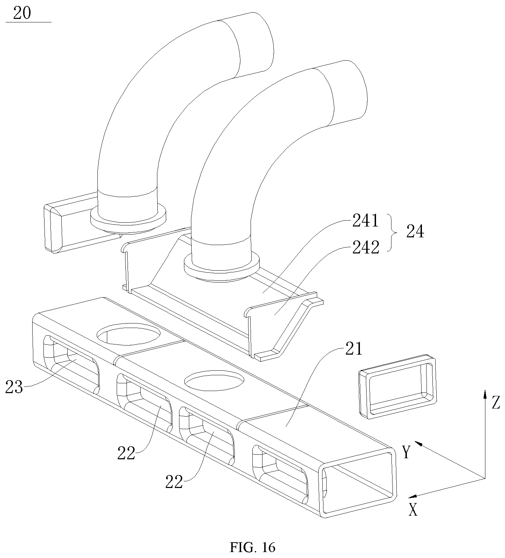

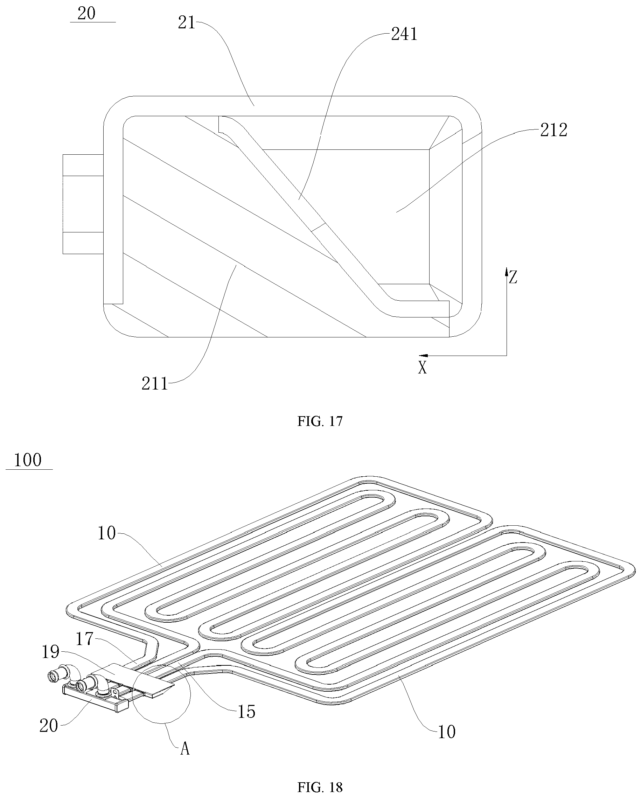

Descriptions of the current collector 20 according to the embodiments of the present application will be made below with reference to FIG. 16 and FIG. 17. FIG. 16 is a schematic diagram of a current collector 20 according to an embodiment of the present application; and FIG. 17 is a schematic diagram of a current collector 20 from another perspective according to an embodiment of the present application.

In a specific example of the present application, as shown in FIG. 16 and FIG. 17, the heat exchange member 100 may further include a current collector 20, where the current collector 20 may include: a tube body 21, a plurality of first flow channel interfaces 22, a plurality of second flow channel interfaces 23, and a partition structure 24.

The plurality of first flow channel interfaces 22 are in one-to-one correspondence with and connected to first inlets/outlets of the plurality of heat exchange channels; the plurality of second flow channel interfaces 23 are in one-to-one correspondence with and connected to second inlets/outlets of the plurality of heat exchange channels, and along an extension direction of the tube body 21, at least two second flow channel interfaces 23 are respectively located on two sides of the plurality of first flow channel interfaces 22; and the partition structure 24 is provided inside the tube body 21, the partition structure 24 separates the first flow channel interfaces 22 from the second flow channel interfaces 23 inside the tube body 21, and the plurality of second flow channel interfaces 23 communicate inside the tube body 21.

Specifically, the tube body 21 may be configured for collection and distribution of the heat exchange fluid; the first flow channel interfaces 22 and the second flow channel interfaces 23 are provided on the tube body 21, and the first flow channel interfaces 22 and the second flow channel interfaces 23 are respectively connected to inlets/outlets of the heat exchange flow channels for inputting and outputting the heat exchange fluid to the current collecting tube. The partition structure 24 is provided inside the tube body 21 and separates the first flow channel interfaces 22 from the second flow channel interfaces 23 inside the tube body 21, meaning that the first flow channel interfaces 22 and the second flow channel interfaces 23 do not communicate inside the tube body 21, allowing the first flow channel interfaces 22 and the second flow channel interfaces 23 to respectively serve as an input end and an output end of the heat exchange flow channel, enabling the tube body 21 and the heat exchange flow channel to form a complete channel, ensuring the heat exchange fluid to enter a heat exchange flow channel from the tube body 21 for heat exchange and then be discharged from the tube body 21, and completing the heat exchange work. Therefore, the liquid inlet and liquid outlet work can be completed using one tube body 21, reducing the number of current collecting tubes, thereby reducing the production costs of the thermal management assembly and the space occupied by the thermal management assembly.

In addition, the first flow channel interfaces 22 and the second flow channel interfaces 23 are both provided in plurality. For example, the number of first flow channel interfaces 22 and the number of second flow channel interfaces 23 may both be two, three, or higher. The plurality of second flow channel interfaces 23 communicate inside the tube body 21, and along the extension direction of the tube body 21, at least two second flow channel interfaces 23 are respectively located on two sides of the first flow channel interfaces 22, that is, at least two second flow channel interfaces 23 are provided at two ends of the tube body 21, and the plurality of first flow channel interfaces 22 are provided between the at least two second flow channel interfaces 23.

In this way, the heat exchange fluid can flow out of the tube body 21 from second flow channel interfaces 23 on two sides, and after heat exchange, return to the tube body 21 from first flow channel interfaces 22 in the middle, or the heat exchange fluid can flow out of the tube body 21 from first flow channel interfaces 22 in the middle region of the tube body 21, and after heat exchange, return to the tube body 21 from second flow channel interfaces 23 at two ends of the tube body 21. Thus, the heat exchange fluid can flow from the periphery of the battery 1000 to the middle region for heat exchange, or the heat exchange fluid can flow from the middle region of the battery 1000 to the periphery for heat exchange, improving the temperature uniformity of the battery 1000, thereby reducing the assembly steps and mounting space of the thermal management assembly, improving the temperature uniformity effect of the battery 1000, and extending the service life of the battery 1000.

In the foregoing embodiment, by providing the current collector 20 and using the partition structure 24 to separate the plurality of first flow channel interfaces 22 from the plurality of second flow channel interfaces 23, and the plurality of second flow channel interfaces 23 communicate inside the tube body 21, the first flow channel interfaces 22 and the second flow channel interfaces 23 can respectively form the input end and the output end of the heat exchange flow channel, so as to complete the liquid inlet and liquid outlet work using one tube body 21, reducing the number of current collecting tubes, and further reducing the external communication pipelines used, thereby reducing the production costs and occupied space of the thermal management assembly and reducing the assembly steps and mounting space of the thermal management assembly. In addition, the second flow channel interface 23 is provided in plurality, and at least two second flow channel interfaces 23 are located on two sides of the first flow channel interfaces 22, enabling the heat exchange fluid to flow from the periphery of the battery 1000 to the middle region for heat exchange or from the middle region of the battery 1000 to the periphery for heat exchange, thereby improving the temperature uniformity of the battery 1000 and extending the service life of the battery 1000.

Further, as shown in FIG. 16 and FIG. 17, the tube body 21 may be partitioned by the partition structure 24 into a first space 211 and a second space 212 that are independent of each other, where the first space 211 communicates with the first flow channel interfaces 22, the second space 212 communicates with the second flow channel interfaces 23, and along the extension direction of the tube body 21, the second space 212 includes a first segment, a second segment, and a third segment that are sequentially connected, the first segment and the third segment are respectively located on two sides of the first space 211, and the second segment is arranged side by side with the first space 211.

Specifically, the first space 211 and the second space 212 may be independent of each other and not communicate with each other, forming two independent flow channels. The second space 212 includes a first segment, a second segment, and a third segment that are sequentially connected, the second flow channel interfaces 23 are provided at positions of both the first segment and the third segment, the second space 212 can connect the plurality of second flow channel interfaces 23, the first space 211 is arranged side by side with the second segment, and the first space 211 communicates with the first flow channel interfaces 22, thereby providing the first flow channel interfaces 22 at the middle position of the plurality of second flow channel interfaces 23.

For example, as shown in FIG. 16, there are two first flow channel interfaces 22 and two second flow channel interfaces 23, the two second flow channel interfaces 23 are provided on two sides of the two first flow channel interfaces 22, and in a length direction of the tube body 21, a cross-section of the second space 212 is "C"-shaped, and the first space 211 is arranged parallel to the second segment and provided between the first segment and the third segment.

In the foregoing embodiment, by providing the first space 211 and the second space 212 to be independent of each other and not communicate with each other, two independent flow channels can be formed inside the tube body 21, preventing the liquid inlet and liquid outlet of the heat exchange fluid from interfering with each other. Meanwhile, the first space 211 and the second space 212 are arranged side by side, reducing the dimensions of the tube body 21, thereby reducing the space occupied by the current collecting tube.

Further, as shown in FIG. 16 and FIG. 17, the partition structure 24 may include a first partition plate 241 and a second partition plate 242, where the first partition plate 241 is configured to separate the second segment from the first space 211, the second partition plate 242 includes at least two and is respectively located at two ends of the first partition plate 241 along the extension direction of the tube body 21, and the second partition plate 242 is configured to separate the first segment from the first space 211, and the third segment from the first space 211.

Specifically, the first partition plate 241 may be formed as a plate of a certain dimension, the dimension of the first partition plate 241 may be set according to the dimension of the tube body 21 and positions of the first flow channel interfaces 22, the first partition plate 241 extends along the length direction of the tube body 21 (for example, direction Y shown in FIG. 16), two ends of the first partition plate 241 in a width direction are sealingly connected to an inner wall surface of the tube body 21, and in the width direction of the tube body 21 (for example, direction X shown in FIG. 16), the first partition plate is configured to separate the second segment from the first space 211, allowing the second segment and the first space 211 to be arranged side by side in the width direction of the tube body 21.

There are at least two second partition plates 242, that is, the second partition plate 242 may be provided in two, three, or more. When there are only two second partition plates 242, the second partition plates 242 are respectively located at two ends of the first partition plate 241 in the length direction and are sealingly connected to the first partition plate 241 and an inner wall surface of the tube body 21, thereby allowing the first space 211 and the second space 212 to be completely independent and not communicate with each other.

In the foregoing embodiment, by providing the first partition plate 241 and the second partition plate 242, two independent spaces can be formed inside the tube body 21, preventing the liquid inlet and liquid outlet from interfering with each other, thereby improving the heat exchange effect of the battery 1000.

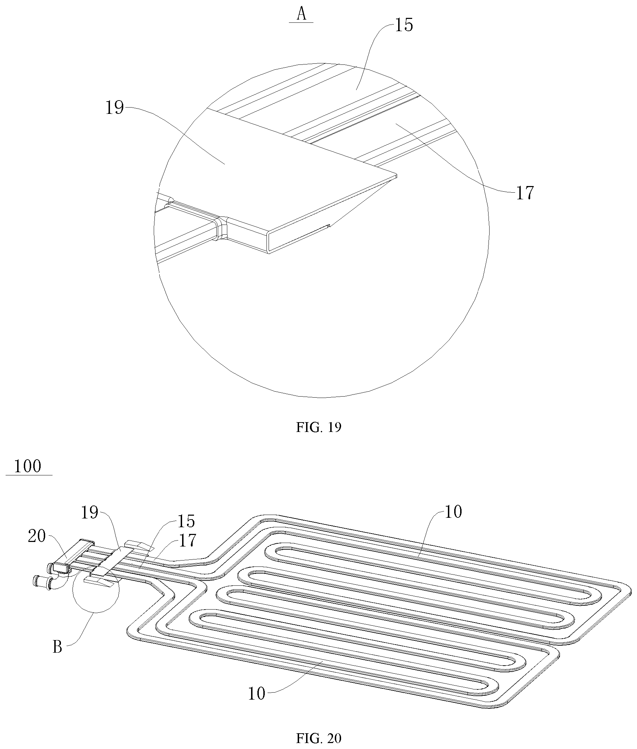

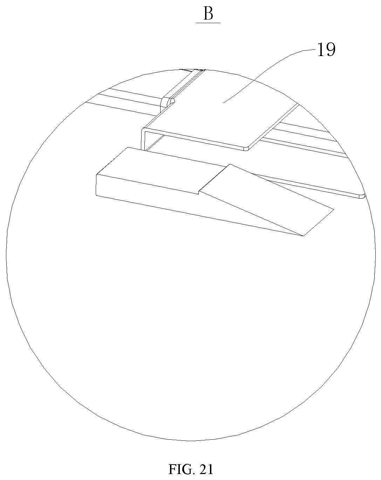

Descriptions of the mounting member 19 according to embodiments of the present application will be made below with reference to FIG. 18 to FIG. 21. FIG. 18 is a schematic diagram of a heat exchange member 100 according to another embodiment of the present application, FIG. 19 is an enlarged view of position A circled in FIG. 18, FIG. 20 is a schematic diagram of a heat exchange member 100 shown in FIG. 18 from another perspective, and FIG. 21 is an enlarged view of position B circled in FIG. 20.

In some embodiments of the present application, as shown in FIG. 18 to FIG. 21, the heat exchange member 100 may further include: a first tube portion, a second tube portion, and a mounting member 19. One end of the first tube portion is formed as the first inlet/outlet of the heat exchange flow channel; and one end of the second tube portion is formed as the second inlet/outlet of the heat exchange flow channel.

Specifically, the first tube portion and the second tube portion are mainly used for the current collector 20 for providing the heat exchange fluid to the heat exchange flow channel or discharging the heat-exchanged heat exchange fluid, allowing the heat exchange member 100 to achieve heat exchange. Both the first inlet/outlet and the second inlet/outlet may be used for the liquid inlet and liquid outlet of the heat exchange fluid, and when the first inlet/outlet serves as a liquid inlet end of the heat exchange fluid, the second inlet/outlet serves as a liquid outlet end of the heat exchange fluid; when the first inlet/outlet serves as a liquid outlet end of the heat exchange fluid, the second inlet/outlet serves as a liquid inlet end of the heat exchange fluid.

The mounting member 19 is configured to be sealingly connected to a box 300 of the battery 1000, a through hole communicating spaces on two sides of the mounting member 19 is formed on the mounting member 19, and the first tube portion and/or the second tube portion pass through the through hole and are sealingly connected to a periphery of the through hole. That is, at least one of the first tube portion and the second tube portion passes through the through hole and is sealingly connected to the through hole.

Specifically, spaces on two sides of the mounting member 19 are respectively a space for placing the heat exchange member 100 and a space for connecting the first inlet/outlet and the second inlet/outlet to an external pipeline, where the mounting member 19 is configured to be sealingly connected to the box 300 of the battery 1000, thereby allowing the spaces on two sides of the mounting member 19 to be independent of each other. In this way, when leakage occurs at connections between the first inlet/outlet and the current collector 20 and between the second inlet/outlet and the current collector 20, the heat exchange fluid does not enter the space for placing the heat exchange member 100, thereby effectively reducing the risk of corrosion to the heat exchange member 100.

In the prior art, to reduce the risk of corrosion to the heat exchange member 100, gaps between the first pipeline and the box 300 and between the second pipeline and the box 300 are usually sealed, which requires a large amount of sealing structural adhesive and more manpower, resulting in low production efficiency and high production costs of the battery 1000.

After the mounting member 19 is sealed with the first pipeline and the second pipeline, the mounting member 19 is then sealed with the box 300. This not only increases structural strength at positions of the first pipeline and the second pipeline, but also reduces manpower and materials required for sealing, thereby increasing the production speed of the battery 1000 and reducing the manpower costs for producing the battery 1000.

In the foregoing embodiment, by providing the mounting member 19, the needs for separate sealing between the first tube portion and the box 300 and between the second tube portion and the box 300 is eliminated during assembly of the battery 1000, which can reduce manpower and materials required for assembly of the battery 1000, thereby increasing the production speed of the battery 1000 and reducing the manpower costs for producing the battery 1000.

Further, as shown in FIG. 19 and FIG. 21, the mounting member 19 may have a cavity with an opening on one side, the mounting member 19 has a mounting plate disposed opposite the opening of the cavity, the through hole penetrates the mounting plate, the mounting member 19 is adapted to be provided between a bottom plate of the box 300 and a bottom guard plate 302, and an outer peripheral surface of the mounting member 19 is adapted to be sealingly connected to the bottom plate and the bottom guard plate 302.

The mounting member 19 has a cavity with an opening on one side, the opening side of the mounting member 19 may face one side of the space where the first inlet/outlet and the second inlet/outlet are located, or may face one side of the space facing away from the first inlet/outlet and the second inlet/outlet.

Further, the opening side of the mounting member 19 faces one side of the space facing away from the first inlet/outlet and the second inlet/outlet, for example, the opening of the cavity faces away from the current collector 20, which can effectively prevent dust and other impurities from accumulating in the mounting member 19.

The mounting member 19 is adapted to be provided between the box body 301 and the bottom guard plate 302, that is, the heat exchange member 100 may be disposed between the bottom plate of the box 300 and a guard plate, that is, the heat exchange member 100 is disposed outside the box body 301, which can effectively reduce the damage to the battery cell 2011 due to leakage of the heat exchange member 100. In addition, the bottom guard plate 302 is provided on a lower side of the box body 301, which can further enhance the structural strength of the bottom of the battery 1000, increase the load-bearing strength of the bottom plate, and also protect against bottom impact, thereby effectively eliminating the safety issues caused by bottom impact to a plurality of battery cells 2011 and the heat exchange member 100.

An outer peripheral surface of the mounting member 19 is adapted to be sealingly connected to the bottom plate and the bottom guard plate 302. It should be noted that the outer peripheral surface of the mounting member 19 may be designed according to specific structures of the bottom plate and the bottom guard plate 302. For example, both the bottom plate and the bottom guard plate 302 are flat plates, and the outer peripheral surface of the mounting member 19 is also formed as a flat plate shape, allowing sealing connection with the bottom plate and the bottom guard plate 302, and increasing sealing performance of the bottom plate and the bottom guard plate 302.

For example, as shown in FIG. 19 and FIG. 21, the mounting member 19 may include a first plate, a second plate, and a mounting plate, where the mounting plate is vertically provided, the first plate is horizontally provided and connected to one end of the mounting plate in direction Z, the second plate is horizontally provided and connected to the other end of the mounting plate in direction Z, and the first plate and the second plate are located on the same side of the mounting plate in a thickness direction of the mounting plate and are spaced apart. A plurality of through holes are formed on the mounting plate, the plurality of through holes are respectively a first through hole and a second through hole, the first tube portion is provided through the first through hole, and the second tube portion is provided through the second through hole.

Further, the first tube portion is welded to a periphery of the first through hole, and the second tube portion is welded to a periphery of the second through hole.

Further, the first through hole is provided in one or plurality, and the first through holes are in one-to-one correspondence with the first tube portions. The second through hole is provided in one or plurality, and the second through holes are in one-to-one correspondence with the second tube portions.

Further, one end of the first plate is connected to the mounting plate and the other end extends toward the first heat exchange section 11, and one end of the second plate is connected to the mounting plate and the other end extends toward the first heat exchange section 11. Further, in a direction from the mounting member 19 toward the first heat exchange section 11, a length of the first plate is different from a length of the second plate. For example, the length of the first plate is less than the length of the second plate, specifically, the length of the first plate is less than two-thirds of the length of the second plate.

Further, the first plate, the second plate, and the mounting plate are integrally formed.

Further, the mounting member 19 further includes stoppers, where the stoppers are disposed at two ends of the mounting plate in a length direction of the mounting plate, and the stoppers are connected to and sealingly connected to the mounting plate, the first plate, and the second plate. For example, the stoppers may be welded or adhesively connected to the mounting plate, the first plate, and the second plate. The mounting plate, the first plate, the second plate, and two stoppers enclose a cavity.

A surface of the stopper facing away from the mounting plate is formed as an inclined surface, the length of the first plate is less than the length of the second plate, one end of the inclined surface facing the first plate is flush with one end of the first plate facing away from the mounting plate, and in a direction from the first plate toward the second plate, the other end of the inclined surface extends obliquely to one end of the second plate facing away from the mounting plate.

In addition, it should also be noted that a seal is provided around a periphery of the heat exchange member 100, the seal extends circumferentially along the heat exchange member 100, and the seal extends into a ring shape, or after the seal surrounds the heat exchange member 100, two ends of the seal are connected to the mounting member 19. The seal may be a sealant.

In the foregoing embodiment, by providing the mounting member 19 as a cavity with an opening on one side, the overall weight of the mounting member 19 can be reduced, thereby reducing the overall weight of the entire battery 1000, and achieving the lightweight of the battery 1000. Meanwhile, the mounting member 19 is adapted to be provided between the bottom plate of the box 300 and the bottom guard plate 302, allowing the bottom plate to isolate the heat exchange member 100 and a plurality of battery cells 2011, preventing damage to the plurality of battery cells 2011 when the heat exchange member 100 is damaged, thereby reducing the maintenance costs of the battery 1000.

In some embodiments of the present application, as shown in FIG. 25, the first heat exchange portion 111 may extend along the third direction.

It should be noted that the first heat exchange portion 111, the third heat exchange portion 122, and the fourth heat exchange portion 125 may all extend along the third direction, and the second heat exchange portion 121 extends along the first direction, allowing the plurality of first heat exchange portions 111 connected to form an S-shaped heat exchange flow channel extending along the first direction.

For example, as shown in FIG. 25, the third direction is a length direction of the battery cell 2011, that is, direction Y shown in FIG. 25, thus the first heat exchange portion 111 extends along the length direction of the battery cell 2011 and performs heat exchange with the battery cell 2011, allowing an increase in the heat exchange area between the first heat exchange portion 111 and the battery cell 2011, thereby improving the heat exchange effect of the battery cell 2011.

In the foregoing embodiment, by providing the first heat exchange portion 111 to extend along the third direction, the diversity of arrangement of the first heat exchange flow channel 10 can be increased, thereby increasing the adaptability of the heat exchange member 100, and enabling the heat exchange member 100 to meet the cooling requirements of different batteries 1000.

In some specific embodiments of the present application, the first heat exchange portion 111 extends along the first direction.

It can be understood that an extension direction of the first heat exchange portion 111 is the same as an extension direction of the second heat exchange portion 121, and the first heat exchange portion 111 and the second heat exchange portion 121 are arranged parallel and spaced apart.

For example, as shown in FIG. 26, the first direction is a thickness direction of the battery cell 2011, that is, direction X shown in FIG. 26. In this case, both the first heat exchange portion 111 and the second heat exchange portion 121 can perform heat exchange for the plurality of battery cells 2011, which helps to reduce the number of first heat exchange portions 111, reduce the number of bends of the first heat exchange flow channel 10, reduce pressure drop of the heat exchange fluid in the first heat exchange flow channel 10, and improve the heat exchange efficiency.

In the foregoing embodiment, by providing the first heat exchange portion 111 to extend along the first direction, the number of first heat exchange portions 111 can be reduced, the number of bends of the first heat exchange flow channel 10 can be reduced, pressure drop of the heat exchange fluid in the first heat exchange flow channel 10 can be reduced, and heat exchange efficiency can be improved.

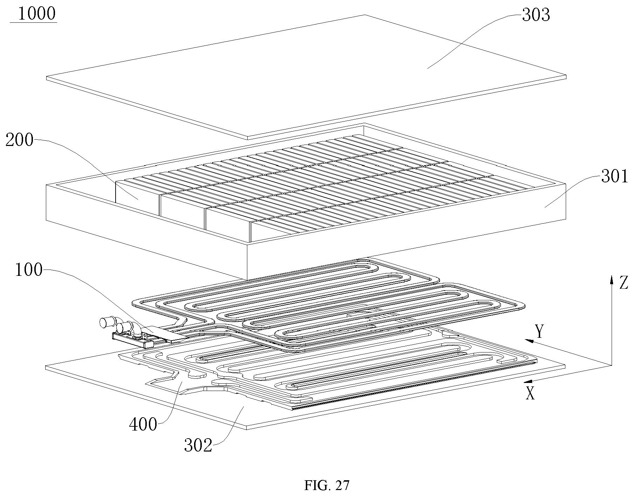

In some embodiments of the present application, as shown in FIG. 27, the battery 1000 further includes a box 300, the box 300 includes a box body 301, the box body 301 is an integrally stamped part and includes a bottom wall and a surrounding wall, and the battery assembly 200 is provided in the box body 301.

Specifically, an accommodating cavity with an opening on one side is formed inside the box body 301, the plurality of battery cells 2011 are provided in the accommodating cavity, and the box body 301 provides mounting space for the plurality of battery cells 2011, the plurality of battery cells 2011 being core components of the battery 1000, mainly used for storing and releasing energy.

Stamping forming is a forming processing method that applies external force to plates, strips, tubes, and profiles by a press and a die to cause them to undergo plastic deformation or separation, thereby obtaining workpieces (stamped parts) with desired shapes and dimensions. Stamping forming can achieve thin-walled, lightweight, good-rigidity, high-surface-quality, complex-shaped parts that cannot or are difficult to manufacture by other processing methods, and also has advantages such as high material utilization rate, convenient operation, and low production costs.

A shape and dimension of the box body 301 may be reasonably set according to the operational requirements of the battery 1000, the box body 301 may be integrally stamped from a stamped part, and the box body 301 includes a bottom wall and a surrounding wall. Specifically, the box body 301 may include a frame extending circumferentially along the box body 301 into a ring shape and the bottom plate, the frame and the bottom plate may cooperate to form the accommodating cavity of the box body 301, and the battery assembly 200 may be disposed in the accommodating cavity of the box body 301. A surface of the bottom plate facing the battery assembly 200 may be formed as the bottom wall of the box body 301, a peripheral surface of the frame facing the battery assembly 200 is formed as the surrounding wall of the box body 301, the surrounding wall may be formed by cooperation of a plurality of side walls of the accommodating cavity, and the bottom wall may extend along a plane where the first direction and the third direction are located.

Optionally, the box 300 further includes a cover plate 303, where the cover plate 303 is formed as a horizontally disposed flat plate shape, and the cover plate 303 is provided on one side of the box 300 facing away from the bottom wall for sealing the box 300.

Optionally, the cover plate 303 may be a carbon steel plate, an aluminum plate, or a composite material plate.

In the foregoing embodiment, by providing the box body 301 as an integrally stamped part, the processing steps of the box 300 can be reduced, the production costs of the box 300 can be lowered, and the overall weight of the box 300 can be decreased while ensuring the rigidity of the box 300, thereby reducing the overall weight of the battery 1000 and reducing the load of the vehicle 1.

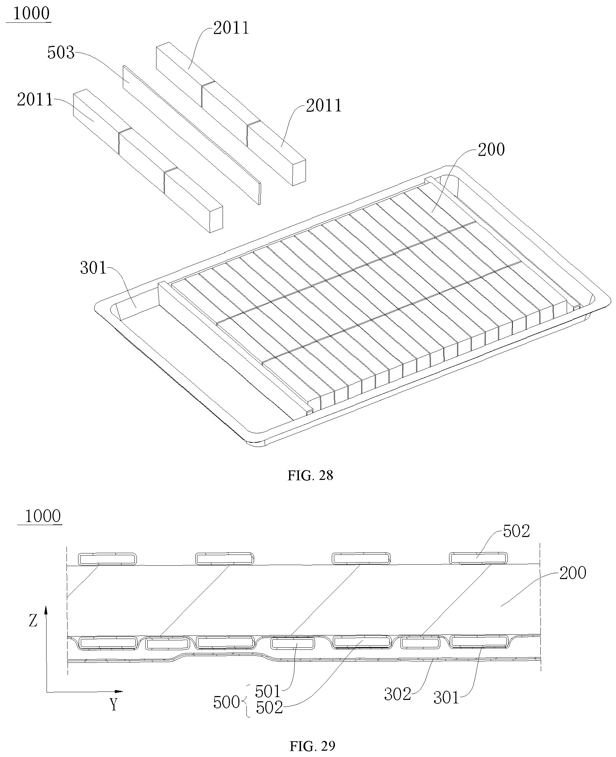

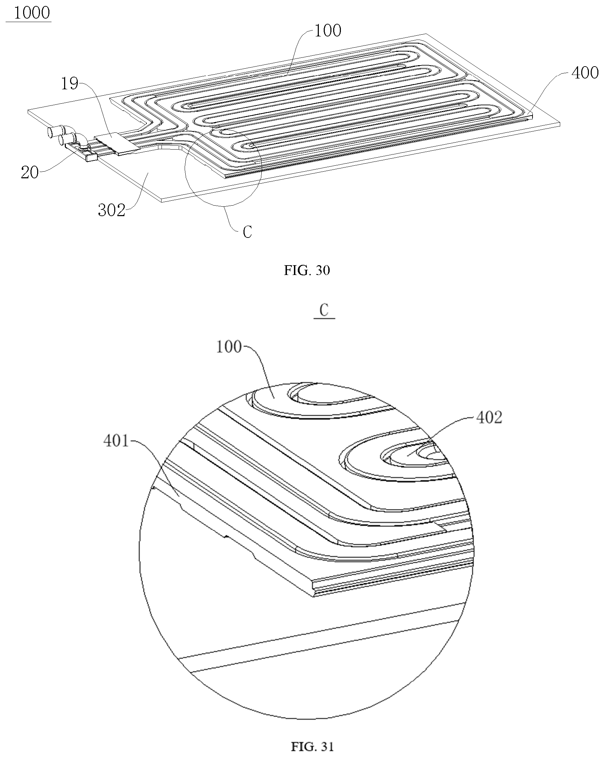

As shown in FIG. 27 to FIG. 31, FIG. 27 is an exploded view of a battery 1000 according to still another embodiment of the present application; FIG. 28 is a partial schematic diagram of a battery 1000 according to yet another embodiment of the present application; FIG. 29 is a partial cross-sectional view of a battery 1000 according to another embodiment of the present application; FIG. 30 is a partial schematic diagram of a battery 1000 shown in FIG. 27; and FIG. 31 is an enlarged view of position C circled in FIG. 30.

The box 300 may further include a bottom guard plate 302, the bottom guard plate 302 is provided on a lower side of the box body 301, the heat exchange member 100 is provided between the box body 301 and the bottom guard plate 302, the battery 1000 may further include a foam member 400, and at least a portion of the foam member 400 is filled in gaps formed by bending of heat exchange tubes of the heat exchange member 100.

The bottom guard plate 302 is provided and disposed on a lower side of the box body 301, the bottom guard plate 302 may be sealingly connected to the bottom plate of the box body 301, and the bottom guard plate 302 may be detachably connected and fixed to the box body 301. The heat exchange member 100 is provided between the box body 301 and the bottom guard plate 302, and the heat exchange member 100 may abut against and be in contact with an outer surface of a lower side of the bottom plate of the box body 301 to perform heat exchange operations for the battery assembly 200 in the box body 301.

A portion of the foam member 400 may be filled in gaps formed by bending of the heat exchange tubes of the heat exchange member 100, or all of the foam member 400 may be filled in gaps formed by bending of the heat exchange tubes of the heat exchange member 100. The gaps formed by bending of the heat exchange tubes of the heat exchange member 100 mainly include gaps between the plurality of first heat exchange portions 111 in the first heat exchange section 11, gaps between the first heat exchange section 11 and the second heat exchange section 12, gaps between the first heat exchange section 11 and the third heat exchange section 13, gaps between the first inlet/outlet section 15 and the second inlet/outlet section 17, and the like.

Further, when the number of heat exchange tubes of the heat exchange member 100 is a plurality, the foam member 400 may also be filled in gaps between adjacent heat exchange tubes.

Further, a portion of the foam member 400 may also be filled on an outer circumferential side of the heat exchange member 100.

Specifically, the foam member 400 is a component formed by foaming a foaming material, where the component formed by foaming has a honeycomb or porous structure. Thus, when the battery 1000 is subjected to external impact, a porous structure of the foam member 40040 can absorb a certain amount of impact energy, thereby further reducing the probability of damage to the heat exchange member 100.

Optionally, the forming of the foam member 400 may be foaming in a foaming mold, where the foam member 400 may be integrally connected to the bottom guard plate 302 by foaming in a foaming mold, or may be integrally connected to the box body 301 by foaming in a foaming mold, allowing the foam member 400 to be integrally formed with the bottom guard plate 302 or the box body 301, thereby reducing the number of parts, simplifying the assembly steps, improving the assembly efficiency, and improving the connection reliability between the foam member 400 and the bottom guard plate 302 or the box body 301. In addition, the foam member 400 may also be directly foamed in the box 300. Specifically, a foaming material may be directly filled between the bottom guard plate 302, the heat exchange member 100, and the box body 301, allowing the foaming material to be formed in gaps between the bottom guard plate 302, the heat exchange member 100, and the box body 301.

In the foregoing embodiment, by providing the foam member 400 and filling at least a portion of the foam member 400 in the gaps formed by bending of the heat exchange tubes of the heat exchange member 100, a certain fixing effect on the heat exchange member 100 can be provided, enabling the heat exchange member 100 to be more stably disposed between the bottom guard plate 302 and a bottom wall of the box body 301. Meanwhile, when the battery 1000 is subjected to external impact, the foam member 400 can also absorb a certain amount of impact energy, providing a certain protection effect on the heat exchange member 100, thereby further reducing the probability of damage to the heat exchange member 100.

In some examples of the present application, as shown in FIG. 27, FIG. 30, and FIG. 31, the foam member 400 may include a main body 401 and a plurality of ribs 402, where the plurality of ribs 402 are formed on one side surface of the main body 401 in a thickness direction of the main body 401, the plurality of ribs 402 cooperate with the main body 401 to define an accommodating groove, the heat exchange tube is disposed in the accommodating groove, and the thickness of the heat exchange tube is greater than a depth of the accommodating groove.

The foam member 400 is formed with a plurality of ribs 402, and the plurality of ribs 402 cooperate with the main body 401 to form an accommodating groove, and a shape of the accommodating groove may be adapted to arrangement of the heat exchange tube. There may be two, three, four, or the like ribs 402, and the number and direction of ribs 402 may be correspondingly set according to an arrangement form of the heat exchange tube. The thickness of the heat exchange tube is greater than the depth of the accommodating groove. After the heat exchange tube and the foam member 400 are assembled, one side of the heat exchange tube in the thickness direction protrudes beyond the accommodating groove and the ribs 402, and when the heat exchange member 100 is assembled with the bottom guard plate 302, the foam member 400, and the box body 301, the ribs 402 of the foam member 400 may have a certain gap with an outer surface of the bottom plate of the box body 301, and the heat exchange tube may abut against the outer surface of a bottom plate of the box body 301.

In the foregoing embodiment, by setting the thickness of the heat exchange tube to be greater than the depth of the accommodating groove, the heat exchange tube can efficiently abut against and be assembled with the box body 301 during assembly, thereby allowing the heat exchange tube to efficiently perform heat exchange for the battery assembly 200 in the box body 301.

In some examples of the present application, as shown in FIG. 28, a thermal management system of the battery 1000 may further include a third temperature regulation member 503, the third temperature regulation member 503 is provided in the box 300 and located between two adjacent battery cells 2011, and a structure of the third temperature regulation member 503 is the same as or different from a structure of the heat exchange member 100.

The third temperature regulation member 503 is provided between two adjacent battery cells 2011, and when the third heat exchange member 100 performs heat exchange operations with the battery cell 2011, heat in the battery cell 2011 may be transferred from the housing of the battery cell 2011 to the third temperature regulation member 503, or the third temperature regulation member 503 may transfer heat to the battery cell 2011 through the housing. The structure of the third heat exchange member 100 may be the same as the structure of the heat exchange member 100, and the structure of the third heat exchange member 100 may also be different from the structure of the heat exchange member 100, and the structure of the third heat exchange member 100 may be reasonably set according to the heat exchange requirements.

In the foregoing embodiment, by providing the third temperature regulation member 503 between adjacent battery cells 2011, the battery cells 2011 in the battery assembly 200 can achieve better heat exchange effects, thereby enabling the thermal management system of the battery 1000 to better regulate the temperature in the battery 1000, and ensuring more stable operation of the battery 1000.

In an embodiment of the present application, as shown in FIG. 29, a thermal management system of the battery 1000 may include a temperature regulation member 500, the temperature regulation member 500 includes at least one of a first temperature regulation member 501 and a second temperature regulation member 502, the first temperature regulation member 501 is provided outside the box body 301 and is in contact with an outer wall of the box body 301; the second temperature regulation member 502 is provided in the box 300 and located between any side of an outer peripheral surface of the battery cell 2011 and the box 300; and at least one of the first temperature regulation member 501 and the second temperature regulation member 502 forms the heat exchange member 100.

The thermal management system of the battery 1000 provides the temperature regulation member 500 to regulate the temperature in the battery 1000, the temperature regulation member 500 may include the first temperature regulation member 501, the temperature regulation member 500 may also include the second temperature regulation member 502, and the temperature regulation member 500 may also include the first temperature regulation member 501 and the second temperature regulation member 502. The arrangement of the first temperature regulation member 501 and the second temperature regulation member 502 in the battery 1000 may be reasonably arranged according to the operational requirements of the thermal management system of the battery 1000 and operating requirements of the battery 1000. The number of first temperature regulation members 501 may be reasonably set as required, and the number of second temperature regulation members 502 may also be set as required.

The first temperature regulation member 501 is provided outside the box body 301 and is in contact with an outer wall of the box body 301. Exemplarily, the first temperature regulation member 501 may be disposed on one side of the battery assembly 200 in the second direction. Specifically, the first temperature regulation member 501 may be in contact with an outer wall of the bottom plate with the bottom wall of the box body 301, and when the first temperature regulation member 501 performs heat exchange with the battery assembly 200, the first temperature regulation member 501 may perform heat exchange with the battery assembly 200 in the box body 301 through the box body 301. The second temperature regulation member 502 is provided in the box 300 and located between the box 300 and any side of the outer peripheral surface of the battery cell 2011. For example, an arrangement position of the second temperature regulation member 502 may be the same as an arrangement position of the first temperature regulation member 501. The second temperature regulation member 502 may also be disposed between the battery assembly 200 and the bottom wall, the second temperature regulation member 502 may also be disposed between any side wall or a plurality of side walls of the surrounding wall and the battery assembly 200, and the second temperature regulation member 502 may also be disposed between one side of the battery assembly 200 facing away from the bottom wall and the box 300.

At least one of the first temperature regulation member 501 and the second temperature regulation member 502 may form the heat exchange member 100. For example, when the thermal management system of the battery 1000 is provided with the first temperature regulation member 501 but not the second temperature regulation member 502, the first temperature regulation member 501 may be formed as the heat exchange member 100, when the thermal management system of the battery 1000 is provided with the second temperature regulation member 502 but not the first temperature regulation member 501, the second temperature regulation member 502 may be formed as the heat exchange member 100, and when the thermal management system of the battery 1000 is provided with the first temperature regulation member 501 and the second temperature regulation member 502, one or all of the first temperature regulation member 501 and the second temperature regulation member may be formed as the heat exchange member 100.

In the foregoing embodiment, by providing the first temperature regulation member 501 outside the box body 301, the space occupied by the first temperature regulation member 501 in the box body 301 can be reduced, ensuring more convenient arrangement of the battery assembly 200 in the box body 301. This can reduce adverse effects of the first temperature regulation member 501 on the operating environment of the battery assembly 200 in the box body 301, and ensures more stable and reliable operation of the battery assembly 200, thereby to some extent ensuring more stable and reliable operation of the battery 1000. Providing the second temperature regulation member 502 between the box 300 and the battery assembly 200 allows more direct and efficient heat transfer when the second temperature regulation member 502 performs heat exchange with the battery assembly 200, enabling the second temperature regulation member 502 to perform heat exchange with the battery assembly 200 more effectively, enabling the second temperature regulation member 502 to perform temperature regulation operations more effectively, thereby ensuring more stable operation of the battery 1000.

Forming at least one of the first temperature regulation member 501 and the second temperature regulation member 502 as the heat exchange member 100 enables the thermal management system of the battery 1000 to perform thermal management on the battery 1000 more effectively, allowing the battery assembly 200 to operate in a good temperature environment during operation of the battery 1000, thereby ensuring more stable operation of the battery 1000 and better battery performance.

In a second aspect, an embodiment of the present application provides an electric apparatus including the battery 1000 according to embodiments of the first aspect.

The electric apparatus according to this embodiment of the present application, by providing the battery 1000 of the foregoing first aspect embodiment, setting the heat exchange area between the heat exchange tube and the battery cell 2011 to be greater than or equal to 15% of the wall surface area of the battery cell 2011 can increase the heat exchange rate between the heat exchange tube and the battery cell 2011, enabling the battery cell 2011 to stably achieve good cooling and heat dissipation effects or heating and temperature rise effects, thereby making the temperature distribution within the battery assembly 200 more uniform, ensuring more stable and reliable operation of the battery 1000, and allowing the battery 1000 to maintain good battery performance.

Descriptions of the battery 1000 according to two specific implementable examples of the present application will be made below with reference to FIG. 2 to FIG. 31.

### Example 1

As shown in FIG. 27, the battery 1000 includes a battery assembly 200, a heat exchange member 100, a box 300, and a foam member 400. Specifically, the box 300 includes a box body 301 and a bottom guard plate 302, where the battery assembly 200 is provided in the box body 301, and the heat exchange member 100 is provided between the box body 301 and the bottom guard plate 302.

Specifically, as shown in FIG. 4, the battery assembly 200 includes four battery units 201, where each battery unit 201 includes thirty battery cells 2011, the thirty battery cells 2011 are stacked along a thickness direction of battery cells 2011, and the four battery units 201 are arranged side by side along a length direction of battery cells 2011. The thickness direction of the battery cells 2011 is direction X, and the length direction of the battery cells 2011 is direction Y. In addition, two groups of battery cells 2011 located at two ends of the battery assembly 200 X are respectively a third group of battery cells 204 and a second group of battery cells 203, one group of battery cells 2011 adjacent to the third group of battery cells 204 is a fifth group of battery cells 206, and two groups of battery cells 2011 located at two ends of the battery assembly 200 in direction Y are both a first group of battery cells 202.

The heat exchange member 100 includes two heat exchange tubes, the two heat exchange tubes define a first heat exchange flow channel 10 inside, the two first heat exchange flow channels 10 are spaced apart along direction Y and symmetrically arranged along direction X of the battery assembly 200, and each first heat exchange flow channel 10 includes: three first heat exchange portions 111, one second heat exchange portion 121, one third heat exchange portion 122, one fourth heat exchange portion 125, one third heat exchange section 13, one first inlet/outlet section 15, and one second inlet/outlet section 17. The fourth heat exchange portion 125, the second heat exchange portion 121, and the third heat exchange portion 122 are sequentially connected to form a U-shaped structure, and three first heat exchange portions 111 are arranged in a bent manner in the U-shaped structure.

Specifically, the second heat exchange portion 121 and the first heat exchange portion 111 both extend linearly along direction X and are evenly spaced apart along direction Y, and the second heat exchange portion 121 is disposed on one side of the first heat exchange portion 111 close to an edge position of the battery 1000 in direction Y; the third heat exchange portion 122, the fourth heat exchange portion 125, and the third heat exchange section 13 all extend linearly along direction Y, the third heat exchange portion 122 is disposed on one side of three first heat exchange portions 111 close to a coordinate origin in direction X and is connected to one end of the second heat exchange portion 121 close to a coordinate origin in direction X and one end of the first heat exchange portion 111 farthest from the second heat exchange portion 121 close to the coordinate origin in direction X, the fourth heat exchange portion 125 is disposed on one side of three first heat exchange portions 111 away from the coordinate origin in direction X and is connected to one end of the second heat exchange portion 121 away from the coordinate origin in direction X, and the third heat exchange section 13 is disposed on one side of a plurality of first heat exchange portions 111 away from the coordinate origin in direction X and one end of the third heat exchange section 13 is connected to one end of the first heat exchange portion 111 closest to the second heat exchange portion 121 away from the coordinate origin in direction X.

The first inlet/outlet section 15 and the second inlet/outlet section 17 are disposed outside the battery assembly 200, both the first inlet/outlet section 15 and the second inlet/outlet section 17 extend along direction X and are arranged side by side in direction Y, the first inlet/outlet section 15 is connected to the third heat exchange section 13, and the second inlet/outlet section 17 is connected to the fourth heat exchange portion 125.

Further, the second heat exchange portion 121 and the first heat exchange portion 111 closest to the second heat exchange portion 121 perform heat exchange with the first group of battery cells 202, the third heat exchange portion 122 performs heat exchange with the second group of battery cells 203, the third heat exchange section 13 performs heat exchange with the fifth group of battery cells 206, and the fourth heat exchange portion 125 performs heat exchange with the third group of battery cells 204.

Further, as shown in FIG. 4, taking the first heat exchange flow channel 10 disposed on one side away from the coordinate origin in direction Y as an example, three first heat exchange portions 111 are respectively denoted as a first heat exchange portion 111a, a first heat exchange portion 111b, and a first heat exchange portion 111c, one end of the first inlet/outlet section 15 facing the battery assembly 200 is connected to one end of the third heat exchange section 13 close to the origin in direction Y through a fifth bending portion 16, and the fifth bending portion 16 is a quarter-arc bend; the second heat exchange portion 121, the first heat exchange portion 111a, the first heat exchange portion 111b, and the first heat exchange portion 111c extend linearly along direction X and are sequentially arranged from one side away from the coordinate origin to one side close to the coordinate origin in direction Y; the other end of the third heat exchange section 13 is connected to one end of the first heat exchange portion 111a away from the origin in direction X through a fourth bending portion 14, and the fourth bending portion 14 is a quarter-arc bend; the other end of the first heat exchange portion 111a is connected to one end of the first heat exchange portion 111b away from the origin in direction X through a first bending portion 112, and the first bending portion 112 is a semicircular arc bend; and the other end of the first heat exchange portion 111b is connected to one end of the first heat exchange portion 111c away from the origin in direction X through a first bending portion 112, and the first bending portion 112 is a semicircular arc bend.

The other end of the first heat exchange portion 111c is connected to one end of the third heat exchange portion 122 close to the origin in direction Y through a third bending portion 124, and the third bending portion 124 is a quarter-arc bend; the other end of the third heat exchange portion 122 is connected to one end of the second heat exchange portion 121 close to the origin in direction X through a second bending portion 123, and the second bending portion 123 is a quarter-arc bend; the other end of the second heat exchange portion 121 is connected to one end of the fourth heat exchange portion 125 away from the origin in direction Y through a sixth bending portion 126, and the sixth bending portion 126 is a quarter-arc bend; and the fourth heat exchange portion 125 is connected to one end of the second inlet/outlet section 17 facing the battery assembly 200 through a seventh bending portion 18, and the seventh bending portion 18 is a quarter-arc bend.

The first heat exchange portion 111a, the first heat exchange portion 111b, and the first heat exchange portion 111c are sequentially connected, and the second heat exchange portion 121 and the first heat exchange portion 111a perform heat exchange with the first group of battery cells 202, the first heat exchange portion 111b and the first heat exchange portion 111c perform heat exchange with a battery unit 201 adjacent to the first group of battery cells 202; the third heat exchange portion 122 extends linearly along direction Y and is connected between one end of the second heat exchange portion 121 close to the coordinate origin in direction X and the first heat exchange portion 111c for performing heat exchange with the second group of battery cells 203; the fourth heat exchange portion 125 is connected to one end of the second heat exchange portion 121 away from the coordinate origin in direction X and extends along the length direction of the battery cell 2011 to a position close to the first heat exchange portion 111c and performs heat exchange with the third group of battery cells 204; and the third heat exchange section 13 is connected to one end of the first heat exchange portion 111a away from the coordinate origin in direction X and extends along a length direction of the battery cell 2011 to a position close to the first heat exchange portion 111c and performs heat exchange with the fifth group of battery cells 206.

When heating and insulating the battery assembly 200, a flow direction of the first heat exchange flow channel 10 is sequentially the second inlet/outlet section 17, the fourth heat exchange portion 125, the second heat exchange portion 121, the third heat exchange portion 122, the first heat exchange portion 111c, the first heat exchange portion 111b, the first heat exchange portion 111a, and the third heat exchange section 13. When cooling and lowering the temperature of the battery assembly 200, a flow direction of the first heat exchange flow channel 10 is sequentially the third heat exchange section 13, the first heat exchange portion 111a, the first heat exchange portion 111b, the first heat exchange portion 111c, the third heat exchange portion 122, the second heat exchange portion 121, and the fourth heat exchange portion 125.

Further, the heat exchange tube is formed by bending a single heat exchange tube, where connection positions between the fourth heat exchange portion 125 and the second heat exchange portion 121, between the second heat exchange portion 121 and the third heat exchange portion 122, between the third heat exchange portion 122 and the first heat exchange portion 111, and between the first heat exchange portion 111 and the third heat exchange section 13 are all 90° arc bends, and connection positions between the plurality of first heat exchange portions 111 are all 180° arc bends.

As shown in FIGS. 16 and 18, the heat exchange member 100 further includes a current collector 20 and a mounting member 19. The current collecting member includes a tube body 21, a first flow channel interface 22, a second flow channel interface 23, and a partition structure 24. Specifically, the tube body 21 is a rectangular tube with openings at two ends, the first flow channel interface 22 and the second flow channel interface 23 are provided on the same side of the tube body 21, there are two first flow channel interfaces 22 and two second flow channel interfaces 23, and the two second flow channel interfaces 23 are provided on two sides of the first flow channel interfaces 22. The partition structure 24 is provided on an inner side of the tube body 21, the partition structure 24 partitions the tube body 21 into a first space 211 and a second space 212 that are independent of each other, the first space 211 communicates with the two first flow channel interfaces 22, and the second space 212 communicates with the two second flow channel interfaces 23. Along a length direction of the tube body 21, the second space 212 includes a first segment, a second segment, and a third segment that are sequentially connected, a cross-section of the second space 212 is "C"-shaped, the first segment and the third segment are respectively located on two sides of the first space 211, and the second segment is arranged side by side with the first space 211.

The mounting member 19 is configured to be sealingly connected to the box 300 of the battery 1000, a through hole communicating spaces on two sides of the mounting member 19 is formed on the mounting member 19, and a first tube portion and a second tube portion pass through the through hole and are sealingly connected to the through hole.

The foam member 400 includes a main body 401 and a plurality of ribs 402, where the plurality of ribs 402 are formed on one side surface of the main body 401 in a thickness direction facing the box 300, the plurality of ribs 402 cooperate with the main body 401 to define an accommodating groove, the heat exchange tube is disposed in the accommodating groove, the plurality of ribs 402 are filled in gaps formed by bending of the heat exchange tubes of the heat exchange member 100, and a thickness of the heat exchange tube is greater than a depth of the accommodating groove.

In the battery 1000 according to the embodiments of the present application, by providing the heat exchange member 100 of the foregoing first aspect embodiment, setting the heat exchange area between the heat exchange tube and the battery cell 2011 to be greater than or equal to 15% of the wall surface area of the battery cell 2011 can increase the heat exchange rate between the heat exchange tube and the battery cell 2011, enabling the battery cell 2011 to stably achieve good cooling and heat dissipation effects or heating and temperature rise effects, thereby making the temperature distribution within the battery assembly 200 more uniform, ensuring more stable and reliable operation of the battery 1000, and allowing the battery 1000 to maintain good battery performance.

### Example 2

As shown in FIG. 5, the structure of this example is substantially the same as the structure of Example 1, where the same components use the same reference signs, and the only difference is that: in Example 1, each first heat exchange flow channel 10 includes three first heat exchange portions 111, while in this example, each first heat exchange flow channel 10 includes five first heat exchange portions 111.

Specifically, among the five first heat exchange portions 111, two first heat exchange portions 111 facing away from the origin in direction Y perform heat exchange with the first group of battery cells 202 together with the second heat exchange portion 121, and another three first heat exchange portions 111 perform heat exchange with the battery unit 201 adjacent to the first group of battery cells 202 in the battery assembly 200, thereby allowing each battery unit 201 to perform heat exchange with three heat exchange portions.

More specifically, taking the first heat exchange flow channel 10 disposed on one side away from the coordinate origin in direction Y as an example, five first heat exchange portions 1111 are sequentially a first heat exchange portion 111a, a first heat exchange portion 111b, a first heat exchange portion 111c, a first heat exchange portion 111d, and a first heat exchange portion 111e from away from the origin to toward an origin in direction Y, and five first heat exchange portions are evenly spaced apart from one second heat exchange portion in direction Y. A connection form of the first inlet/outlet section 15, the third heat exchange section 13, the first heat exchange portion 111a, the first heat exchange portion 111b, and the first heat exchange portion 111c remains unchanged, and a connection form of the third heat exchange portion 122, the second heat exchange portion 121, the fourth heat exchange portion 125, and the second inlet/outlet section 17 also remains unchanged. In this example, one end of the first heat exchange portion 111c away from the origin in direction X is connected to the first heat exchange portion 111b, the other end of the first heat exchange portion 111c is connected to one end of the first heat exchange portion 111d close to the origin in direction X through a first bending portion 112, and the first bending portion 112 is a semicircular arc bend; the other end of the first heat exchange portion 111d is connected to one end of the first heat exchange portion 111e away from the origin in direction X through a first bending portion 112, and the first bending portion 112 is a semicircular arc bend; and the other end of the first heat exchange portion 111e is connected to the third heat exchange portion 122 through a third bending portion 124, and the third bending portion 124 is a quarter-arc bend.

Compared with Example 1, this example increases the heat exchange area between the heat exchange tube and the battery cell 2011, thereby increasing the ratio of the heat exchange area of the battery cell 2011 to the wall surface of the battery cell 2011, ensuring more uniform temperature distribution of the battery 1000.

Finally, it should be noted that the foregoing embodiments are merely intended for describing the technical solutions of the present application but not for limiting the present application. Although the present application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present application, which shall fall within the scope of the claims and specification of the present application. In particular, as long as there is no structural conflict, the various technical features mentioned in the embodiments may be combined in any manner. The present application is not limited to the specific embodiments disclosed in this specification but includes all technical solutions falling within the scope of the claims.

## Claims

1. A battery, comprising:
a battery assembly (200), wherein the battery assembly (200) comprises a battery unit (201), and the battery unit (201) comprises a plurality of battery cells (2011) stacked along a first direction; and
a heat exchange member (100) disposed on one side of the battery assembly (200) in a second direction, wherein the first direction intersects the second direction, the heat exchange member (100) comprises a heat exchange tube, the heat exchange tube has a heat exchange flow channel, and the heat exchange flow channel is bent and extends on one side surface of the battery assembly (200) in the second direction;
wherein, with a wall surface of the battery cell (2011) mated with the heat exchange tube as a projection surface, an area of an orthographic projection of the heat exchange tube on the wall surface is greater than or equal to 15% of an area of the wall surface.

2. The battery according to claim 1, wherein a thickness of the battery cell (2011) in the first direction is greater than or equal to 40 mm, and the area of the orthographic projection of the heat exchange tube on the wall surface is greater than or equal to 30% of the area of the wall surface.

3. The battery according to claim 1, wherein a thickness of the battery cell (2011) in the first direction is greater than or equal to 30 mm and less than 40 mm, and the area of the orthographic projection of the heat exchange tube on the wall surface is greater than or equal to 15% of the area of the wall surface and less than 30% of the area of the wall surface.

4. The battery according to claim 1, wherein a thickness of the battery cell (2011) in the first direction is greater than or equal to 50 mm, and the area of the orthographic projection of the heat exchange tube on the wall surface is greater than or equal to 45% of the area of the wall surface.

5. The battery according to claim 1, wherein a thickness of the battery cell (2011) in the first direction is greater than or equal to 40 mm and less than 50 mm, and the area of the orthographic projection of the heat exchange tube on the wall surface is greater than or equal to 30% of the area of the wall surface and less than 45% of the area of the wall surface.

6. The battery according to claim 1, wherein a thickness of the battery cell (2011) in the first direction is greater than or equal to 60 mm, and the area of the orthographic projection of the heat exchange tube on the wall surface is greater than or equal to 65% of the area of the wall surface.

7. The battery according to claim 1, wherein a thickness of the battery cell (2011) in the first direction is greater than or equal to 50 mm and less than 60 mm, and the area of the orthographic projection of the heat exchange tube on the wall surface is greater than or equal to 45% of the area of the wall surface and less than 65% of the area of the wall surface.

8. The battery according to claim 1, wherein a thickness of the battery cell (2011) in the first direction is greater than or equal to 80 mm, and the area of the orthographic projection of the heat exchange tube on the wall surface is greater than or equal to 75% of the area of the wall surface.

9. The battery according to claim 1, wherein a thickness of the battery cell (2011) in the first direction is greater than or equal to 60 mm and less than 80 mm, and the area of the orthographic projection of the heat exchange tube on the wall surface is greater than or equal to 65% of the area of the wall surface and less than 75% of the area of the wall surface.

10. The battery according to claim 1, wherein a thickness of the battery cell (2011) in the first direction is greater than 100 mm, and the area of the orthographic projection of the heat exchange tube on the wall surface is greater than or equal to 90% of the area of the wall surface.

11. The battery according to claim 1, wherein a thickness of the battery cell (2011) in the first direction is greater than or equal to 80 mm and less than or equal to 100 mm, and the area of the orthographic projection of the heat exchange tube on the wall surface is greater than or equal to 75% of the area of the wall surface and less than 90% of the area of the wall surface.

12. The battery according to any one of claims 1 to 11, wherein the heat exchange flow channel comprises a first heat exchange flow channel (10), the first heat exchange flow channel (10) comprises a first heat exchange section (11) and a second heat exchange section (12), the second heat exchange section (12) is bent to form a U-shaped region, and the first heat exchange section (11) is arranged in a bent manner in the U-shaped region, and is connected to the second heat exchange section (12) in a bent manner; and
battery cells (2011) of the battery assembly (200) located at an outermost periphery in a circumferential direction form peripheral battery cells, and at least a portion of the second heat exchange section (12) is in contact with the peripheral battery cells.

13. The battery according to claim 12, wherein the peripheral battery cells comprise a first group of battery cells (202), a second group of battery cells (203), and a third group of battery cells (204) that are adjacently arranged, wherein a plurality of battery cells (2011) comprised in the first group of battery cells (202) are stacked along the first direction, a plurality of battery cells (2011) comprised in the second group of battery cells (203) are stacked along a third direction, a plurality of battery cells (2011) comprised in the third group of battery cells (204) are stacked along a third direction, and the first direction, the second direction, and the third direction are arranged at included angles with each other;
the second heat exchange section (12) comprises a second heat exchange portion (121), a third heat exchange portion (122), and a fourth heat exchange portion (125) that are connected; and
the second heat exchange portion (121) extends to be in contact with the first group of battery cells (202) for heat exchange, and/or the third heat exchange portion (122) extends to be in contact with the second group of battery cells (203) for heat exchange, and/or the fourth heat exchange portion (125) extends to be in contact with the third group of battery cells (204) for heat exchange.

14. The battery according to claim 13, wherein the peripheral battery cells further comprise a fourth group of battery cells (205), a plurality of battery cells (2011) comprised in the fourth group of battery cells (205) are arranged along the first direction, the second heat exchange section (12) further comprises a fifth heat exchange portion (127), the fifth heat exchange portion (127) closes at least a portion of an opening of the U-shaped region formed by the second heat exchange portion (121), the third heat exchange portion (122), and the fourth heat exchange portion (125), and the fifth heat exchange portion (127) extends to be in contact with the fourth group of battery cells (205) for heat exchange.

15. The battery according to claim 13, wherein the first heat exchange section (11) comprises a plurality of first heat exchange portions (111), wherein the plurality of first heat exchange portions (111) are spaced apart and sequentially bent and connected;
at least one battery unit (201) located at two ends along the third direction is the first group of battery cells (202); and
the second heat exchange portion (121) and at least one first heat exchange portion (111) of the first heat exchange section (11) are jointly in contact with the first group of battery cells (202) for heat exchange.

16. The battery according to claim 15, wherein the plurality of first heat exchange portions (111) of the first heat exchange section (11) extend along the third direction and are sequentially connected in the first direction; or
the plurality of first heat exchange portions (111) of the first heat exchange section (11) extend along the first direction and are sequentially connected along the third direction.

17. The battery according to claim 15, wherein the plurality of first heat exchange portions (111) of the first heat exchange section (11) extend along the first direction and are sequentially connected along the third direction; and
a first end of the third heat exchange portion (122) is connected to the second heat exchange portion (121) at an included angle, a second end of the third heat exchange portion (122) is connected to one of the plurality of first heat exchange portions (111) that is farthest from the second heat exchange portion (121) along the third direction, and a second end of the third heat exchange portion (122) is connected to the first heat exchange section (11) at an included angle.

18. The battery according to claim 17, wherein the first heat exchange flow channel (10) further comprises a third heat exchange section (13), wherein the third heat exchange section (13) communicates with one end of the first heat exchange section (11) away from the second heat exchange section (12) and is connected to the first heat exchange section (11) at an included angle;
the third heat exchange section (13) is disposed on one side of the first heat exchange section (11) facing away from the third heat exchange portion (122) and is connected to one of the plurality of first heat exchange portions (111) that is closest to the second heat exchange portion (121) along the third direction; and
the battery assembly (200) further has a fifth group of battery cells (206), a plurality of battery cells (2011) of the fifth group of battery cells (206) are stacked along the third direction, and the fifth group of battery cells (206) and the third group of battery cells (204) are adjacently arranged;
wherein both the third heat exchange section (13) and the fourth heat exchange portion (125) are in contact with the third group of battery cells (204) for heat exchange; or the third heat exchange section (13) is in contact with the fifth group of battery cells (206) for heat exchange, and the fourth heat exchange portion (125) is in contact with the third group of battery cells (204) for heat exchange; or the third heat exchange section (13) is in contact with the third group of battery cells (204) for heat exchange, and the fourth heat exchange portion (125) is disposed on an outer side of the battery assembly (200) in the first direction.

19. The battery according to claim 18, further comprising:
a first inlet/outlet section (15), wherein one end of the first inlet/outlet section (15) is connected to the third heat exchange section (13) at an included angle, and the other end of the first inlet/outlet section (15) is formed as a first inlet/outlet of the first heat exchange flow channel (10); and
a second inlet/outlet section (17), wherein one end of the second inlet/outlet section (17) is connected to the fourth heat exchange portion (125) at an included angle, and the other end of the second inlet/outlet section (17) is formed as a second inlet/outlet of the first heat exchange flow channel (10); wherein
one of the first inlet/outlet and the second inlet/outlet is an inlet of the first heat exchange flow channel (10) and the other is an outlet.

20. The battery according to any one of claims 13 to 19, wherein the first heat exchange section (11) comprises a plurality of first heat exchange portions (111), wherein the plurality of first heat exchange portions (111) are spaced apart and sequentially bent and connected;
the plurality of first heat exchange portions (111) and the second heat exchange portion (121) both extend along the first direction and are spaced apart along the third direction; and
one battery unit (201) is in contact with one second heat exchange portion (121) and at least one first heat exchange portion (111) for heat exchange; or one battery unit (201) is in contact with at least two first heat exchange portions (111) for heat exchange.

21. The battery according to claim 20, wherein the first heat exchange flow channel (10) is provided in two, and each first heat exchange flow channel (10) comprises: five first heat exchange portions (111), one second heat exchange portion (121), one third heat exchange portion (122), one fourth heat exchange portion (125), and one third heat exchange section (13);
the battery unit (201) is provided in four, the battery unit (201) located at an end along the third direction is in contact with two first heat exchange portions (111) and one second heat exchange portion (121) for heat exchange, and any remaining battery unit (201) is in contact with three first heat exchange portions (111) for heat exchange;
the battery assembly (200) further has a fifth group of battery cells (206), a plurality of battery cells (2011) of the fifth group of battery cells (206) are stacked along the third direction, and the fifth group of battery cells (206) and the third group of battery cells (204) are adjacently arranged; and
the third heat exchange portion (122) connects the second heat exchange portion (121) and one first heat exchange portion (111) farthest from the second heat exchange portion (121) and is in contact with the second group of battery cells (203) for heat exchange, the third heat exchange section (13) is connected to one first heat exchange portion (111) closest to the second heat exchange portion (121) and is in contact with the fifth group of battery cells (206) for heat exchange, and the fourth heat exchange portion (125) is in contact with the third group of battery cells (204) for heat exchange.

22. The battery according to claim 20, wherein the first heat exchange flow channel (10) is provided in two, and each first heat exchange flow channel (10) comprises: five first heat exchange portions (111), one second heat exchange portion (121), one third heat exchange portion (122), one fourth heat exchange portion (125), and one third heat exchange section (13);
the battery unit (201) is provided in six, the battery unit (201) located at an end along the third direction is in contact with one first heat exchange portion (111) and one second heat exchange portion (121) for heat exchange, and any remaining battery unit (201) is in contact with two first heat exchange portions (111) for heat exchange;
the battery assembly (200) further has a fifth group of battery cells (206), a plurality of battery cells (2011) of the fifth group of battery cells (206) are stacked along the third direction, and the fifth group of battery cells (206) and the third group of battery cells (204) are adjacently arranged; and
the third heat exchange portion (122) connects the second heat exchange portion (121) and one first heat exchange portion (111) farthest from the second heat exchange portion (121) and is in contact with the second group of battery cells (203) for heat exchange, the third heat exchange section (13) is connected to one first heat exchange portion (111) closest to the second heat exchange portion (121) and is in contact with the fifth group of battery cells (206) for heat exchange, and the fourth heat exchange portion (125) is in contact with the third group of battery cells (204) for heat exchange.

23. The battery according to any one of claims 20 to 22, wherein the first heat exchange flow channel (10) is provided in two, and each first heat exchange flow channel (10) comprises: three first heat exchange portions (111), one second heat exchange portion (121), one third heat exchange portion (122), one fourth heat exchange portion (125), and one third heat exchange section (13);
the battery unit (201) is provided in four, the battery unit (201) located at an end along the third direction is in contact with one first heat exchange portion (111) and one second heat exchange portion (121) for heat exchange, and any remaining battery unit (201) is in contact with two first heat exchange portions (111) for heat exchange;
the battery assembly (200) further has a fifth group of battery cells (206), a plurality of battery cells (2011) of the fifth group of battery cells (206) are stacked along the third direction, and the fifth group of battery cells (206) and the third group of battery cells (204) are adjacently arranged; and
the third heat exchange portion (122) connects the second heat exchange portion (121) and one first heat exchange portion (111) farthest from the second heat exchange portion (121) and is in contact with the second group of battery cells (203) for heat exchange, the third heat exchange section (13) is connected to one first heat exchange portion (111) closest to the second heat exchange portion (121) and is in contact with the fifth group of battery cells (206) for heat exchange, and the fourth heat exchange portion (125) is in contact with the third group of battery cells (204) for heat exchange.

24. The battery according to any one of claims 21 to 23, wherein each battery unit (200) has 30 battery cells (2011).

25. The battery according to any one of claims 13 to 19, wherein the first heat exchange section (11) is connected downstream of the second heat exchange section (12) along a fluid flow direction; or
the heat exchange tube is configured such that: when heating the battery assembly (200) of the battery, the first heat exchange section (11) is connected downstream of the second heat exchange section (12) along a fluid flow direction; when cooling the battery assembly (200) of the battery, the first heat exchange section (11) is connected upstream of the second heat exchange section (12) along a fluid flow direction.

26. The battery according to any one of claims 13 to 19, wherein the heat exchange tube is provided in one or plurality, an inner side of each heat exchange tube defines a heat exchange flow channel, and when the heat exchange tube is provided in plurality, the plurality of heat exchange tubes are spaced apart along a third direction or are arranged around each other, and a heat exchange flow channel of at least one heat exchange tube is formed as the first heat exchange flow channel (10).

27. The battery according to claim 26, wherein the heat exchange tube is provided in plurality, the heat exchange flow channel of at least one heat exchange tube is formed as a second heat exchange flow channel (30), and a structure of any second heat exchange flow channel (30) is the same as or different from a structure of the first heat exchange flow channel (10).

28. The battery according to claim 26, wherein the heat exchange tube is provided in plurality, one heat exchange tube defines the first heat exchange flow channel (10), the heat exchange flow channel of at least one heat exchange tube is formed as a third heat exchange flow channel (40), the third heat exchange flow channel (40) is arranged in a bent manner in the U-shaped region of the first heat exchange flow channel (10), and the first heat exchange flow channel (10) and the third heat exchange flow channel (40) are bent in the same plane, and bending structures of the first heat exchange flow channel (10) and the third heat exchange flow channel (40) are the same or different.

29. The battery according to claim 28, wherein the third heat exchange flow channel (40) comprises a U-shaped region having the same structure as the first heat exchange flow channel (10), and at least a portion of the first heat exchange section (11) of the first heat exchange flow channel (10) is disposed in the U-shaped region of the third heat exchange flow channel (40).

30. The battery according to any one of claims 1 to 11, wherein the heat exchange tube is formed by bending a single tube, optionally, the heat exchange tube is bent arcuately at a bending position.

31. The battery according to any one of claims 1 to 11, wherein the heat exchange tube is an aluminum tube.

32. The battery according to any one of claims 1 to 11, wherein a wall thickness of the heat exchange tube is 0.2 mm-3 mm; optionally, a wall thickness of the heat exchange tube is 0.5 mm-1.2 mm.

33. The battery according to any one of claims 1 to 11, wherein a width of the heat exchange flow channel is 3 mm-200 mm; optionally, a width of the heat exchange flow channel is 5 mm-80 mm; further optionally, a height of the heat exchange flow channel in the second direction is 1 mm-20 mm; still further optionally, a height of the heat exchange flow channel in the second direction is 4 mm-6 mm.

34. The battery according to any one of claims 1 to 11, wherein heat exchange fluid in the heat exchange flow channel is a mixture of water and ethylene glycol; further optionally, the heat exchange fluid is a mixture of 50% water and 50% ethylene glycol; and/or
a thermal conductivity of the heat exchange fluid in the heat exchange flow channel is greater than or equal to 0.3 W/(m·K); further optionally, the thermal conductivity of the heat exchange fluid in the heat exchange flow channel is 0.328 W/(m·K)-0.417 W/(m·K).

35. The battery according to any one of claims 1 to 11, wherein a housing of the battery cell (2011) is an aluminum housing.

36. The battery according to any one of claims 1 to 11, wherein a housing of the battery cell (2011) is a 3-series aluminum alloy part or a 5-series aluminum alloy part.

37. The battery according to any one of claims 1 to 11, wherein a length of the battery cell (2011) is 154 mm-234 mm; and/or a width of the battery cell (2011) is 63 mm-103 mm; and/or a wall thickness of a housing of the battery cell (2011) is 0.4 mm-1 mm.

38. The battery according to any one of claims 1 to 11, wherein the battery further comprises a box (300), wherein the box (300) comprises a box body (301), the box body (301) is an integrally stamped part and comprises a bottom wall and a surrounding wall, and the battery assembly (200) is disposed in the box body (301).

39. The battery according to claim 38, wherein a thermal management system of the battery comprises a temperature regulation member (500), wherein the temperature regulation member (500) comprises at least one of a first temperature regulation member (501) and a second temperature regulation member (502);
the first temperature regulation member (501) is disposed outside the box body (301) and is in contact with an outer wall of the box body (301);
the second temperature regulation member (502) is disposed in the box (300) and located between any side of an outer peripheral surface of the battery cell (2011) and the box (300); and
at least one of the first temperature regulation member (501) and the second temperature regulation member (502) forms the heat exchange member (100).

40. The battery according to claim 39, wherein a thermal management system of the battery further comprises a third temperature regulation member (503), wherein the third temperature regulation member (503) is disposed in the box (300) and located between two adjacent battery cells (2011), and a structure of the third temperature regulation member (503) is the same as or different from a structure of the heat exchange member (100).

41. An electric apparatus, comprising the battery according to any one of claims 1 to 40.
